# EUROPEAN PATENT APPLICATION

(11) **EP 4 769 196 A1**
(43) Date of publication of application: **01.07.2026**
(21) Application number: 24856178.9
(22) Date of filing: 16.07.2024
(51) Int. Cl.: G06F 21/64

(54) **IMAGE PROCESSING DEVICE AND METHOD**

(30) Priority: 24.08.2023 US 202363578393 P
(71) Applicant: Sony Group Corporation, Tokyo 108-0075 (JP)
(72) Inventor: HIRATSUKA, Yosuke, Tokyo 108-0075 (JP); MATSUDA, Tsubasa, Tokyo 108-0075 (JP)
(74) Representative: MFG Patentanwälte Meyer-Wildhagen Meggle-Freund Gerhard PartG mbB
(86) International application number: PCT/JP2024/025484
(87) International publication number: WO 2025/041484

(57) **Abstract**

The present disclosure relates to an image processing apparatus and method capable of guaranteeing authenticity of an image subjected to allowable editing.

What is executed is verifying a signature of a pre-edit image before editing is performed on an image, identifying content of the editing on the basis of the pre-edit image and a post-edit image obtained by editing the pre-edit image, and determining whether or not to guarantee authenticity of the post-edit image on the basis of a verification result of the signature and the identified content of the editing. Furthermore, a display image indicating a determination result as to whether or not to guarantee the authenticity of the post-edit image is generated and displayed using authenticity determination result display information indicating the determination result. The present disclosure can be applied to, for example, an image processing apparatus, an information processing method, or the like.

## Description

### TECHNICAL FIELD

The present disclosure relates to an image processing apparatus and method, and more particularly, to an image processing apparatus and method capable of guaranteeing authenticity of an image subjected to allowable editing.

### BACKGROUND ART

Conventionally, there has been a method of enabling tampering detection by adding an electronic signature to an image at a time of capture (see, for example, Patent Document 1). In addition, there is a method of leaving a history with an electronic signature at a time of image generation or retouch so that the history can be traced (see, for example, Non-Patent Document 1.). In addition, there is a method in which 3D information and a signature are attached to an image, and tampering with the image or falsification in which a falsified image is projected on a panel and photographed is detected (see, for example, Patent Document 2).

That is, in these tampering detection methods (authenticity determination methods), "authenticity of an image" is "the target image is the same as its original image (that is, the original image has not been tampered with)" or "the target image is not a captured image obtained by unauthorized imaging (that is, so-called trick photography or the like has not been performed)". In other words, in the above-described tampering detection methods (authenticity determination methods), in every case where it is detected that some editing has been performed on an original image, it is determined that unauthorized tampering has been performed.

However, image editing is a common practice, and not all of the editing is unauthorized tampering. For example, in news reports and the like, it is generally possible that non-malicious editing is performed on a captured image captured on site in order to improve appearance.

### CITATION LIST

### PATENT DOCUMENT

Patent Document 1: WO 2022/137798 A
Patent Document 2: WO 2023/248807 A

### NON-PATENT DOCUMENT

Non-Patent Document 1: https://c2pa.org/

### SUMMARY OF THE INVENTION

### PROBLEMS TO BE SOLVED BY THE INVENTION

With the above-described tampering detection methods (authenticity determination methods), however, it is difficult to determine whether or not detected editing is malicious editing. Therefore, with the above-described tampering detection methods, even if non-malicious editing is performed, there is a possibility that it is determined as unauthorized tampering. Therefore, it is difficult to guarantee authenticity of an image subjected to allowable editing.

The present disclosure has been made in view of such circumstances, and aims to make it possible to guarantee authenticity of an image subjected to allowable editing.

### SOLUTIONS TO PROBLEMS

An image processing apparatus according to an aspect of the present technology includes a signature verification unit that verifies a signature of a pre-edit image before editing is performed on an image, an editing identification unit that identifies content of the editing on the basis of the pre-edit image and a post-edit image obtained by editing the pre-edit image, and an authenticity determination unit that determines whether or not to guarantee authenticity of the post-edit image on the basis of a verification result of the signature and the identified content of the editing.

An image processing method according to an aspect of the present technology includes verifying a signature of a pre-edit image before editing is performed on an image, identifying content of the editing on the basis of the pre-edit image and a post-edit image obtained by editing the pre-edit image, and determining whether or not to guarantee authenticity of the post-edit image on the basis of a verification result of the signature and the identified content of the editing.

In the image processing apparatus and method according to the aspects of the present technology, a signature of a pre-edit image before an image is edited is verified, content of the editing is identified on the basis of the pre-edit image and a post-edit image obtained by editing the pre-edit image, and whether or not to guarantee authenticity of the post-edit image is determined on the basis of a verification result of the signature and the identified content of the editing.

### BRIEF DESCRIPTION OF DRAWINGS

Fig. 1 is a diagram illustrating a main configuration example of an authenticity determination system.
Fig. 2 is a block diagram illustrating a main configuration example of an image editing device.
Fig. 3 is a diagram illustrating an example of a state of image transmission.
Fig. 4 is a diagram illustrating an example of a state of outputting an authenticity determination result.
Fig. 5 is a flowchart illustrating an example of a flow of processing executed in the authenticity determination system.
Fig. 6 is a diagram illustrating an example of a state of image transmission.
Fig. 7 is a flowchart illustrating an example of a flow of processing executed in the authenticity determination system.
Fig. 8 is a diagram illustrating an example of a state of image transmission.
Fig. 9 is a flowchart illustrating an example of a flow of processing executed in the authenticity determination system.
Fig. 10 is a block diagram illustrating a main configuration example of an authenticity determination server.
Fig. 11 is a flowchart illustrating an example of a flow of authenticity determination processing.
Fig. 12 is a flowchart illustrating an example of a flow of editing identification processing.
Fig. 13 is a diagram illustrating an example of a display image.
Fig. 14 is a flowchart illustrating an example of the flow of the authenticity determination processing.
Fig. 15 is a flowchart illustrating an example of the flow of the editing identification processing.
Fig. 16 is a diagram illustrating an example of the display image.
Fig. 17 is a flowchart illustrating an example of the flow of the authenticity determination processing.
Fig. 18 is a flowchart illustrating an example of the flow of the editing identification processing.
Fig. 19 is a diagram illustrating an example of the display image.
Fig. 20 is a flowchart illustrating an example of the flow of the authenticity determination processing.
Fig. 21 is a flowchart illustrating an example of the flow of the editing identification processing.
Fig. 22 is a diagram illustrating an example of the display image.
Fig. 23 is a flowchart illustrating an example of the flow of the authenticity determination processing.
Fig. 24 is a flowchart illustrating an example of the flow of the editing identification processing.
Fig. 25 is a diagram illustrating an example of the display image.
Fig. 26 is a flowchart illustrating an example of the flow of the authenticity determination processing.
Fig. 27 is a flowchart illustrating an example of the flow of the editing identification processing.
Fig. 28 is a diagram illustrating an example of the display image.
Fig. 29 is a flowchart illustrating an example of the flow of the authenticity determination processing.
Fig. 30 is a flowchart illustrating an example of the flow of the editing identification processing.
Fig. 31 is a diagram illustrating an example of the display image.
Fig. 32 is a flowchart illustrating an example of the flow of the authenticity determination processing.
Fig. 33 is a flowchart illustrating an example of the flow of the editing identification processing.
Fig. 34 is a diagram illustrating an example of the display image.
Fig. 35 is a flowchart illustrating an example of the flow of the authenticity determination processing.
Fig. 36 is a flowchart illustrating an example of the flow of the editing identification processing.
Fig. 37 is a diagram illustrating an example of the display image.
Fig. 38 is a block diagram illustrating a main configuration example of the image editing device.
Fig. 39 is a diagram illustrating an example of a GUI.
Fig. 40 is a flowchart illustrating an example of a flow of processing executed in an image processing system.
Fig. 41 is a diagram illustrating an example of a verification Web page.
Fig. 42 is a block diagram illustrating a main configuration example of the image editing device.
Fig. 43 is a diagram illustrating an example of the GUI.
Fig. 44 is a flowchart illustrating an example of the flow of the processing executed in the image processing system.
Fig. 45 is a diagram illustrating an example of the verification Web page.
Fig. 46 is a block diagram illustrating a main configuration example of a computer.

### MODE FOR CARRYING OUT THE INVENTION

Modes for carrying out the present disclosure (hereinafter referred to as embodiments) will be described hereinafter. Note that the description will be given in the following order.
1. Documents etc. Supporting Technical Content and Technical Terms
2. Detection of Tampering
3. First Embodiment (Identification of Editing Content and Authenticity Determination Based on Editing Content)
4. Second Embodiment (Authenticity Determination in Partial Region)
5. Third Embodiment (Authenticity Determination in Image Composition Region)
6. Fourth Embodiment (Authenticity Determination in 2D Region)
7. Fifth Embodiment (Verification of Editing History)
8. Sixth Embodiment (Authenticity Determination 1 in Face Region)
9. Seventh Embodiment (Authenticity Determination 2 in Face Region)
10. Eighth Embodiment (Authenticity Determination in Object Identification Information Region)
11. Ninth Embodiment (Authenticity Determination in Person Identification Information Region)
12. Tenth Embodiment (Request to Generate Verification Web Page)
13. Eleventh Embodiment (Authenticity Guarantee by Others)
14. Twelfth Embodiment (Combinations)
15. Supplementary Note

### <1. Documents etc. Supporting Technical Content and Technical Terms>

The scope disclosed in the present technology includes not only contents described in the embodiments but also contents described in the following patent documents and non-patent document, which are publicly known at a time of filing, contents of other documents referred to in the following patent documents and non-patent document, and the like.

Patent Document 1: (described above)
Patent Document 2: (described above)
Non-Patent Document 1: (described above)

That is, the contents described in the above-described patent documents and non-patent document, the contents of other documents referred to in the above-described patent documents and non-patent document, and the like are also grounds for determining support requirements.

### <2. Detection of Tampering>

### <Detection of Tampering Using Electronic Signature>

In recent years, with the improvement of science and technology, it has become possible to easily generate still images and moving images that are difficult to distinguish from real captured images using Artificial Intelligence (AI). Accordingly, various social problems such as so-called fake news have occurred. As countermeasures, methods of detecting tampering with a captured image (methods of determining authenticity) have been considered. For example, as described in Patent Document 1, there is a method of enabling tampering detection by adding an electronic signature to an image at a time of capture. In addition, as disclosed in Non-Patent Document 1, there is a method of leaving a history with an electronic signature at a time of image generation or retouch so that the history can be traced. In addition, as described in Patent Document 2, there is a method in which 3D information and a signature are attached to an image, and tampering with the image or falsification in which a falsified image is projected on a panel and photographed is detected.

That is, in these tampering detection methods (authenticity determination methods), "authenticity of an image" is "the target image is the same as its original image (that is, the original image has not been tampered with)" or "the target image is not a captured image obtained by unauthorized imaging (that is, so-called trick photography or the like has not been performed)". In other words, in the above-described tampering detection methods (authenticity determination methods), in every case where it is detected that some editing has been performed on an original image, it is determined that unauthorized tampering has been performed.

However, image editing is a common practice, and not all of the editing is unauthorized tampering. For example, in news reports and the like, it is generally possible that non-malicious editing is performed on a captured image captured on site in order to improve appearance.

With the above-described tampering detection methods (authenticity determination methods), however, it is difficult to determine whether or not detected editing is malicious editing. Therefore, with the above-described tampering detection methods, even if non-malicious editing is performed, there is a possibility that it is determined as unauthorized tampering. Therefore, it is difficult to guarantee authenticity of an image subjected to allowable editing.

### <3. First Embodiment>

### <Identification of Editing Content and Authenticity Determination Based on Editing Content>

Therefore, content of editing performed on a pre-edit image is identified on the basis of the pre-edit image and a post-edit image, and it is determined whether or not to guarantee authenticity of the post-edit image on the basis of the content of the editing. That is, it is identified whether or not the editing is allowable editing.

Note that, in the present specification, "authenticity" means that a target is legitimate, that is, a target is genuine. For example, "authenticity of an original image" means that the original image is legitimate. Furthermore, "authenticity of a post-edit image" means that the edited post-edit image is identical to a legitimate original image or is an image obtained by performing allowable editing on the legitimate original image.

Furthermore, in the present specification, "editing (edit processing)" refers to overall processing performed on image data, and includes not only processing of changing content of an image (processing involving visual changes) but also processing of changing data. The "processing of changing content of an image" includes, for example, not only so-called image processing such as image trimming and composition, image enlargement and reduction, image rotation and deformation, lens aberration correction, color and brightness correction, and white balance adjustment, but also image replacement (change of image data). Furthermore, the "processing of changing data" includes, for example, change of a compression rate, format conversion, tampering with metadata, and the like. That is, the "editing" includes any processing that makes it impossible to regard image data after the editing as identical to image data before the editing. As an example of the edit processing, "processing of changing content of an image" will be described hereinafter. The present technology, however, can also be applied to a case of "processing of changing data" as in the case of "processing of changing content of an image" described hereinafter.

Note that the "editing" will also be referred to as "retouch (or image retouch)", "tampering", or the like. In addition, an image before being edited will also be referred to as a "pre-edit image". In addition, an image after being edited will also be referred to as a "post-edit image".

Furthermore, in the present specification, "allowable editing" refers to editing that is not detected as unauthorized tampering in image tampering detection (image authenticity determination). "Unallowable editing" refers to editing detected as unauthorized tampering in image tampering detection (image authenticity determination). That is, in the case of the tampering detection method (authenticity determination method) of the present technology, authenticity of a post-edit image is guaranteed after only "allowable editing" is performed. On the other hand, in a case where "unallowable editing" is performed on a pre-edit image, it is determined that authenticity of a post-edit image is not guaranteed. "Allowable editing" and "unallowable editing" may be any editing.

Furthermore, in the present specification, "non-malicious editing" refers to editing that is not to be detected as unauthorized tampering in image tampering detection (image authenticity determination). For example, editing that does not significantly change an event (meaning of an image) shown by an image, such as editing for improving appearance, may be included in "non-malicious editing". For example, trimming for a predetermined aspect ratio, color correction, lens aberration correction, and the like may be included in "non-malicious editing". On the other hand, "malicious editing" refers to editing to be detected as unauthorized tampering in image tampering detection (image authenticity determination). For example, editing that changes an event (meaning of an image) shown by an image, such as a so-called false image, may be included in "malicious editing". For example, editing for replacing, erasing, or adding an object or a person included in an image may be included in the "malicious editing".

Note that a criterion for identification (identification as one of the two) of whether editing is "non-malicious editing" or "malicious editing" may be any criterion. For example, editing may be identified as one of the two on the basis of a type of editing, a scale of editing, a target of editing, the number of times of editing, a degree of influence on a meaning of an image, and the like. For example, cut or paste may be determined to be "malicious editing", and color correction may be determined to be "non-malicious editing". In addition, editing for erasing a person who appears large in a captured image in order to express a false event may be determined as "malicious editing", and editing for erasing a person who appears small in a captured image in order to improve designability may be determined as "non-malicious editing". The criterion for identification (identification as one of the two) of whether editing is "non-malicious editing" or "malicious editing" may be predetermined or may vary depending on the situation. For example, even in the case of the same editing, editing by a photographer may be determined as "non-malicious editing", and editing by another user may be determined as "malicious editing". Furthermore, for example, an identification result may change according to an arbitrary condition such as the time when editing is performed or a device. Furthermore, this criterion may be subjective, or may be determined by a user or a system that determines authenticity.

Furthermore, in the present specification, "malicious editing" will also be referred to as "malicious tampering", "unauthorized tampering", and the like. In addition, "non-malicious editing" will also be referred to as "non-malicious tampering" and the like.

As described above, the "allowable editing" and "unallowable editing" may be any editing, but in the following description, "non-malicious editing" will be described as "allowable editing", and "malicious editing" will be described as "unallowable editing" as an example.

### <Authenticity Determination System>

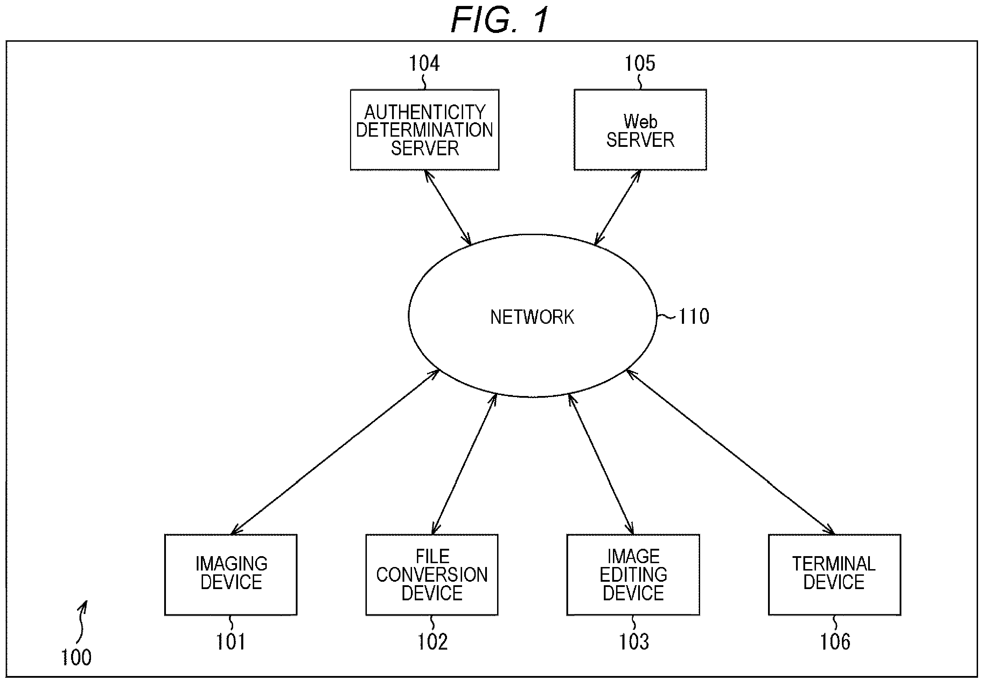

Fig. 1 is a diagram illustrating a main configuration example of an authenticity determination system, which is an embodiment of an image processing system to which the present technology is applied. An authenticity determination system 100 illustrated in Fig. 1 executes processing regarding determination of authenticity of an image. As illustrated in Fig. 1, the authenticity determination system 100 includes an imaging device 101, a file conversion device 102, an image editing device 103, an authenticity determination server 104, a Web server 105, a terminal device 106, and a network 110. Each of the devices from the imaging device 101 to the terminal device 106 is communicably connected to the network 110.

The network 110 is a communication network serving as a communication medium between the devices. The network 110 may be a communication network of wired communication or a communication network of wireless communication, or may include both of these. For example, the network 110 may be a wired Local Area Network (LAN), a wireless LAN, a public telephone line network, a wide area communication network for a wireless mobile body such as a so-called 4G line or 5G line, the Internet, or the like, or a combination thereof. Furthermore, the network 110 may be a single communication network or a plurality of communication networks. Furthermore, for example, a part or all of the network 110 may be configured by a communication cable of a predetermined standard, for example, a Universal Serial Bus (USB) (registered trademark) cable, a High-Definition Multimedia Interface (HDMI) (registered trademark) cable, or the like.

That is, each of the devices from the imaging device 101 to the terminal device 106 has a communication function and is communicably connected to each other via the network 110. Note that each device may have a wired communication function, a wireless communication function, or both of these.

The imaging device 101 executes processing related to imaging of a subject, that is, generation of a captured image (image file). For example, the imaging device 101 may capture an image of a subject to generate a captured image. The imaging device 101 may generate an image file storing the captured image and the like. The imaging device 101 may generate a tamper detection signature and store the tamper detection signature in the image file. The imaging device 101 may supply the image file to another device via the network 110 or a storage medium (not illustrated).

The file conversion device 102 executes processing related to format conversion of an image file. For example, the file conversion device 102 may acquire an image file from another device via the network 110 or a storage medium (not illustrated). The file conversion device 102 may convert a format of the acquired image file from a first format to a second format different from the first format. The file conversion device 102 may supply the converted image file to another device via the network 110 or a storage medium (not illustrated).

The image editing device 103 executes processing related to image editing. For example, the image editing device 103 may acquire an image file from another device via the network 110 or a storage medium (not illustrated). The image editing device 103 may perform edit processing on image data stored in the acquired image file. The image editing device 103 may supply the image file storing a post-edit image to another device via the network 110 or a storage medium (not illustrated). Furthermore, the image editing device 103 may acquire authenticity determination result display information supplied from another device via the network 110 or a storage medium (not illustrated). The authenticity determination result display information is information for displaying an authenticity determination result, and is information for generating a determination result display image, which is a display image indicating the determination result. For example, the image editing device 103 may acquire the authenticity determination result display information supplied from the authenticity determination server 104. In addition, the image editing device 103 may access a Uniform Resource Locator (URL) provided by the Web server 105 and acquire a verification Web page disclosed at the URL as the authenticity determination result display information. The verification Web page is a Web page including the authenticity determination result display information. For example, the image editing device 103 may generate a determination result display image on the basis of the authenticity determination result display information acquired from the authenticity determination server 104, and display the determination result display image on a display device or the like. In addition, the image editing device 103 may generate a determination result display image on the basis of the verification Web page acquired from the Web server 105 and display the determination result display image on the display device or the like.

The authenticity determination server 104 executes processing related to authenticity determination. For example, the authenticity determination server 104 may acquire an image file from another device via the network 110 or a storage medium (not illustrated). The authenticity determination server 104 may determine authenticity of a post-edit image stored in the acquired image file and generate the authenticity determination result display information. The authenticity determination server 104 may supply the authenticity determination result display information to another device via the network 110 or a storage medium (not illustrated). For example, the authenticity determination server 104 may generate a verification Web page as the authenticity determination result display information and supply the verification Web page to the Web server 105.

The Web server 105 executes processing related to the verification Web page, which is an example of the authenticity determination result display information. For example, the Web server 105 may acquire a verification Web page supplied from another device (for example, the authenticity determination server 104) as the authenticity determination result display information via the network 110 or a storage medium (not illustrated). The Web server 105 may publish the verification Web page at a predetermined Uniform Resource Locator (URL) so that the verification Web page can be referred to by other devices.

The terminal device 106 executes processing related to browsing of the verification Web page. For example, the terminal device 106 may access a URL provided by the Web server 105 and acquire a verification Web page published at the URL as the authenticity determination result display information. The terminal device 106 may generate a determination result display image including content of the verification Web page and cause the display device to display the determination result display image. As a result, a user of the terminal device 106 can browse the information regarding the authenticity determination result provided as the verification Web page.

Note that, in Fig. 1, the authenticity determination system 100 is illustrated to include one of each of the devices from the imaging device 101 to the terminal device 106, but the authenticity determination system 100 may include a plurality of imaging devices 101, instead. Similarly, the authenticity determination system 100 may include a plurality of file conversion devices 102, instead. Similarly, the authenticity determination system 100 may include a plurality of image editing devices 103, instead. Similarly, the authenticity determination system 100 may include a plurality of authenticity determination servers 104, instead. Similarly, the authenticity determination system 100 may include a plurality of Web servers 105, instead. Similarly, the authenticity determination system 100 may include a plurality of terminal devices 106, instead. The number of each of the devices from the imaging device 101 to the terminal device 106 included in the authenticity determination system 100 may be the same as or different from the number of other devices.

Furthermore, each of the devices from the imaging device 101 to the terminal device 106 described above may include a single device or may include a plurality of devices. Furthermore, furthermore, the authenticity determination server 104 and the Web server 105 may be implemented as cloud computing (that is, cloud servers) shared and processed in cooperation by a plurality of devices via a network. Furthermore, the authenticity determination server 104 and the Web server 105 may be configured as terminal devices, or the imaging device 101, the file conversion device 102, the image editing device 103, and the terminal device 106 may be configured as servers. Furthermore, a plurality of arbitrary devices among the devices from the imaging device 101 to the terminal device 106 described as different devices in Fig. 1 may be configured as one device. That is, functions of a plurality of arbitrary devices among the devices from the imaging device 101 to the terminal device 106 may be implemented in one device. Furthermore, some of the devices from the imaging device 101 to the terminal device 106 described above may be omitted. Furthermore, the authenticity determination system 100 may further include a device other than the devices from the imaging device 101 to the terminal device 106 described above.

### <Image Editing Device>

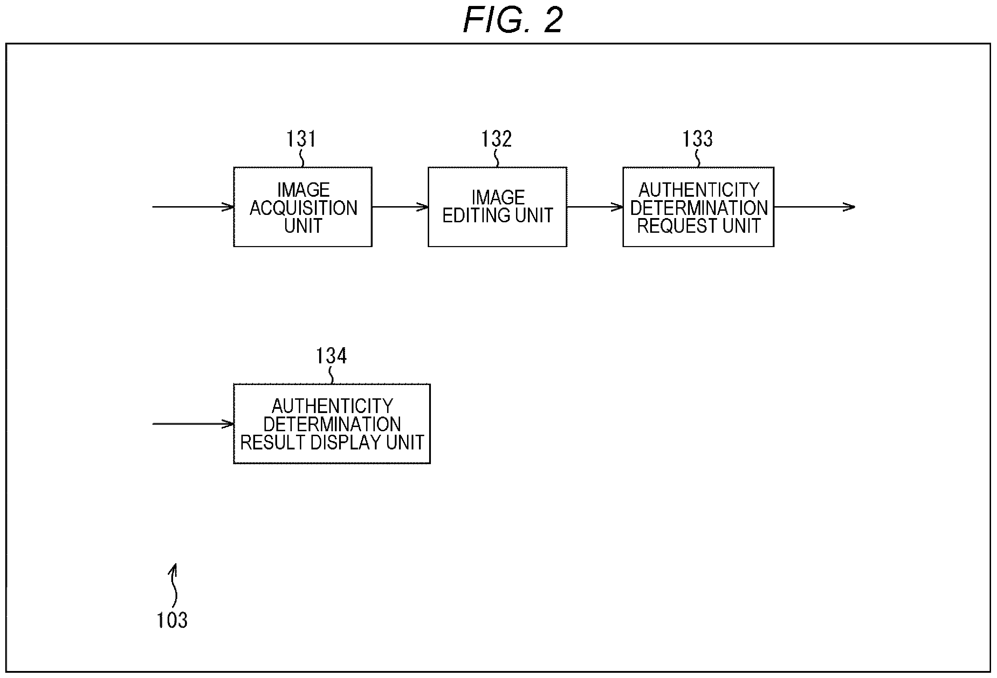

Fig. 2 is a block diagram illustrating a main configuration example of the image editing device 103 in Fig. 1. As illustrated in Fig. 2, the image editing device 103 includes an image acquisition unit 131, an image editing unit 132, an authenticity determination request unit 133, and an authenticity determination result display unit 134.

The image acquisition unit 131 executes processing related to image acquisition. For example, the image acquisition unit 131 may acquire an image file supplied from another device via the network 110 or a storage medium (not illustrated). The image acquisition unit 131 may supply the acquired image file to the image editing unit 132.

The image editing unit 132 performs processing related to editing of an image. For example, the image editing unit 132 may acquire the image file supplied from the image acquisition unit 131. For example, the image editing unit 132 may acquire an image file including a pre-edit image to be subjected to edit processing. The pre-edit image may be an original image that is an (unedited) image in the same state as when the image was generated, or may be an image obtained by performing some editing on the original image. The image editing unit 132 may perform edit processing on the image file. That is, the image editing unit 132 may edit the pre-edit image to generate a post-edit image. The image editing unit 132 may supply the pre-edit image and the post-edit image to the authenticity determination request unit 133. Note that the pre-edit image and the post-edit image may be supplied to the authenticity determination request unit 133 in a state of being stored in one image file, or may be supplied to the authenticity determination request unit 133 in a state of being stored in different image files.

The authenticity determination request unit 133 executes processing related to a request for an authenticity determination of an image. For example, the authenticity determination request unit 133 may acquire the pre-edit image and the post-edit image supplied from the image editing unit 132. Note that, as described above, the pre-edit image and the post-edit image may be stored in one image file, or may be stored in different image files. The authenticity determination request unit 133 may supply the acquired pre-edit image and post-edit image to the authenticity determination server 104 via the network 110 or a storage medium (not illustrated) to request the authenticity determination for the post-edit image. At this time, the pre-edit image and the post-edit image may be supplied to the authenticity determination server 104 in a state of being stored in one image file, or may be supplied to the authenticity determination server 104 in a state of being stored in different image files.

The authenticity determination result display unit 134 executes processing related to display of an authenticity determination result of an image. For example, the authenticity determination result display unit 134 may acquire authenticity determination result display information supplied as a response to the above-described request via the network 110 or a storage medium (not illustrated). That is, the authenticity determination result display unit 134 may acquire authenticity determination result display information indicating an authenticity determination result of a post-edit image. The authenticity determination result display information may be supplied from the authenticity determination server 104 or may be supplied from another device. For example, the authenticity determination result display unit 134 may access a URL provided by the Web server 105 and acquire a verification Web page published at the URL as the authenticity determination result display information. The authenticity determination result display unit 134 generates a determination result display image on the basis of the acquired authenticity determination result display information and displays the image on the display device. As a result, a user of the image editing device 103 can recognize the requested authenticity determination result. Therefore, the authenticity determination result display unit 134 will also be referred to as a display processing unit.

### <Image Transmission Example 1>

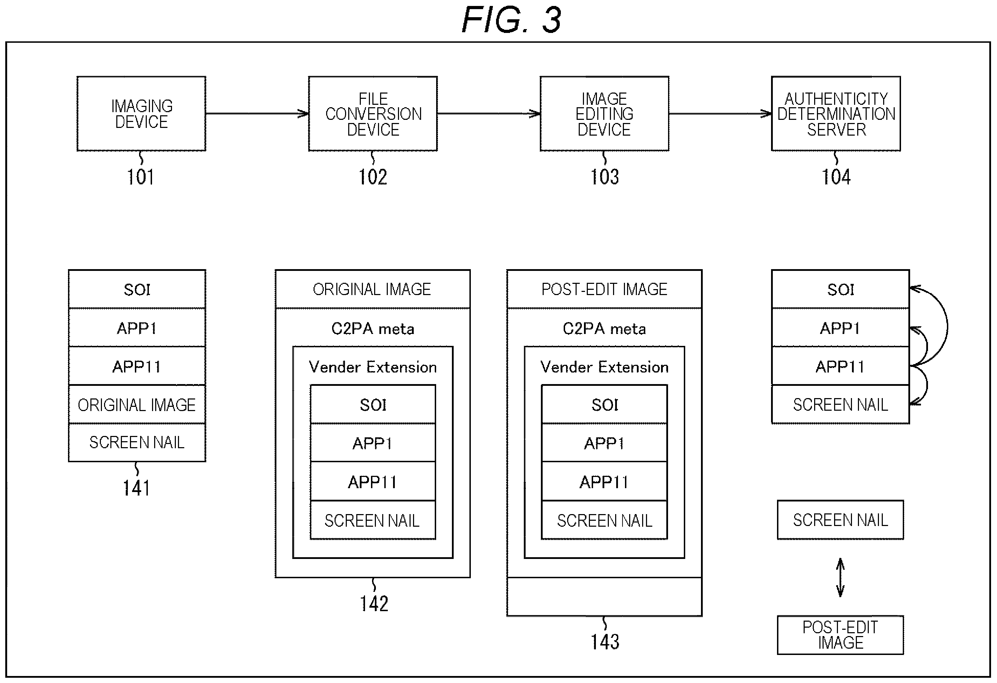

Fig. 3 illustrates an example of a state of image transmission in processing up to execution of an authenticity determination of an image by the authenticity determination system 100 described above. In the case of the example of Fig. 3, the imaging device 101 generates an electronically signed image file 141 and supplies the electronically signed image file 141 to the file conversion device 102. The electronically signed image file 141 illustrated in Fig. 3 is an image file that stores an electronic signature together with a main image. As illustrated in Fig. 3, a Start Of Image (SOI), APP1, APP11, an original image, and a screen nail may be stored in the electronically signed image file 141. SOI is a start marker indicating a starting point of a Joint Photographic Experts Group (JPEG) file. APP1 and APP11 are application data set by an application. For example, information of Exchangeable Image File Format (Exif) may be stored in APP1. APP11 may store a tamper detection signature (Multi hash for each area and Signature). The original image is stored as the main image of the electronically signed image file 141. The screen nail is a reduced image of the main image (original image). Image size of the screen nail may be any size as long as it is smaller than the main image, but is generally set to a size larger than that of a reduced image called a thumbnail.

The file conversion device 102 converts a file format of the electronically signed image file 141 to generate a history holding format image file 142. Then, the file conversion device 102 supplies the generated history holding format image file 142 to the image editing device 103. The history holding format image file 142 is a file format of a specification capable of holding a history of editing from the original image. For example, the history holding format image file 142 may be a file format conforming to a C2PA standard described in Non-Patent Document 1. For example, a metadata (C2PA meta) region and a vendor extension region (Vender Extension) may be formed in the history holding format image file 142, and SOI, APP1, APP11, the screen nail, and the like described above may be stored in the vendor extension region. Note that, in the case of the history holding format image file 142, the original image is stored as the main image.

The image editing device 103 sets the main image of the acquired history holding format image file 142 as a pre-edit image, and performs editing on the pre-edit image to generate a post-edit image. Then, the image editing device 103 supplies a history holding format image file 143 storing the post-edit image as the main image to the authenticity determination server 104, thereby requesting an authenticity determination of the post-edit image. Note that the history holding format image file 143 has the same file format as the history holding format image file 142. That is, the history holding format image file 143 includes the electronic signature of the original image and information regarding a history of editing from the original image to the post-edit image. Note that, in the case of the history holding format image file 143, the post-edit image is stored as the main image. In addition, information regarding editing by the image editing device 103 is also stored in the history holding format image file 143.

The authenticity determination server 104 acquires the pre-edit image and the post-edit image from the acquired history holding format image file 143. Furthermore, the authenticity determination server 104 determines authenticity of the pre-edit image on the basis of the electronic signature (the information regarding the history of editing) stored in the history holding format image file 143. The authenticity determination server 104 uses the pre-edit image and the post-edit image to identify content of editing (that is, editing executed when generating the post-edit image from the pre-edit image. A difference between the pre-edit image and the post-edit image) performed on the pre-edit image. Then, the authenticity determination server 104 determines authenticity of the post-edit image on the basis of a determination result of the authenticity of the pre-edit image and the identified content of the editing.

Note that the image editing device 103 may store the pre-edit image and the post-edit image in different image files and supply the image files to the authenticity determination server 104.

### <Example of Output Determination Result>

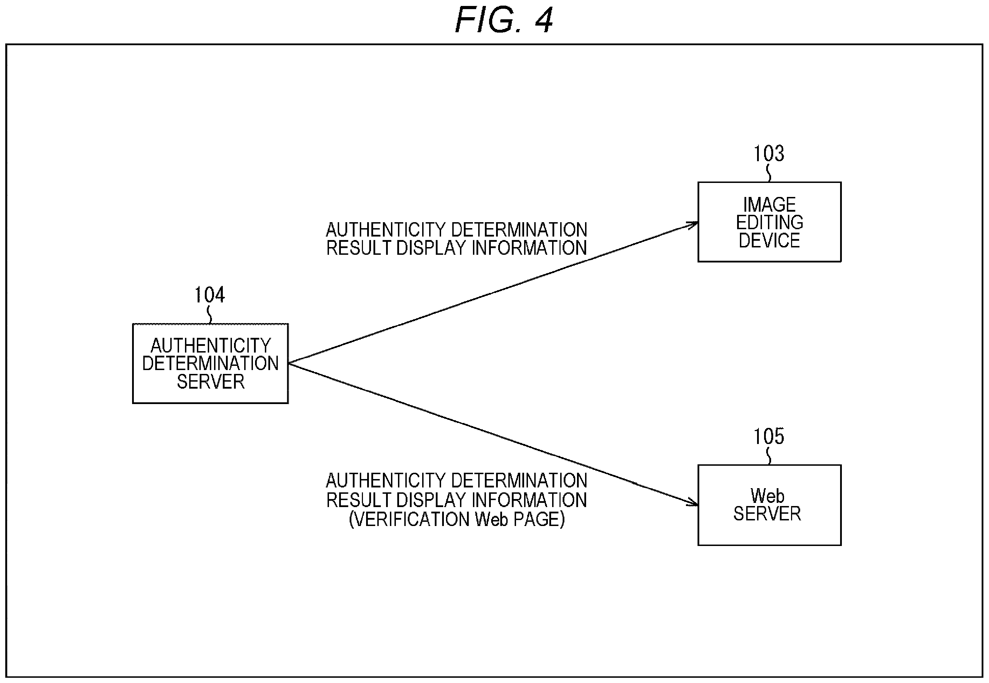

Fig. 4 is a diagram illustrating an example of a state of outputting authenticity determination result display information. As illustrated in Fig. 4, the authenticity determination server 104 may generate the authenticity determination result display information and supply, as a response to an authenticity determination request, the authenticity determination result display information to the image editing device 103 that has issued the request. In this case, the image editing device 103 acquires the authenticity determination result display information, and generates and displays a determination result display image on the basis of the authenticity determination result display information.

Furthermore, as illustrated in Fig. 4, the authenticity determination server 104 may generate a verification Web page as the authenticity determination result display information and supply the verification Web page to the Web server 105. The Web server 105 publishes the verification Web page at a predetermined URL.

### <Processing Flow 1>

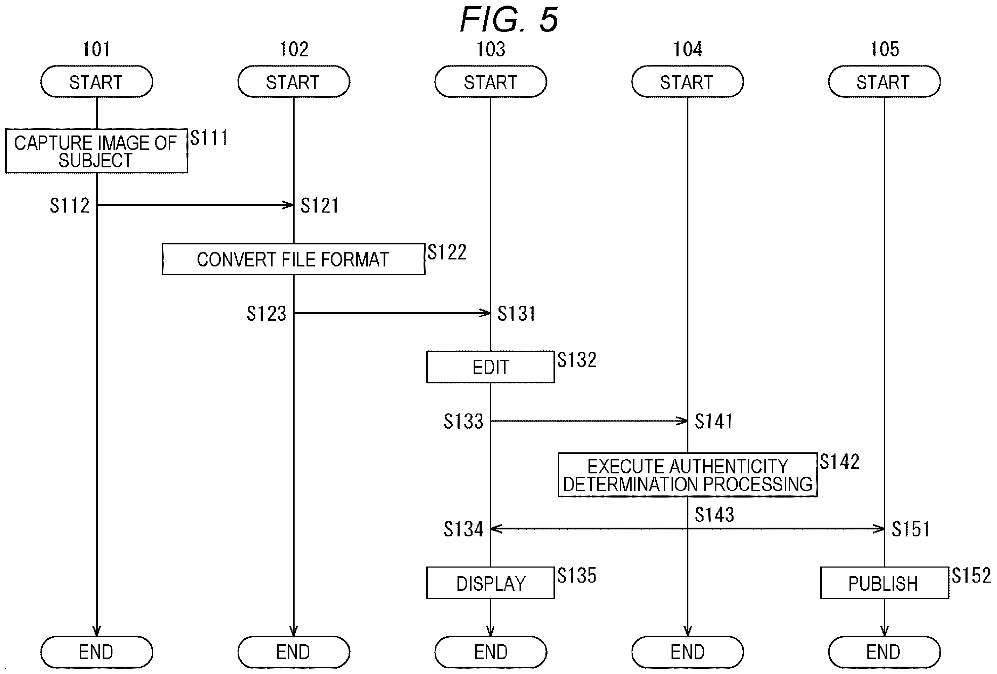

An example of a flow of processing executed in the authenticity determination system 100 in the case of the example of Figs. 3 and 4 will be described with reference to a flowchart of Fig. 5.

That is, in step S111, the imaging device 101 captures an image of a subject to generate a captured image (original image), and stores the captured image in the electronically signed image file 141. In step S112, the imaging device 101 supplies the electronically signed image file 141 to the file conversion device 102.

In step S121, the file conversion device 102 acquires the electronically signed image file 141. In step S122, the file conversion device 102 converts the file format of the electronically signed image file 141 to generate a history holding format image file 142. In step S123, the file conversion device 102 supplies the history holding format image file 142 to the image editing device 103.

In step S131, the image editing device 103 acquires the history holding format image file 142. In step S132, the image editing device 103 edits the main image of the history holding format image file 142 as a pre-edit image to generate a post-edit image. In step S133, the image editing device 103 supplies a history holding format image file 143 storing the post-edit image as a main image to the authenticity determination server 104, thereby requesting an authenticity determination for the post-edit image.

In step S141, the authenticity determination server 104 acquires the history holding format image file 143 (that is, an authenticity determination request). In step S142, the authenticity determination server 104 executes authenticity determination processing using the history holding format image file 143 to determine the authenticity of the post-edit image. In step S143, the authenticity determination server 104 outputs authenticity determination result display information generated as a result of the authenticity determination processing. For example, the authenticity determination server 104 may supply, as a response to the authenticity determination request, the authenticity determination result display information to the image editing device 103 that has issued the request. Furthermore, the authenticity determination server 104 may supply the verification Web page to the Web server 105 as the authenticity determination result display information.

In step S134, the image editing device 103 acquires the response (that is, the authenticity determination result display information). In step S135, the image editing device 103 generates and displays a determination result display image on the basis of the authenticity determination result display information.

In step S151, the Web server 105 acquires the verification Web page (that is, the authenticity determination result display information). In step S152, the Web server 105 publishes the verification Web page at a predetermined URL. In this way, the terminal device 106 can access the URL to acquire the verification Web page, and generate and display the determination result display image on the basis of the acquired verification Web page.

Each device of the authenticity determination system 100 may execute the processing described above.

### <Image Transmission Example 2>

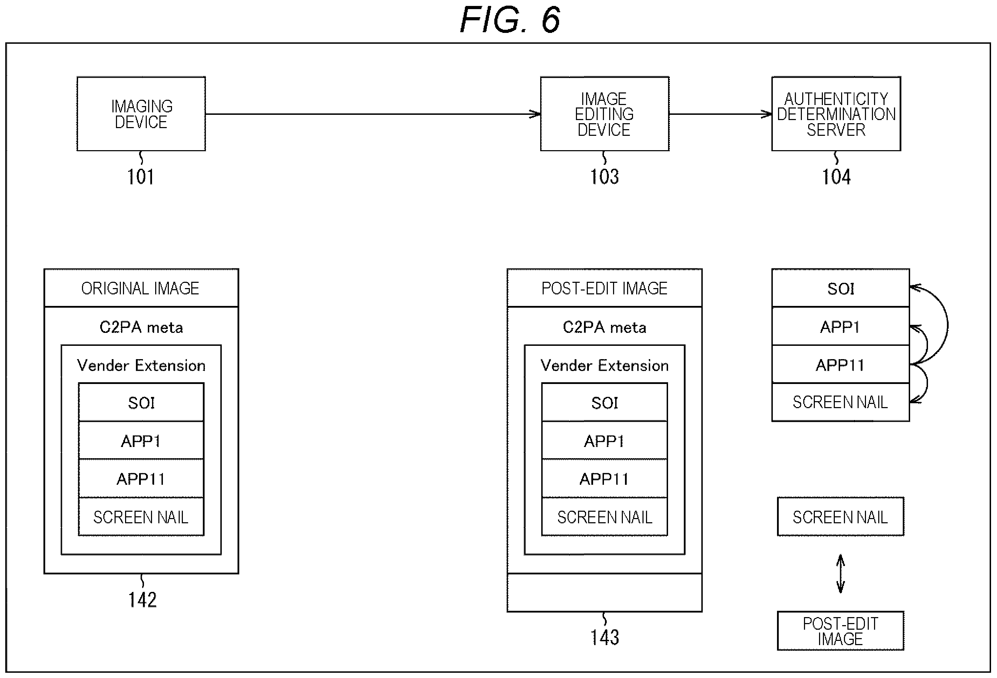

Note that the imaging device 101 may generate the history holding format image file 142 instead of the electronically signed image file 141. In this case, the file conversion device 102 may be omitted. Fig. 6 illustrates another example of the state of image transmission in the processing up to the execution of an authenticity determination of an image in this case. In the case of the example of Fig. 6, the imaging device 101 generates the history holding format image file 142 and supplies the image file to the image editing device 103. That is, the image editing device 103 acquires the history holding format image file 142 supplied from the imaging device 101. The subsequent processing is similar to the case of Fig. 3. Also in this case, the output of the authenticity determination result display information is executed similarly to the example of Fig. 4.

### <Processing Flow 2>

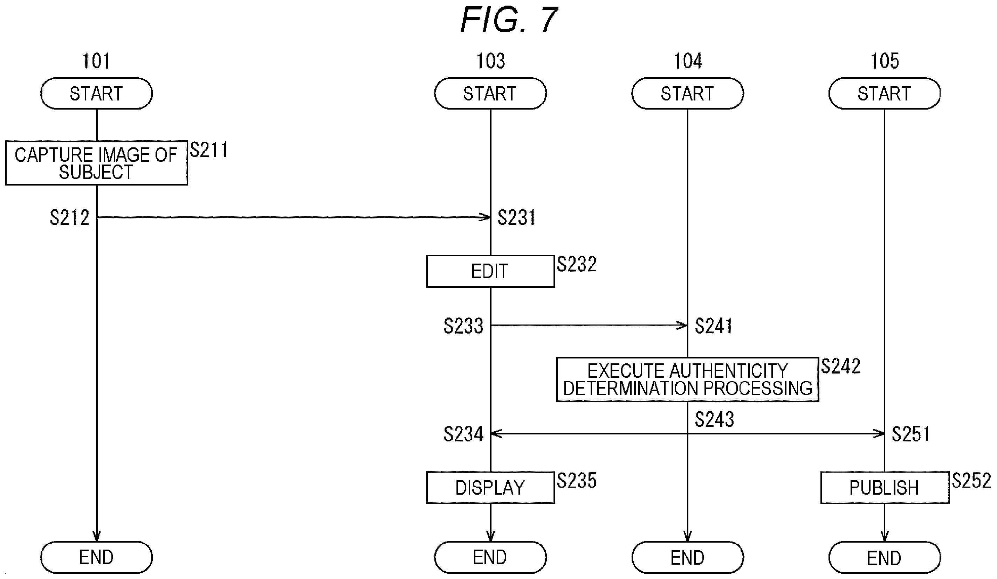

An example of a flow of processing executed in the authenticity determination system 100 in the case of the example of Figs. 4 and 6 will be described with reference to a flowchart of Fig. 7.

In this case, in step S211, the imaging device 101 captures an image of a subject to generate a captured image (original image), and stores the captured image in a history holding format image file 142. In step S212, the imaging device 101 supplies the history holding format image file 142 to the image editing device 103.

In step S231, the image editing device 103 acquires the history holding format image file 142. In step S232, the image editing device 103 edits the main image of the history holding format image file 142 as a pre-edit image to generate a post-edit image. In step S233, the image editing device 103 supplies a history holding format image file 143 storing the post-edit image as a main image to the authenticity determination server 104, thereby requesting an authenticity determination for the post-edit image.

In step S241, the authenticity determination server 104 acquires the history holding format image file 143 (that is, an authenticity determination request). In step S242, the authenticity determination server 104 executes authenticity determination processing using the history holding format image file 143 to determine the authenticity of the post-edit image. In step S243, the authenticity determination server 104 outputs authenticity determination result display information generated as a result of the authenticity determination processing. For example, the authenticity determination server 104 may supply, as a response to the authenticity determination request, the authenticity determination result display information to the image editing device 103 that has issued the request. Furthermore, the authenticity determination server 104 may supply the verification Web page to the Web server 105 as the authenticity determination result display information.

In step S234, the image editing device 103 acquires the response (that is, the authenticity determination result display information). In step S235, the image editing device 103 generates and displays a determination result display image on the basis of the authenticity determination result display information.

In step S251, the Web server 105 acquires the verification Web page (that is, the authenticity determination result display information). In step S252, the Web server 105 publishes the verification Web page at a predetermined URL. In this way, the terminal device 106 can access the URL to acquire the verification Web page, and generate and display the determination result display image on the basis of the acquired verification Web page.

Each device of the authenticity determination system 100 may execute the processing described above.

### <Image Transmission Example 3>

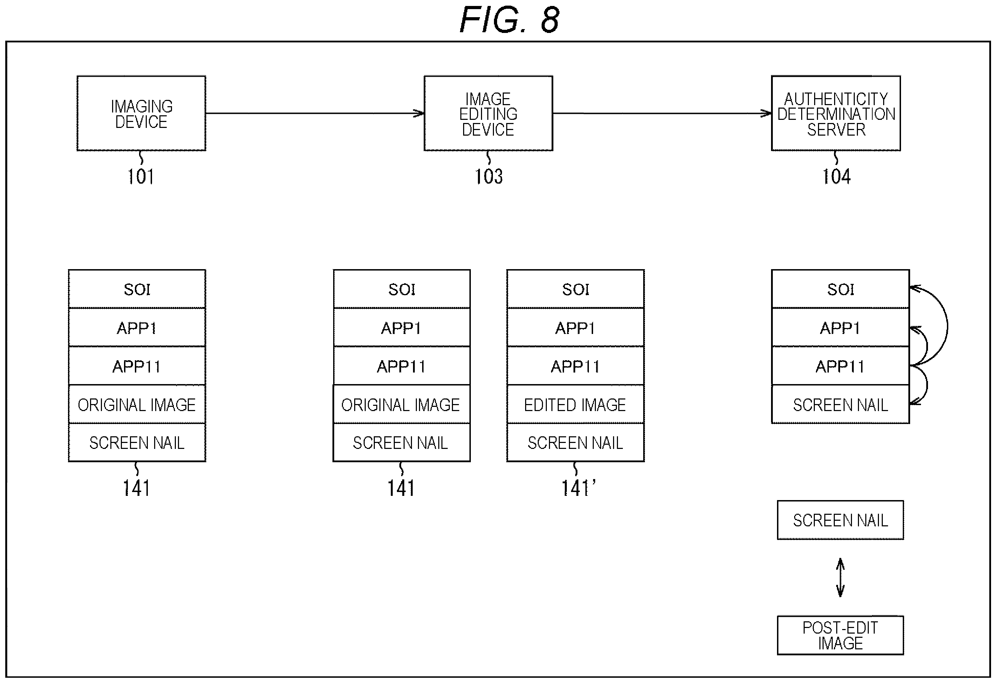

Alternatively, the image editing device 103 may set an electronically signed image file as an editing target instead of a history holding format image file. That is, the image editing device 103 may set a main image of the electronically signed image file as a pre-edit image and store a post-edit image in the electronically signed image file. In this case, the file conversion device 102 may be omitted. Fig. 8 illustrates an example of a state of image transmission in processing up to execution of an image authenticity determination in this case. In the case of the example of Fig. 8, the imaging device 101 generates an electronically signed image file 141 and supplies the image file to the image editing device 103.

The image editing device 103 acquires the electronically signed image file 141. The image editing device 103 sets a main image of the acquired electronically signed image file 141 as a pre-edit image, and performs editing on the pre-edit image to generate a post-edit image. The image editing device 103 generates an electronically signed image file 141' that stores the post-edit image as a main image. That is, the image editing device 103 stores the post-edit image in an image file different from that for the pre-edit image. The image editing device 103 supplies both the electronically signed image file 141 and the generated electronically signed image file 141' to the authenticity determination server 104, thereby requesting an authenticity determination of the post-edit image.

Note that, in a case where the image editing device 103 executes edit processing while setting an image obtained editing an original image as the pre-edit image, electronically signed image files as many as the number of times of editing executed are supplied to the image editing device 103. That is, the electronically signed image files as many as the number of times of edit processing from the original image to the post-edit image are supplied to the authenticity determination server 104.

The authenticity determination server 104 acquires the electronically signed image file 141 and the electronically signed image file 141'. The authenticity determination server 104 acquires the pre-edit image and the post-edit image stored in these files. The authenticity determination server 104 determines the authenticity of the pre-edit image on the basis of the electronic signatures stored in the files. The authenticity determination server 104 uses the pre-edit image and the post-edit image to identify content of editing (that is, editing executed when generating the post-edit image from the pre-edit image. A difference between the pre-edit image and the post-edit image) performed on the pre-edit image. Then, the authenticity determination server 104 determines authenticity of the post-edit image on the basis of a determination result of the authenticity of the pre-edit image and the identified content of the editing. The subsequent processing is similar to the case of Fig. 3. Also in this case, the output of the authenticity determination result display information is executed similarly to the example of Fig. 4.

### <Processing Flow 3>

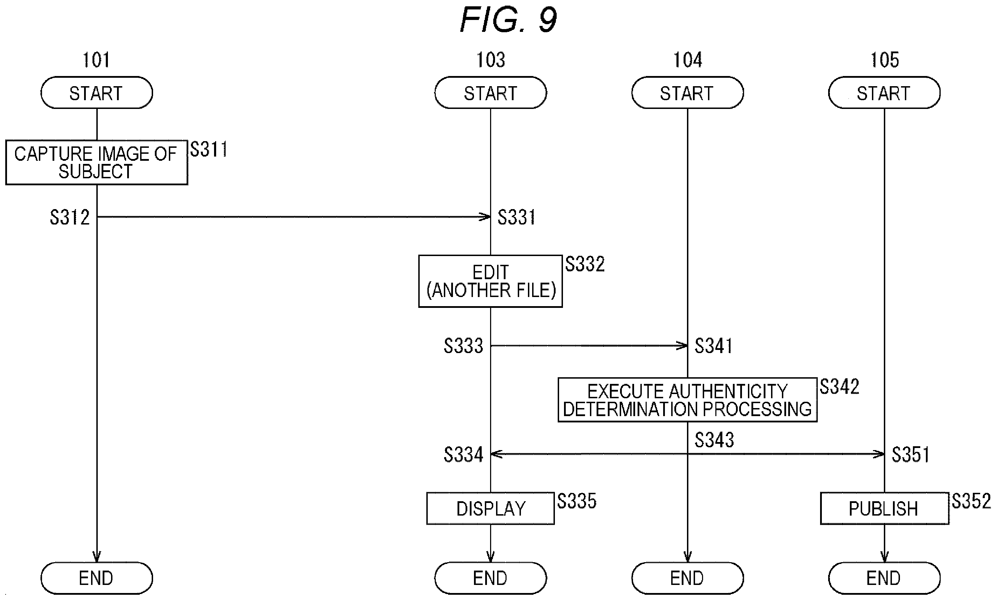

An example of a flow of processing executed in the authenticity determination system 100 in the case of the example of Figs. 4 and 8 will be described with reference to a flowchart of Fig. 9.

In this case, in step S311, the imaging device 101 captures an image of a subject to generate a captured image (original image), and stores the captured image in the electronically signed image file 141. In step S312, the imaging device 101 supplies the electronically signed image file 141 to the image editing device 103.

In step S331, the image editing device 103 acquires the electronically signed image file 141. In step S332, the image editing device 103 edits a main image of the electronically signed image file 141 as a pre-edit image to generate a post-edit image, and stores the post-edit image in the electronically signed image file 141'. In step S333, the image editing device 103 supplies the electronically signed image file 141 and the electronically signed image file 141' to the authenticity determination server 104, thereby requesting an authenticity determination for the post-edit image.

In step S341, the authenticity determination server 104 acquires the electronically signed image file 141 and the electronically signed image file 141' (that is, an authenticity determination request). In step S342, the authenticity determination server 104 executes authenticity determination processing using the electronically signed image file 141 and the electronically signed image file 141', and determines the authenticity of the post-edit image. In step S343, the authenticity determination server 104 outputs authenticity determination result display information generated as a result of the authenticity determination processing. For example, the authenticity determination server 104 may supply, as a response to the authenticity determination request, the authenticity determination result display information to the image editing device 103 that has issued the request. Furthermore, the authenticity determination server 104 may supply the verification Web page to the Web server 105 as the authenticity determination result display information.

In step S334, the image editing device 103 acquires the response (that is, the authenticity determination result display information). In step S335, the image editing device 103 generates and displays a determination result display image on the basis of the authenticity determination result display information.

In step S351, the Web server 105 acquires the verification Web page (that is, the authenticity determination result display information). In step S352, the Web server 105 publishes the verification Web page at a predetermined URL. In this way, the terminal device 106 can access the URL to acquire the verification Web page, and generate and display the determination result display image on the basis of the acquired verification Web page.

Each device of the authenticity determination system 100 may execute the processing described above.

### <Identification of Editing Content and Authenticity Determination Based on Editing Content>

In any one of the examples of Figs. 3, 6, and 8, the authenticity determination server 104 identifies content of editing performed on a pre-edit image on the basis of the pre-edit image and a post-edit image, and determines whether or not to guarantee authenticity of the post-edit image on the basis of the content of the editing.

For example, a first image processing apparatus includes a signature verification unit that verifies a signature of a pre-edit image before editing is performed on an image, an editing identification unit that identifies content of the editing on the basis of the pre-edit image and a post-edit image obtained by editing the pre-edit image, and an authenticity determination unit that determines whether or not to guarantee authenticity of the post-edit image on the basis of a verification result of the signature and the identified content of the editing.

For example, an image processing method is employed including, using a first image processing apparatus, verifying a signature of a pre-edit image before editing is performed on an image, identifying content of the editing on the basis of the pre-edit image and a post-edit image obtained by editing the pre-edit image, and determining whether or not to guarantee authenticity of the post-edit image on the basis of a verification result of the signature and the identified content of the editing.

In doing so, the first image processing apparatus can guarantee authenticity of an image subjected to allowable editing.

### <Display of Authenticity Determination Result>

Furthermore, in any one of the examples of Figs. 3, 6, and 8, the image editing device 103 (or the terminal device 106) displays a result of a determination as to whether or not to guarantee authenticity of a post-edit image executed as described above.

For example, a second image processing apparatus includes a display processing unit that generates a display image indicating a determination result as to whether or not to guarantee authenticity of a post-edit image using authenticity determination result display information indicating the determination result and that displays the display image.

For example, an image processing method is employed including, using a first image processing apparatus, generating a display image indicating a determination result as to whether or not to guarantee authenticity of a post-edit image using authenticity determination result display information indicating the determination result and displaying the display image.

Note that the post-edit image is an image obtained by editing the pre-edit image.

In doing so, the second image processing apparatus can notify that authenticity of an image subjected to allowable editing has been guaranteed.

### <Authenticity Determination Server>

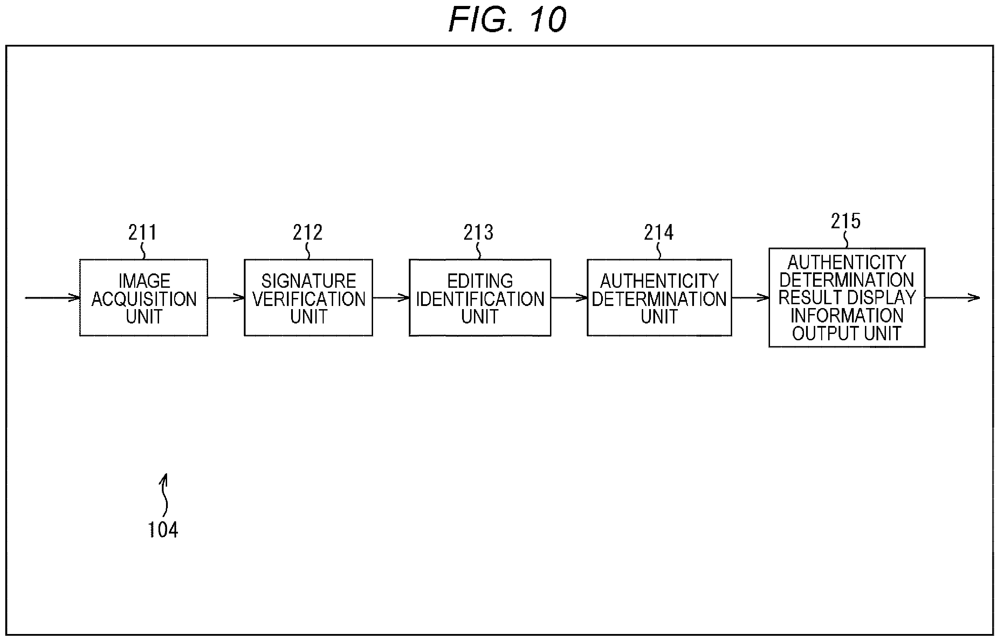

Fig. 10 is a block diagram illustrating a main configuration example of the authenticity determination server 104 of Fig. 1. As illustrated in Fig. 10, the authenticity determination server 104 includes an image acquisition unit 211, a signature verification unit 212, an editing identification unit 213, an authenticity determination unit 214, and an authenticity determination result display information output unit 215.

The image acquisition unit 211 executes processing related to image acquisition. For example, the image acquisition unit 211 may acquire an image file supplied from another device via the network 110 or a storage medium (not illustrated). The image acquisition unit 211 may acquire a pre-edit image and a post-edit image stored in the image file. Note that the pre-edit image and the post-edit image may be stored in different image files. The image acquisition unit 211 may supply the acquired pre-edit image and post-edit image to the signature verification unit 212 together with the image file and the like.

The signature verification unit 212 executes processing related to verification of an electronic signature. For example, the signature verification unit 212 may acquire the pre-edit image, the post-edit image, and the image file supplied from the image acquisition unit 211. For example, the signature verification unit 212 may determine authenticity of the pre-edit image by verifying an electronic signature stored in the image file. That is, the signature verification unit 212 may verify a signature of the pre-edit image before editing is performed on the image. For example, if falsification is not detected as a result of the verification of the electronic signature, the signature verification unit 212 may determine that the authenticity of the pre-edit image is guaranteed. If falsification is detected as a result of the verification of the electronic signature, on the other hand, the signature verification unit 212 may determine that the authenticity of the pre-edit image is not guaranteed. The signature verification unit 212 may supply this signature verification result (a determination result of the authenticity of the pre-edit image) to the editing identification unit 213 together with the pre-edit image, the post-edit image, the image file, and the like.

The editing identification unit 213 executes processing related to identification of content of editing (a difference between a post-edit image and a pre-edit image) performed on a pre-edit image. For example, the editing identification unit 213 may acquire the signature verification result (the determination result of the authenticity of the pre-edit image), the pre-edit image, the post-edit image, and the image file supplied from the signature verification unit 212. The editing identification unit 213 may identify the content of the editing using the pre-edit image and the post-edit image. That is, the editing identification unit 213 may identify the content of the editing (what editing has been performed) on the basis of the pre-edit image and the post-edit image obtained by editing the pre-edit image. The method of identifying editing content may be any method. Furthermore, the content to be identified may be any content. For example, a type of editing executed or a value of a parameter used in the editing may be identified. In addition, the number of times of editing to be identified may be any number; one time of editing may be identified, or a plurality of times of editing may be identified. The editing identification unit 213 may supply information indicating the identified content of the editing to the authenticity determination unit 214 together with the signature verification result (the determination result of the authenticity of the pre-edit image), the pre-edit image, the post-edit image, the image file, and the like.

The authenticity determination unit 214 executes processing related to authenticity determination. For example, the authenticity determination unit 214 may acquire the information indicating the content of the editing, the signature verification result (the determination result of the authenticity of the pre-edit image), the pre-edit image, the post-edit image, and the image file supplied from the editing identification unit 213. The authenticity determination unit 214 may determine whether or not to guarantee the authenticity of the post-edit image on the basis of the verification result of the signature (the determination result of the authenticity of the pre-edit image) and the identified content of the editing.

For example, if the authenticity of the pre-edit image is guaranteed by the verification result of the signature and the editing performed on the pre-edit image is identified as allowable editing, the authenticity determination unit 214 may determine that the authenticity of the post-edit image is guaranteed. Furthermore, if the authenticity of the pre-edit image is not guaranteed by the verification result of the signature, the authenticity determination unit 214 may determine that the authenticity of the post-edit image is not guaranteed. Furthermore, if the editing performed on the pre-edit image is identified as unallowable editing, the authenticity determination unit 214 may determine that the authenticity of the post-edit image is not guaranteed.

Note that the "content of editing" may include (a value of) a parameter used in the editing. For example, the authenticity determination unit 214 may determine whether or not to guarantee the authenticity of the post-edit image on the basis of whether or not the value of the parameter used in the editing is at an allowable level. Furthermore, the determination result is not limited to a binary value of whether or not the authenticity is guaranteed, and may be a multivalue. For example, the authenticity determination unit 214 may divide accuracy (certainty) of authenticity guarantee into three or more levels and derive one of the levels (also referred to as an authenticity guarantee level) as the determination result. That is, ambiguity may be added to the authenticity guarantee.

Note that this criterion for the determination may be determined in advance. Furthermore, this determination criterion may be appropriately set or changed. Furthermore, this criterion for the determination may be a common criterion that does not depend on an image, a device, or the like. Furthermore, this determination criterion may be a criterion set in a device that executes authenticity determination (for example, a criterion set by a user of the device). Furthermore, this determination criterion may be a criterion set in a device that requests authenticity determination (for example, a criterion set by a user of the device).

The authenticity determination unit 214 may supply such a determination result to the authenticity determination result display information output unit 215.

The authenticity determination result display information output unit 215 executes processing related to the output of the authenticity determination result display information. For example, the authenticity determination result display information output unit 215 may acquire the determination result of the authenticity of the post-edit image supplied from the authenticity determination unit 214. The authenticity determination result display information output unit 215 may generate authenticity determination result display information indicating a determination result as to whether or not to guarantee the authenticity of the post-edit image on the basis of the determination result. The authenticity determination result display information output unit 215 may supply (output) the generated authenticity determination result display information to another device. For example, the authenticity determination result display information output unit 215 may supply the generated authenticity determination result display information to the image editing device 103, or may supply the verification Web page to the Web server 105. Note that the authenticity determination result display information may be displayed on the authenticity determination server 104 without being supplied to another device.

The authenticity determination result display information may include any information as long as the information relates to the display of the authenticity determination result. For example, in the authenticity determination result display information, content to be displayed in the determination result display image may be designated. For example, in the authenticity determination result display information, it may be designated to display editing content in the determination result display image. Furthermore, information (for example, a type of editing, parameter values to be used, and the like) indicating the editing content to be displayed may be designated. Furthermore, the displayed content and design may be different between the case of guaranteeing authenticity and the case of not guaranteeing authenticity. For example, settings of color, shape, size, thickness, position, emphasis/non-emphasis (conspicuous/inconspicuous), display/non-display, and the like may be different between the case of guaranteeing authenticity and the case of not guaranteeing authenticity. Furthermore, such settings may be different for each authenticity guarantee level.

With such a configuration, the authenticity determination server 104 can guarantee authenticity of an image subjected to allowable editing. For example, in a case where a service for guaranteeing authenticity of an image is provided, if authenticity of an image subjected to allowable editing cannot be guaranteed as in the conventional method, there is a possibility that any editing will not be permitted in order to guarantee the authenticity, and there is a possibility that practicality and convenience of the service will be reduced. By employing the present technology to this, the authenticity determination server 104 can guarantee authenticity of an image subjected to allowable editing. Therefore, it is possible to suppress unnecessary strictness of requirements for an authenticity determination in a service for guaranteeing authenticity of an image. Therefore, it is possible to suppress decreases in practicality and convenience of such a service.

### <Flow of Authenticity Determination Processing>

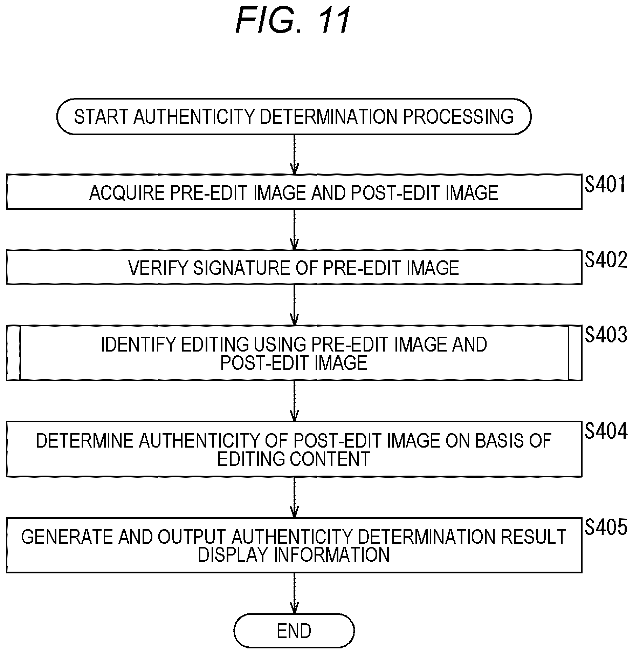

An example of a flow of the authenticity determination processing executed by the authenticity determination server 104 will be described with reference to a flowchart of Fig. 11.

When the authenticity determination processing is started, in step S401, the image acquisition unit 211 acquires an image file, and acquires a pre-edit image and a post-edit image stored in the image file.

In step S402, the signature verification unit 212 verifies a signature of the pre-edit image stored in the image file.

In step S403, the editing identification unit 213 executes editing identification processing to identify editing performed on the pre-edit image using the pre-edit image and the post-edit image.

In step S404, the authenticity determination unit 214 determines authenticity of the post-edit image on the basis of the identified content of the editing.

In step S405, the authenticity determination result display information output unit 215 generates authenticity determination result display information on the basis of the determination result and outputs the authenticity determination result display information to another device.

When the processing of step S405 ends, the authenticity determination processing ends.

### <Flow of Editing Identification Processing>

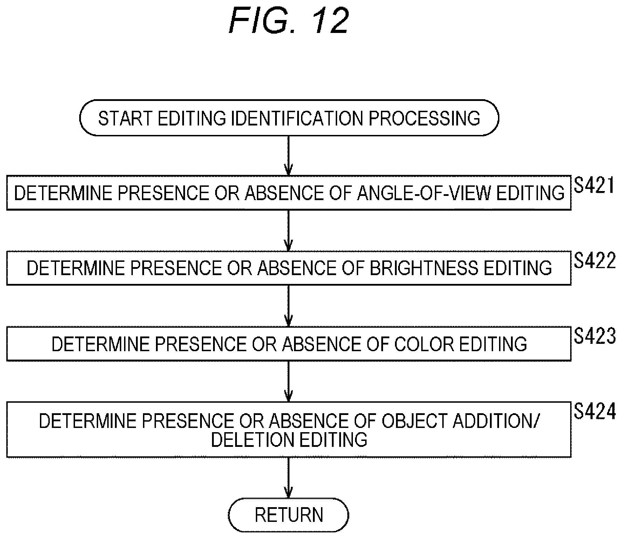

Next, an example of a flow of the editing identification processing executed in step S403 of Fig. 11 will be described with reference to a flowchart of Fig. 12.

When the editing identification processing is started, in step S421, the editing identification unit 213 determines presence or absence of angle-of-view editing, which is editing for changing an angle of view. Note that any method may be used to determine presence or absence of angle-of-view editing.

In step S422, the editing identification unit 213 determines presence or absence of brightness editing, which is editing for changing brightness of an image. Note that the method of determining presence or absence of brightness editing may be any method.

In step S423, the editing identification unit 213 determines presence or absence of color editing, which is editing for changing color of an image. Note that the method of determining presence or absence of color editing may be any method.

In step S424, the editing identification unit 213 determines presence or absence of object addition/deletion editing, which is editing for adding an object to an image or deleting an object in an image. Note that the method of determining presence or absence of the object addition/deletion editing may be any method.

When the processing of step S424 ends, the editing identification processing ends, and the processing returns to Fig. 11.

Note that the content of editing identified in the editing identification processing may be any editing, and is not limited to the example of Fig. 12. That is, in the case of the example of Fig. 12, presence or absence of the angle-of-view editing, presence or absence of the brightness editing, presence or absence of the color editing, and presence or absence of the object addition/deletion editing are detected, but presence or absence of editing other than these examples may be detected. In addition, a value of a parameter used in editing may be identified.

By executing the processing as described above, the authenticity determination server 104 can guarantee authenticity of an image subjected to allowable editing. For example, in a case where a service for guaranteeing authenticity of an image is provided, if authenticity of an image subjected to allowable editing cannot be guaranteed as in the conventional method, there is a possibility that any editing will not be permitted in order to guarantee the authenticity, and there is a possibility that practicality and convenience of the service will be reduced. By employing the present technology to this, the authenticity determination server 104 can guarantee authenticity of an image subjected to allowable editing. Therefore, it is possible to suppress unnecessary strictness of requirements for an authenticity determination in a service for guaranteeing authenticity of an image. Therefore, it is possible to suppress decreases in practicality and convenience of such a service.

### <Display Image Example>

In this case, the determination result display image may include information indicating a determination result as to whether or not to guarantee the authenticity of the post-edit image. In other words, the authenticity determination result display information in this case may include information for generating a determination result display image indicating a determination result as to whether or not to guarantee the authenticity of the post-edit image. For example, in the image editing device 103, the authenticity determination result display unit 134 generates a display image indicating the determination result as to whether or not to guarantee the authenticity of the post-edit image using the authenticity determination result display information indicating the determination result, and causes the display device to display the display image.

In doing so, the image editing device 103 can notify that authenticity of an image subjected to allowable editing is guaranteed. Therefore, it is possible to suppress unnecessary strictness of requirements for an authenticity determination in a service for guaranteeing authenticity of an image. Therefore, it is possible to suppress decreases in practicality and convenience of such a service.

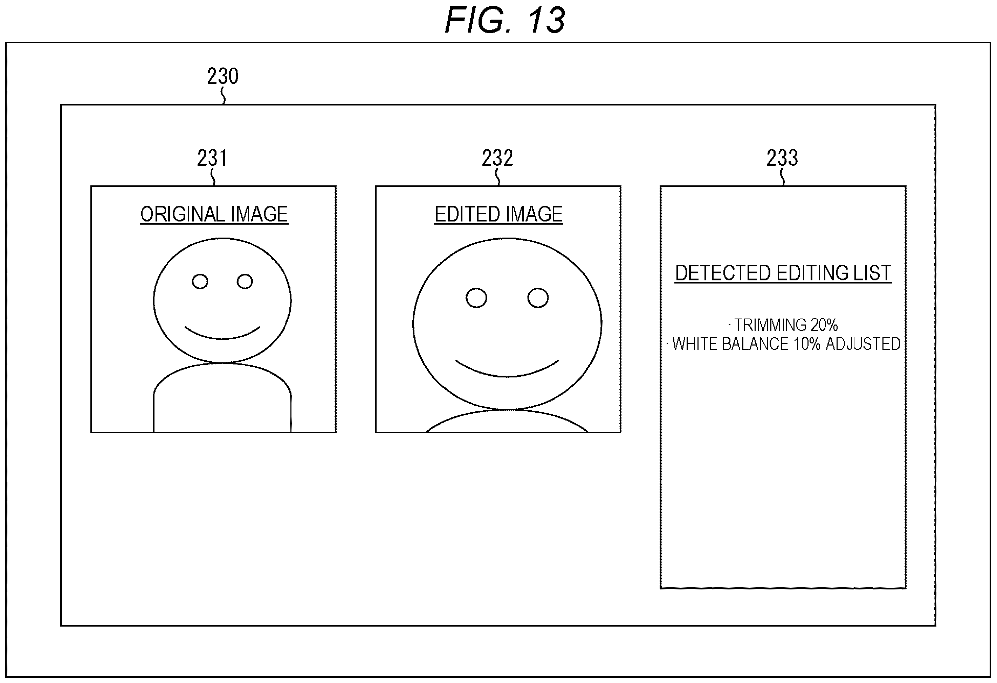

A determination result display image 230 illustrated in Fig. 13 is an example of a determination result display image in this case. As illustrated in Fig. 13, the determination result display image 230 includes information indicating a determination result as to whether or not to guarantee authenticity of a post-edit image. Note that, in the determination result display image 230, whether or not to guarantee the authenticity of the post-edit image may be expressed in any manner. For example, only in a case where the authenticity is guaranteed, information regarding the editing may be displayed. That is, only information regarding allowable editing may be included in the determination result display image. In other words, the authenticity determination result display information may include information for generating a determination result display image including only information regarding allowable editing. For example, in the image editing device 103, the authenticity determination result display unit 134 may generate a determination result display image in such a way as to include only information regarding allowable editing. In doing so, it is possible to easily identify that the authenticity of the post-edit image is guaranteed (allowable editing).

Furthermore, only in a case where authenticity is not guaranteed, information regarding the editing may be displayed. That is, only information about unallowable editing may be included in the determination result display image 230. In other words, the authenticity determination result display information may include information for generating a determination result display image including only information regarding unallowable editing. For example, in the image editing device 103, the authenticity determination result display unit 134 may generate a determination result display image in such a way as to include only information regarding unallowable editing. In doing so, it is possible to easily identify that authenticity of a post-edit image is not guaranteed (unallowable editing).

Furthermore, how to display the determination result display image 230 may be different between the case of guaranteeing the authenticity and the case of not guaranteeing the authenticity. For example, in each case, settings of color, shape, size, thickness, position, emphasis/non-emphasis (conspicuous/inconspicuous), and the like may be different. That is, the determination result display image 230 may include "information regarding allowable editing" and "information regarding unallowable editing" that are displayed in different manners. In other words, the authenticity determination result display information includes both "information regarding allowable editing" and "information regarding unallowable editing", and may include information for generating a determination result display image in which how to display these pieces of information is different. For example, in the image editing device 103, the authenticity determination result display unit 134 may generate the determination result display image 230 in such a way as to change display content between the case of guaranteeing the authenticity of the post-edit image and the case of not guaranteeing the authenticity of the post-edit image. In doing so, it is possible to easily identify whether or not the authenticity of the post-edit image is guaranteed (whether or not the editing is allowable editing).

Note that, as illustrated in Fig. 13, the determination result display image 230 may be provided with an area 231 in which the original image is displayed. That is, the pre-edit image may be included in the determination result display image. In other words, the authenticity determination result display information may include information for generating a determination result display image including the pre-edit image. For example, in the image editing device 103, the authenticity determination result display unit 134 may generate a determination result display image further including the pre-edit image (for example, the region 231). In addition, the determination result display image 230 may be provided with an area 232 in which the post-edit image is displayed. That is, the post-edit image may be included in the determination result display image. In other words, the authenticity determination result display information may include information for generating the determination result display image including the post-edit image. For example, in the image editing device 103, the authenticity determination result display unit 134 may generate a determination result display image further including the post-edit image (for example, the region 232). Furthermore, the determination result display image 230 may be provided with a detected editing list 233 indicating information indicating content of editing. That is, information indicating content of editing may be included in the determination result display image. In other words, the authenticity determination result display information may include information for generating a determination result display image including information indicating content of editing. For example, in the image editing device 103, the authenticity determination result display unit 134 may generate a determination result display image further including information indicating content of editing (for example, the detected editing list 233).

In the detected editing list 233, any information may be displayed. For example, as illustrated in Fig. 13, types of editing such as trimming and white balance or a parameter value such as 20% or 10% may be shown in the detected editing list 233. In addition, in the detected editing list 233, information regarding allowable editing may be shown, information regarding unallowable editing may be shown, or both may be shown. In addition, the information regarding the allowable editing and the information regarding the unallowable editing may be displayed in different designs.

### <4. Second Embodiment>

### <Authenticity Determination in Partial Region >

Note that, in a case where the present technology described in the first embodiment is applied, content of editing performed in a partial region of a pre-edit image may be identified on the basis of the pre-edit image and a post-edit image, and whether or not to guarantee authenticity of the partial region of the post-edit image may be determined on the basis of the content of the editing. That is, authenticity may be determined for a region of the post-edit image. In other words, a local authenticity determination may be performed.

Note that, in the present specification, a partial region to be edited will also be referred to as an editing target region. Furthermore, a partial region to be subjected to an authenticity determination will also be referred to as an authenticity determination target region.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) the editing target region. Note that the editing target region may be any region as long as it is a partial region with respect to the entire region of an image, and a position, size, and a shape of the editing target region are arbitrary. In addition, a method of designating (a range of) the editing target region may be any method. For example, the editing target region may be designated using coordinates, or may be designated in units of predetermined blocks. In addition, the editing identification unit 213 may identify editing content of the editing target region. In a case where there is a plurality of editing target regions, the editing identification unit 213 may identify editing content for each editing target region.

Furthermore, the authenticity determination unit 214 may set such an editing target region as an authenticity determination target region and determine authenticity of the authenticity determination target region on the basis of editing content of the authenticity determination target region. In other words, the authenticity determination unit 214 may determine whether or not to guarantee authenticity of the editing target region, which is a partial region of the post-edit image to be edited. Note that, in a case where there is a plurality of authenticity determination target regions (editing target regions), the authenticity determination unit 214 may determine authenticity for each of the regions. Even in the case of the authenticity determination for such a partial region, the authenticity determination unit 214 may determine whether or not to guarantee the authenticity, or may determine an authenticity guarantee level.

Furthermore, a determination criterion for the authenticity determination is similar to that in the example described in the first embodiment. However, the determination criterion may be independently set for each authenticity determination target region.

Furthermore, in the authenticity determination result display information, an authenticity determination result for the authenticity determination target region may be shown. In a case where there is a plurality of authenticity determination target regions (editing target regions), an authenticity determination result may be shown for each of the regions.

Furthermore, the authenticity determination unit 214 may execute both the authenticity determination for the entire region of an image as in the example of the first embodiment and the authenticity determination for this partial region.

With such a configuration, the authenticity determination server 104 can guarantee authenticity of a partial region of an image subjected to allowable editing. Therefore, it is possible to suppress unnecessary strictness of requirements for an authenticity determination in a service for guaranteeing authenticity of an image. Therefore, it is possible to suppress decreases in practicality and convenience of such a service.

### <Flow of Authenticity Determination Processing>

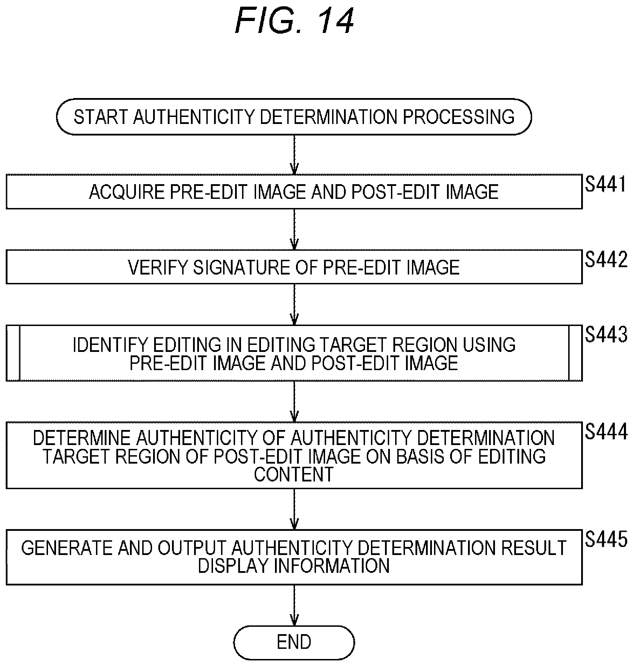

An example of a flow of the authenticity determination processing in the case of the second embodiment will be described with reference to a flowchart of Fig. 14.

When the authenticity determination processing is started, in step S441, the image acquisition unit 211 acquires an image file, and acquires a pre-edit image and a post-edit image stored in the image file. In step S442, the signature verification unit 212 verifies a signature of the pre-edit image stored in the image file.

In step S443, the editing identification unit 213 executes editing identification processing to identify editing in an editing target region using the pre-edit image and the post-edit image.

In step S444, the authenticity determination unit 214 determines authenticity of an authenticity determination target region of the post-edit image on the basis of the identified content of the editing.

In step S445, the authenticity determination result display information output unit 215 generates authenticity determination result display information on the basis of the determination result and outputs the authenticity determination result display information to another device.

When the processing of step S445 ends, the authenticity determination processing ends.

### <Flow of Editing Identification Processing>

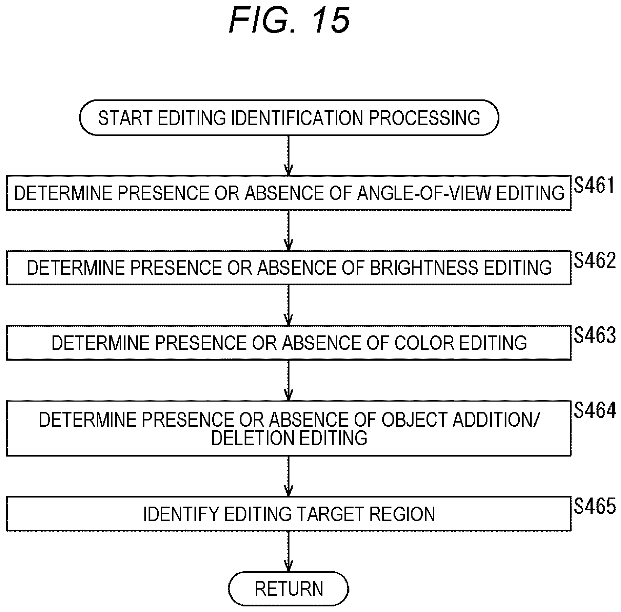

Next, an example of a flow of the editing identification processing executed in step S443 of Fig. 14 will be described with reference to a flowchart of Fig. 15.

When the editing identification processing is started, the editing identification unit 213 performs the processing of steps S461 to S464 in the same manner as the processing of steps S421 to S424 (Fig. 12).

In step S465, the editing identification unit 213 identifies an editing target region subjected to editing.

When the processing of step S465 ends, the editing identification processing ends, and the processing returns to Fig. 14.

Note that, also in this case, the content of editing identified in the editing identification processing may be any editing. In addition, a value of a parameter used in editing may be identified.

By executing the processing as described above, the authenticity determination server 104 can guarantee authenticity of a partial region of an image subjected to allowable editing. Therefore, it is possible to suppress unnecessary strictness of requirements for an authenticity determination in a service for guaranteeing authenticity of an image. Therefore, it is possible to suppress decreases in practicality and convenience of such a service.

### <Display Image Example>

In this case, the determination result display image may include a post-edit image and information indicating an editing target region, which is a partial region of the post-edit image subjected to editing. Furthermore, the determination result display image may further include information indicating content of the editing performed in the editing target region of the post-edit image.

In other words, the authenticity determination result display information in this case may include information for generating a determination result display image including the post-edit image and the information indicating the editing target region, which is the partial region of the post-edit image subjected to the editing. Furthermore, the authenticity determination result display information may include information for generating a determination result display image further including the information indicating the content of the editing performed in the editing target region of the post-edit image.

For example, it is assumed that the image editing device 103 displays a determination result display image. The authenticity determination result display unit 134 in this case may generate a display image including the post-edit image and the information indicating the editing target region, which is the partial region of the post-edit image subjected to the editing. Furthermore, the authenticity determination result display unit 134 may generate the display image further including the information indicating the content of the editing performed in the editing target region of the post-edit image.

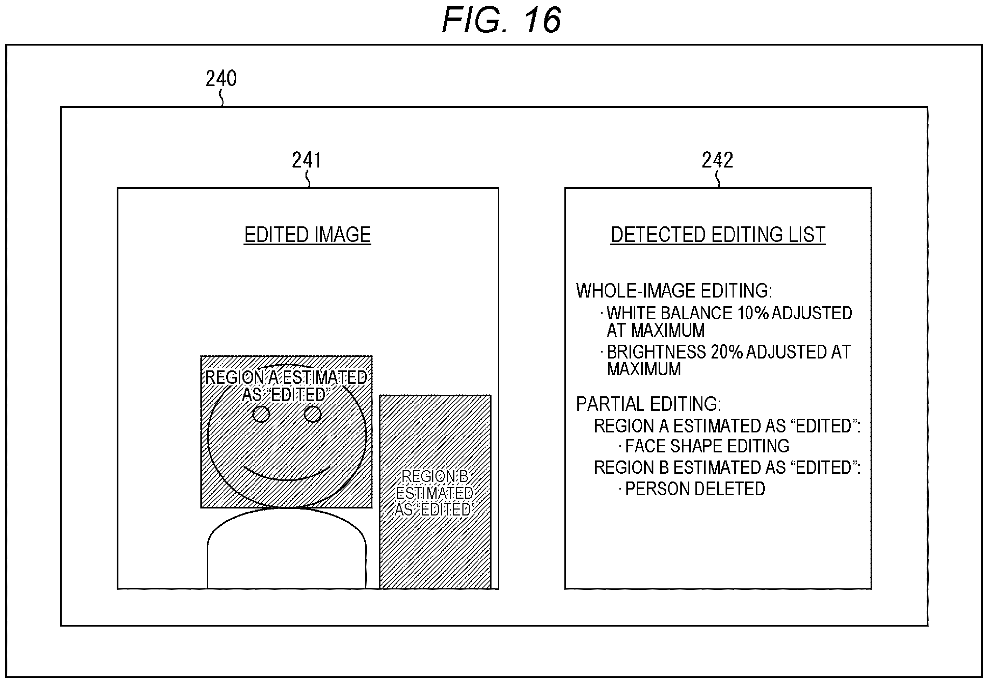

A determination result display image 240 illustrated in Fig. 16 is an example of a determination result display image in this case. As illustrated in Fig. 16, the determination result display image 240 may be provided with an area 241 showing a post-edit image and the editing target region. In the example of Fig. 16, the editing target region is indicated by a diagonal line pattern. Furthermore, the determination result display image 240 may be provided with a detected editing list 242 indicating content of editing performed in the editing target region of the post-edit image.

By displaying such a determination result display image, the image editing device 103 can notify that authenticity of a partial region of an image subjected to allowable editing is guaranteed. Therefore, it is possible to suppress unnecessary strictness of requirements for an authenticity determination in a service for guaranteeing authenticity of an image. Therefore, it is possible to suppress decreases in practicality and convenience of such a service.

Note that the detected editing list 242 may show types of editing and parameter values used in the editing. In addition, the detected editing list 242 may display information indicating content of editing for the entire region and information indicating content of editing for the partial region. In other words, the information indicating content of editing may be displayed while being classified into the editing for the entire region and the editing for the partial region. The information indicating the content of the editing for the partial region may be classified and displayed for each editing target region, or may be classified and displayed for each content of editing. In addition, the information indicating content of editing in the partial region may be associated with the editing target region shown in the region 241.

### <5. Third Embodiment>

### <Authenticity Determination in Image Composition Region>

Note that, in a case where the present technology described in the second embodiment is applied, an image composition region, which is a partial region in which images are composited may be identified on the basis of a pre-edit image and a post-edit image, and the image composition region may be determined as a region in which authenticity is not guaranteed.

Note that, in the present specification, an image to be composited with an editing target image will also be referred to as a composition target image. The composition target image may be any image. For example, the composition target image may include characters and marks such as a so-called logo mark and a caption. Furthermore, the composition target image may include an image different from the editing target image, such as a so-called picture-in-picture image. Furthermore, the composition target image may include a duplicated image of a partial region of the editing target image. Furthermore, the composition target image may include a cutout image cut out from the partial region of the editing target image.

Furthermore, in the present specification, processing of compositing a composition target image with an editing target image will also be referred to as image composition. The editing target region where the image composition is performed will also be referred to as an image composition region. Note that the editing target image after the image composition (that is, the post-edit image obtained as a result of the image composition) will also be referred to as a post-composition image.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) the image composition region, which is an editing target region where image composition is performed. Note that a position, size, and a shape of the image composition region are arbitrary. Furthermore, a method of designating (a range of) the image composition region may be any method. For example, the image composition region may be designated using coordinates, or may be designated in units of predetermined blocks. Furthermore, the editing identification unit 213 may identify the image composition region by any method.

Furthermore, the authenticity determination unit 214 may set such an image composition region as an authenticity determination target region and determine the authenticity determination target region as a region in which authenticity is not guaranteed. In other words, the authenticity determination unit 214 may determine that authenticity of the image composition region, which is a partial region of a post-edit image subjected to image composition, is not guaranteed. Note that, in a case where there is a plurality of authenticity determination target regions (image composition regions), the authenticity determination unit 214 may determine for each region that authenticity is not guaranteed.

Note that the authenticity determination unit 214 may execute both the authenticity determination for the entire region of an image as in the example of the first embodiment and the authenticity determination for this image composition region.

With such a configuration, the authenticity determination server 104 can prevent authenticity of an image composition region of an image from being guaranteed. Therefore, for example, it is possible to prevent authenticity from being guaranteed only for a portion in which a logo mark or a caption is composited. In other words, the authenticity determination server 104 can separately determine authenticity for other regions. Therefore, it is possible to suppress unnecessary strictness of requirements for an authenticity determination in a service for guaranteeing authenticity of an image. Therefore, it is possible to suppress decreases in practicality and convenience of such a service.

### <Flow of Authenticity Determination Processing>

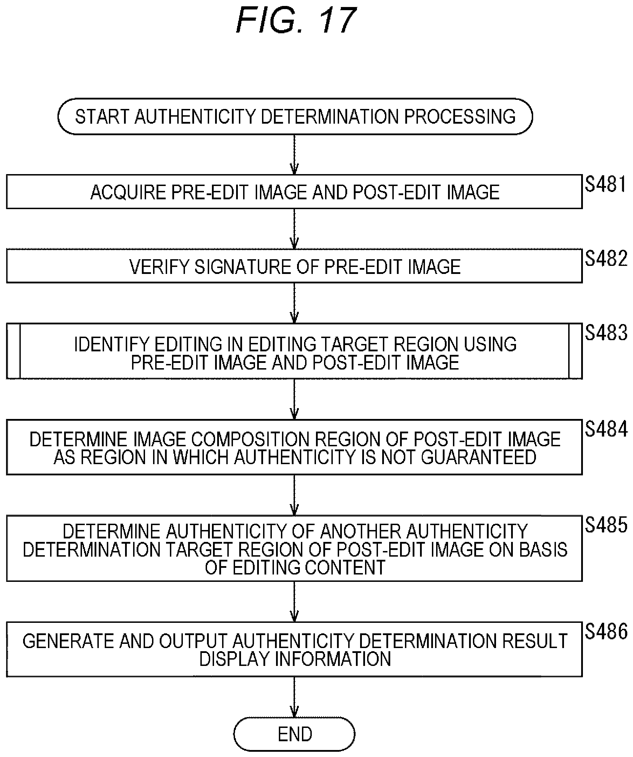

An example of a flow of the authenticity determination processing in the case of a third embodiment will be described with reference to a flowchart of Fig. 17.

When the authenticity determination processing is started, in step S481, the image acquisition unit 211 acquires an image file, and acquires a pre-edit image and a post-edit image stored in the image file. In step S482, the signature verification unit 212 verifies a signature of the pre-edit image stored in the image file.

In step S483, the editing identification unit 213 executes editing identification processing to identify editing in an editing target region using the pre-edit image and the post-edit image.

In step S484, the authenticity determination unit 214 determines an image composition region of the post-edit image as a region in which authenticity is not guaranteed.

In step S485, the authenticity determination unit 214 determines authenticity of another authenticity determination target region of the post-edit image on the basis of the identified content of the editing.

In step S486, the authenticity determination result display information output unit 215 generates authenticity determination result display information on the basis of the determination result and outputs the authenticity determination result display information to another device.

When the processing of step S486 ends, the authenticity determination processing ends.

### <Flow of Editing Identification Processing>

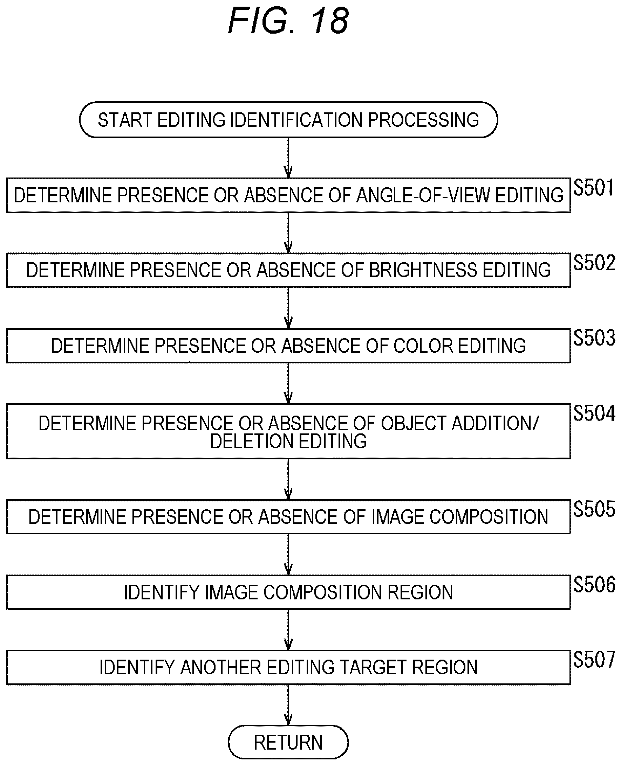

Next, an example of a flow of the editing identification processing executed in step S483 of Fig. 17 will be described with reference to a flowchart of Fig. 18.

When the editing identification processing is started, the editing identification unit 213 performs the processing of steps S501 to S504 in the same manner as the processing of steps S421 to S424 (Fig. 12).

In step S505, the editing identification unit 213 determines presence or absence of image composition. Note that a method of determining presence or absence of image composition may be any method.

In step S506, the editing identification unit 213 identifies an image composition region in which image composition has been performed.

In step S507, the editing identification unit 213 identifies another editing target region subjected to editing.

When the processing of step S507 ends, the editing identification processing ends, and the processing returns to Fig. 17.

Note that, also in this case, the content of editing identified in the editing identification processing may be any editing. In addition, a value of a parameter used in editing may be identified.

By executing the processing as described above, the authenticity determination server 104 can prevent authenticity of an image composition region of an image from being guaranteed. Therefore, for example, it is possible to prevent authenticity from being guaranteed only for a portion in which a logo mark or a caption is composited. In other words, the authenticity determination server 104 can separately determine authenticity for other regions. Therefore, it is possible to suppress unnecessary strictness of requirements for an authenticity determination in a service for guaranteeing authenticity of an image. Therefore, it is possible to suppress decreases in practicality and convenience of such a service.

### <Display Image Example>

In this case, the determination result display image may include a post-edit image and information indicating an image composition region, which is a partial region of the post-edit image subjected to image composition. Furthermore, the determination result display image may further include information indicating content of image composition performed in the image composition region of the post-edit image.

In other words, the authenticity determination result display information in this case may include information for generating a determination result display image including the post-edit image and information indicating the image composition region, which is a partial region of the post-edit image subjected to the image composition. Furthermore, the authenticity determination result display information may include information for generating a determination result display image further including information indicating content of image composition performed in the image composition region of the post-edit image.

For example, it is assumed that the image editing device 103 displays a determination result display image. The authenticity determination result display unit 134 in this case may generate a display image including a post-edit image and information indicating an image composition region, which is a partial region of the post-edit image subjected to image composition. Furthermore, the authenticity determination result display unit 134 may generate a display image further including information indicating content of the image composition performed in the image composition region of the post-edit image.

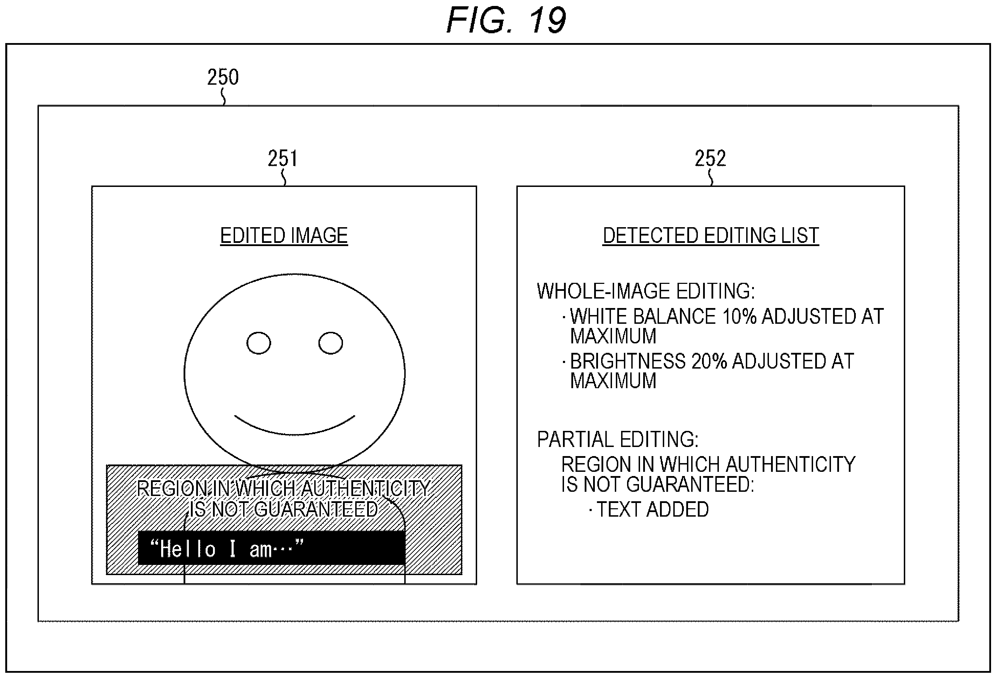

A determination result display image 250 illustrated in Fig. 19 is an example of a determination result display image in this case. As illustrated in Fig. 19, the determination result display image 250 may be provided with an area 251 indicating a post-edit image and an image composition region. In the example of Fig. 19, the image composition region is indicated by a diagonal line pattern. Furthermore, the determination result display image 250 may be provided with a detected editing list 252 indicating content of image composition performed in the image composition region of the post-edit image.

By displaying such a determination result display image, the image editing device 103 can notify that authenticity of an image composition region of an image is not guaranteed. Therefore, for example, it is possible to prevent authenticity from being guaranteed only for a portion in which a logo mark or a caption is composited. In other words, authenticity can be separately determined for other regions. Therefore, it is possible to suppress unnecessary strictness of requirements for an authenticity determination in a service for guaranteeing authenticity of an image. Therefore, it is possible to suppress decreases in practicality and convenience of such a service.

Note that a type of editing (for example, a type of image composition) and a parameter value used in the editing (for example, image composition) may be shown in the detected editing list 252. Furthermore, the detected editing list 252 may display information indicating content of editing for the entire region and information indicating content of image composition in the image composition region. In other words, information indicating content of editing may be displayed while being classified into the editing for the entire region and the editing for the partial region (for example, the image composition region). The information indicating the content of the image composition for the image composition region may be classified and displayed for each image composition region, or may be classified and displayed for each content of the image composition. Furthermore, the information indicating the content of the image composition for the image composition region may be associated with the image composition region shown in the region 251.

### <6. Fourth Embodiment>

### <Authenticity Determination in 2D Region>

Note that, in a case where the present technology described in the second embodiment is applied, a 2D region that is a partial region including a plane may be identified on the basis of a pre-edit image and a post-edit image, and the 2D region may be determined as a region in which authenticity is not guaranteed. In general, a 2D region including a plane is easier to edit than a portion including a 3D object (also referred to as a 3D region). Therefore, in general, malicious editing (unallowable editing) is more likely to be applied to a 2D region than to other regions. Therefore, the 2D region may be determined as a region in which authenticity is not guaranteed.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) a 2D region that is a partial region including a plane. Note that a position, size, and a shape of a 2D region are arbitrary. Furthermore, a method of designating (a range of) a 2D region may be any method. For example, a 2D region may be designated using coordinates, or may be designated in units of predetermined blocks. In addition, the editing identification unit 213 may identify a 2D region by any method.

Furthermore, the authenticity determination unit 214 may set such a 2D region as an authenticity determination target region and determine the authenticity determination target region as a region in which authenticity is not guaranteed. In other words, the authenticity determination unit 214 may determine that authenticity of a 2D region that is a partial region of a post-edit image including a plane is not guaranteed. Note that, in a case where there is a plurality of authenticity determination target regions (2D regions), the authenticity determination unit 214 may determine for each region that authenticity is not guaranteed.

Note that the authenticity determination unit 214 may execute both the authenticity determination for the entire region of an image as in the example of the first embodiment and the authenticity determination for this 2D region.

With such a configuration, the authenticity determination server 104 can prevent authenticity of a 2D region of an image from being guaranteed. Therefore, for example, it is possible to prevent authenticity from being guaranteed only for the 2D region. In other words, the authenticity determination server 104 can separately determine authenticity for other regions. Therefore, it is possible to suppress unnecessary strictness of requirements for an authenticity determination in a service for guaranteeing authenticity of an image. Therefore, it is possible to suppress decreases in practicality and convenience of such a service.

### <Flow of Authenticity Determination Processing>

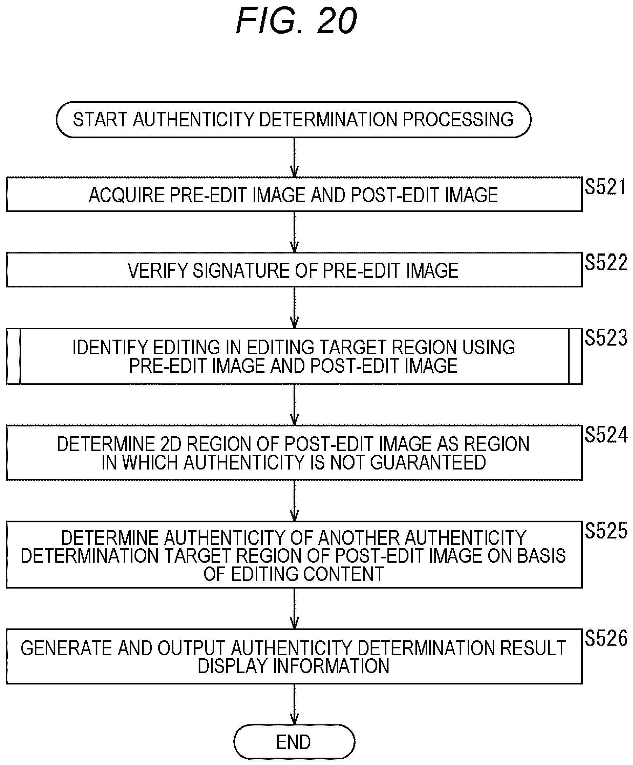

An example of a flow of the authenticity determination processing in the case of a fourth embodiment will be described with reference to a flowchart of Fig. 20.

When the authenticity determination processing is started, in step S521, the image acquisition unit 211 acquires an image file, and acquires a pre-edit image and a post-edit image stored in the image file. In step S522, the signature verification unit 212 verifies a signature of the pre-edit image stored in the image file.

In step S523, the editing identification unit 213 executes editing identification processing to identify editing in an editing target region using the pre-edit image and the post-edit image.

In step S524, the authenticity determination unit 214 determines a 2D region of the post-edit image as a region in which authenticity is not guaranteed.

In step S525, the authenticity determination unit 214 determines authenticity of another authenticity determination target region of the post-edit image on the basis of the identified content of the editing.

In step S526, the authenticity determination result display information output unit 215 generates authenticity determination result display information on the basis of the determination result and outputs the authenticity determination result display information to another device.

When the processing of step S526 ends, the authenticity determination processing ends.

### <Flow of Editing Identification Processing>

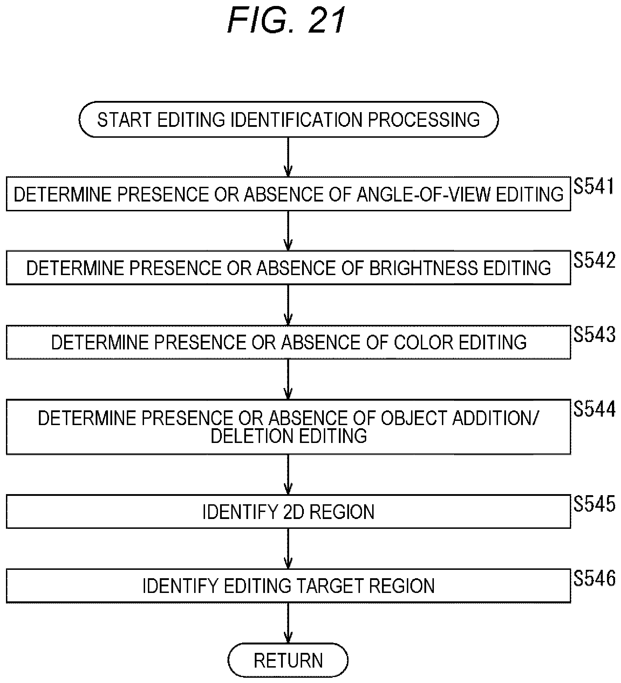

Next, an example of a flow of the editing identification processing executed in step S523 of Fig. 20 will be described with reference to a flowchart of Fig. 21.

When the editing identification processing is started, the editing identification unit 213 performs the processing of steps S541 to S544 in the same manner as the processing of steps S421 to S424 (Fig. 12).

In step S545, the editing identification unit 213 identifies a 2D region. The method of identifying a 2D region may be any method.

In step S546, the editing identification unit 213 identifies another editing target region subjected to editing.

When the processing of step S546 ends, the editing identification processing ends, and the processing returns to Fig. 20.

Note that, also in this case, the content of editing identified in the editing identification processing may be any editing. In addition, a value of a parameter used in editing may be identified.

By executing the processing as described above, the authenticity determination server 104 can prevent authenticity of a 2D region of an image from being guaranteed. In other words, the authenticity determination server 104 can separately determine authenticity for other regions. Therefore, it is possible to suppress unnecessary strictness of requirements for an authenticity determination in a service for guaranteeing authenticity of an image. Therefore, it is possible to suppress decreases in practicality and convenience of such a service.

### <Display Image Example>

In this case, the determination result display image may include information indicating a post-edit image and a 2D region, which is a partial region of the post-edit image including a plane. In other words, the authenticity determination result display information in this case may include information for generating a determination result display image including the post-edit image and the information indicating the 2D region, which is the partial region of the post-edit image including the plane.

For example, it is assumed that the image editing device 103 displays a determination result display image. In this case, the authenticity determination result display unit 134 may generate a display image including the post-edit image and the information indicating the 2D region, which is the partial region of the post-edit image including the plane.

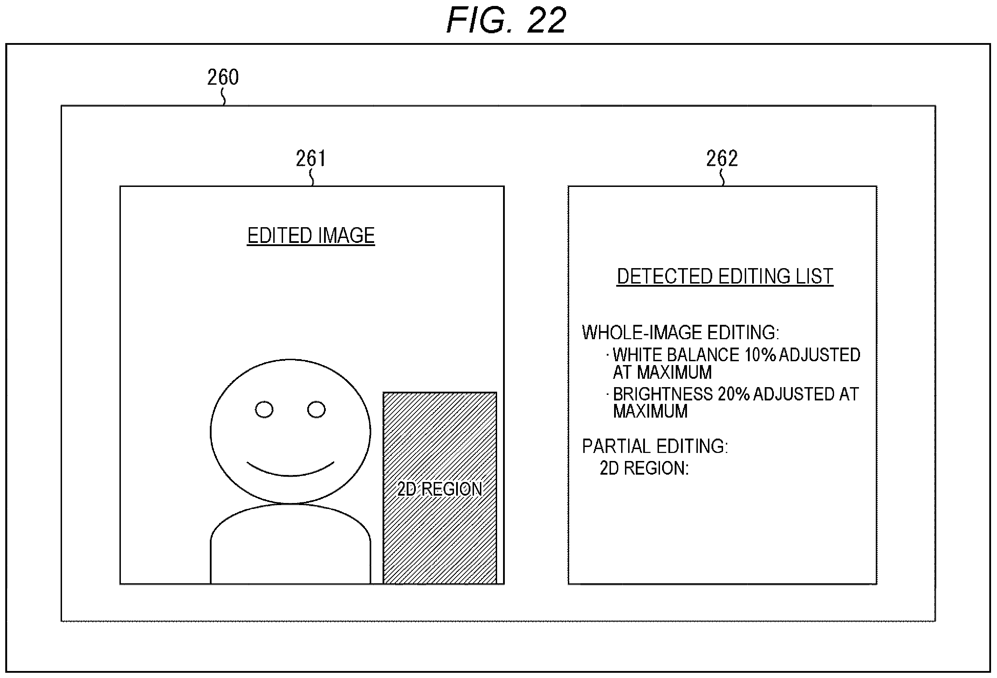

A determination result display image 260 illustrated in Fig. 22 is an example of a determination result display image in this case. As illustrated in Fig. 22, the determination result display image 260 may be provided with an area 261 in which a post-edit image and a 2D region are shown. In the example of Fig. 22, the 2D region is indicated by a diagonal line pattern. Furthermore, the determination result display image 260 may be provided with a detected editing list 262 indicating content of editing performed in the 2D region of the post-edit image.

By displaying such a determination result display image, the image editing device 103 can notify that authenticity of a 2D region of an image is not guaranteed. In other words, authenticity can be separately determined for other regions. Therefore, it is possible to suppress unnecessary strictness of requirements for an authenticity determination in a service for guaranteeing authenticity of an image. Therefore, it is possible to suppress decreases in practicality and convenience of such a service.

Note that the detected editing list 262 may show types of editing and parameter values used in the editing. Furthermore, the detected editing list 262 may display information indicating content of editing for the entire region and information indicating content of editing in the 2D region. In other words, the information indicating content of editing may be displayed while being classified into the editing for the entire region and the editing for the partial region. The information indicating the content of the image composition for the 2D region may be classified and displayed for each 2D region, or may be classified and displayed for each content of editing. In addition, the information indicating content of editing for the 2D region may be associated with the 2D region shown in the region 261.

### <7. Fifth Embodiment>

### <Verification of Editing History>

Note that, in a case where the present technology described in the second embodiment is applied, content of editing performed in a partial region of a pre-edit image may be identified on the basis of the pre-edit image and a post-edit image, and it may be determined whether or not the content of the editing corresponds to editing history information added to the pre-edit image. That is, whether or not to guarantee authenticity may be determined on the basis of whether or not editing actually performed in an editing target region matches content of the editing history information. In a case where there is a plurality of editing image regions, the verification of an editing history may be executed for each editing image region.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) the editing target region. Note that the editing target region may be any region as long as it is a partial region with respect to the entire region of an image, and a position, size, and a shape of the editing target region are arbitrary. In addition, a method of designating (a range of) the editing target region may be any method. For example, the editing target region may be designated using coordinates, or may be designated in units of predetermined blocks. In addition, the editing identification unit 213 may identify editing content of the editing target region. In a case where there is a plurality of editing target regions, the editing identification unit 213 may identify editing content for each editing target region.

Furthermore, the authenticity determination unit 214 may set such an editing target region as an authenticity determination target region and determine authenticity of the authenticity determination target region on the basis of editing content, an editing history, and the like of the authenticity determination target region. For example, the authenticity determination unit 214 may determine whether or not to guarantee authenticity according to whether or not editing content of the authenticity determination target region matches an editing history. In other words, in a case where content of editing of an editing target region between an original image and a pre-edit image corresponds to editing history information added to the pre-edit image, the authenticity determination unit 214 may determine that authenticity of the editing target region of a post-edit image is guaranteed. Furthermore, in a case where content of editing of an editing target region between an original image and a pre-edit image does not correspond to editing history information, the authenticity determination unit 214 may determine that authenticity of the editing target region of a post-edit image is not guaranteed.

Note that the authenticity determination unit 214 may derive an authenticity guarantee level on the basis of a degree of matching between editing content and an editing history.

Furthermore, a determination criterion for the authenticity determination is similar to that in the example described in the first embodiment. However, the determination criterion may be independently set for each authenticity determination target region.

Furthermore, in the authenticity determination result display information, an authenticity determination result for the authenticity determination target region may be shown. In a case where there is a plurality of authenticity determination target regions (editing target regions), an authenticity determination result may be shown for each of the regions.

Furthermore, the authenticity determination unit 214 may execute both the authenticity determination for the entire region of an image as in the example of the first embodiment and the authenticity determination for this partial region.

With such a configuration, the authenticity determination server 104 can guarantee authenticity of a partial region of an image subjected to allowable editing. In addition, content of editing can be checked on the basis of history data. Therefore, it is possible to suppress unnecessary strictness of requirements for an authenticity determination in a service for guaranteeing authenticity of an image. Therefore, it is possible to suppress decreases in practicality and convenience of such a service.

### <Flow of Authenticity Determination Processing>

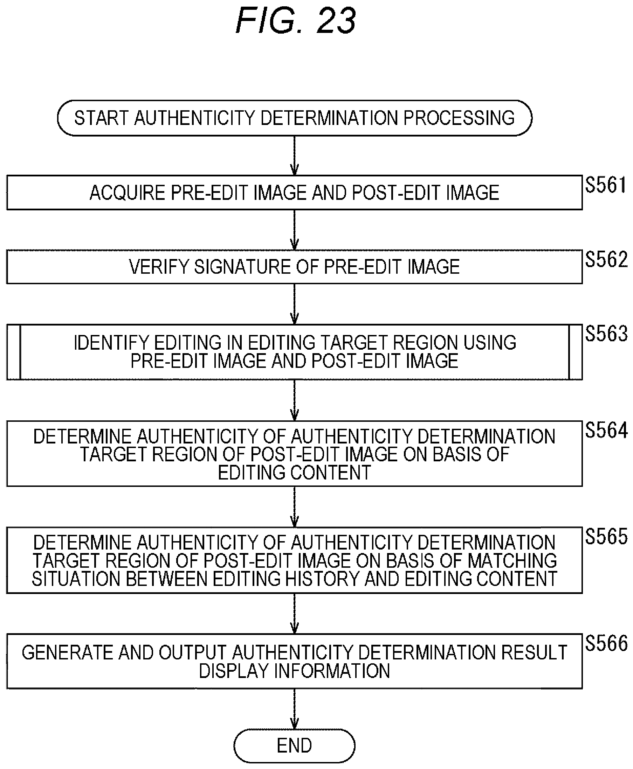

An example of a flow of the authenticity determination processing in the case of a fifth embodiment will be described with reference to a flowchart of Fig. 23.

When the authenticity determination processing is started, in step S561, the image acquisition unit 211 acquires an image file, and acquires a pre-edit image and a post-edit image stored in the image file. In step S562, the signature verification unit 212 verifies a signature of the pre-edit image stored in the image file.

In step S563, the editing identification unit 213 executes editing identification processing to identify editing in an editing target region using the pre-edit image and the post-edit image.

In step S564, the authenticity determination unit 214 determines authenticity of an authenticity determination target region of the post-edit image on the basis of the identified content of the editing.

In step S565, the authenticity determination unit 214 determines authenticity of the authenticity determination target region of the post-edit image on the basis of a matching situation between an editing history and editing content.

In step S566, the authenticity determination result display information output unit 215 generates authenticity determination result display information on the basis of the determination result and outputs the authenticity determination result display information to another device.

When the processing of step S566 ends, the authenticity determination processing ends.

### <Flow of Editing Identification Processing>

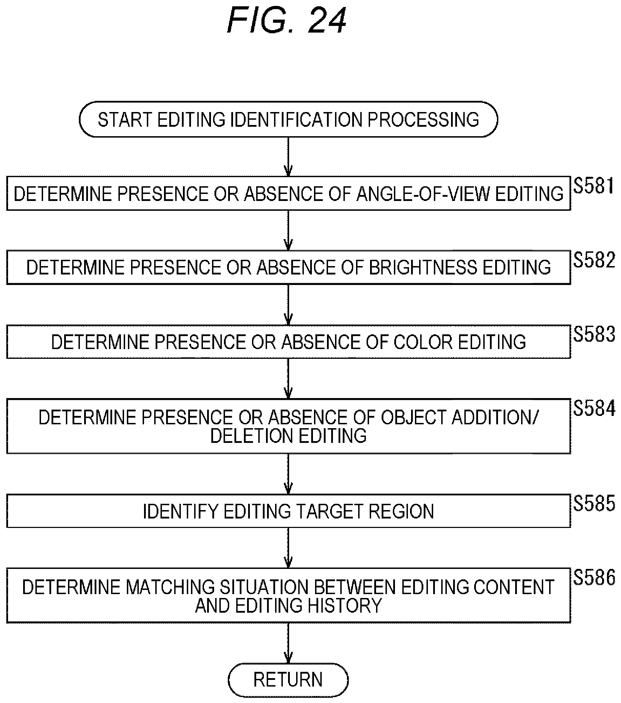

Next, an example of a flow of the editing identification processing executed in step S563 of Fig. 23 will be described with reference to a flowchart of Fig. 24.

When the editing identification processing is started, the editing identification unit 213 performs the processing of steps S581 to S584 in the same manner as the processing of steps S421 to S424 (Fig. 12).

In step S585, the editing identification unit 213 identifies an editing target region subjected to editing.

In step S586, the editing identification unit 213 determines a matching situation between the identified editing content and an editing history.

When the processing of step S586 ends, the editing identification processing ends, and the processing returns to Fig. 23.

Note that, also in this case, the content of editing identified in the editing identification processing may be any editing. In addition, a value of a parameter used in editing may be identified.

By executing the processing as described above, the authenticity determination server 104 can guarantee authenticity of a partial region of an image subjected to allowable editing. In addition, content of editing can be checked on the basis of history data. Therefore, it is possible to suppress unnecessary strictness of requirements for an authenticity determination in a service for guaranteeing authenticity of an image. Therefore, it is possible to suppress decreases in practicality and convenience of such a service.

### <Display Image Example>

In this case, the determination result display image may include information indicating content of editing and editing history information added to the post-edit image as metadata. Furthermore, these pieces of information may be information regarding the editing target region. When there is a plurality of editing target regions, these pieces of information may be information for each editing target region.

In other words, the authenticity determination result display information in this case may include information for generating the determination result display image including the information indicating the content of the editing and the editing history information added to the post-edit image as metadata.

For example, it is assumed that the image editing device 103 displays a determination result display image. In this case, the authenticity determination result display unit 134 may generate a display image including the information indicating the content of the editing and the editing history information added to the post-edit image as the metadata.

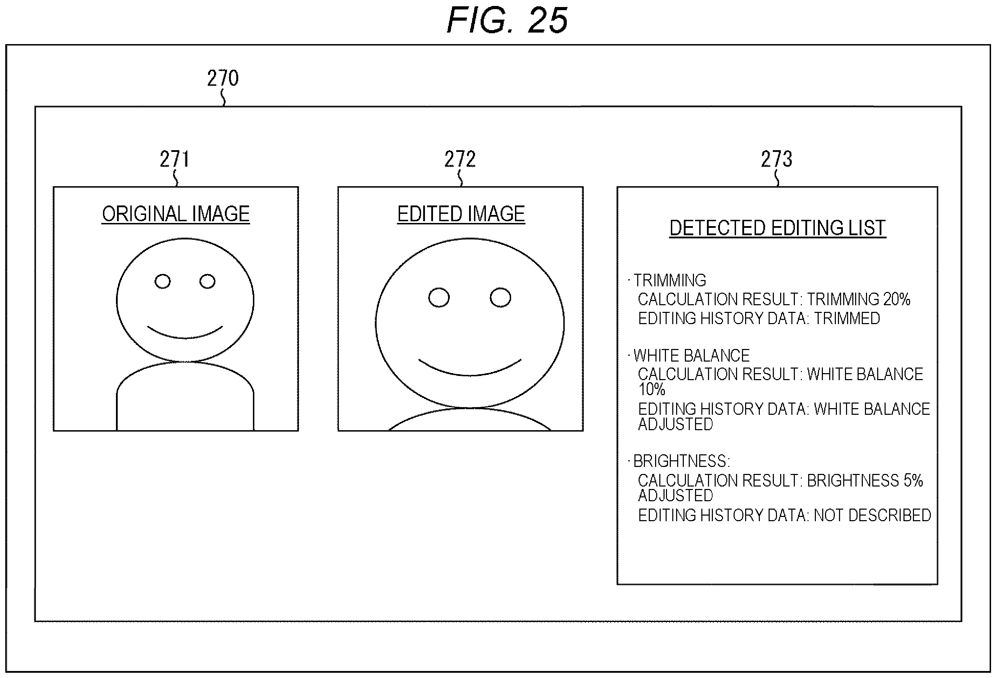

A determination result display image 270 illustrated in Fig. 25 is an example of a determination result display image in this case. As illustrated in Fig. 25, the determination result display image 270 may be provided with a detected editing list 273 showing information indicating content of editing and editing history information added to a post-edit image as metadata. In addition, the determination result display image 270 may be provided with a region 271 in which the original image is displayed. That is, the pre-edit image may be included in the determination result display image. In other words, the authenticity determination result display information may include information for generating a determination result display image including the pre-edit image. For example, in the image editing device 103, the authenticity determination result display unit 134 may generate a determination result display image further including the pre-edit image (for example, the region 271). In addition, the determination result display image 270 may be provided with an area 272 in which the post-edit image is displayed. That is, the post-edit image may be included in the determination result display image. In other words, the authenticity determination result display information may include information for generating the determination result display image including the post-edit image. For example, in the image editing device 103, the authenticity determination result display unit 134 may generate a determination result display image further including the post-edit image (for example, the region 272).

By displaying such a determination result display image, the image editing device 103 can notify of a matching situation between editing content and an editing history (whether or not they match or a degree of matching) or an authenticity determination result according to the matching situation. Therefore, it is possible to suppress unnecessary strictness of requirements for an authenticity determination in a service for guaranteeing authenticity of an image. Therefore, it is possible to suppress decreases in practicality and convenience of such a service.

Note that the detected editing list 273 may show types of editing and parameter values used in the editing. In addition, the detected editing list 273 may display information indicating content of editing for the entire region and information indicating content of editing for the partial region. In other words, the information indicating content of editing may be displayed while being classified into the editing for the entire region and the editing for the partial region. The information indicating the content of the editing for the partial region may be classified and displayed for each editing target region, or may be classified and displayed for each content of editing. In addition, information indicating the content of editing in the partial region may be associated with the editing target region.

### <8. Sixth Embodiment>

### <Authenticity Determination 1 in Face Region>

Note that, in a case where the present technology described in the second embodiment is applied, a face region that is a partial region including a face portion of a person, which is an editing target region, may be detected in a post-edit image, and whether or not to guarantee authenticity in the face region may be determined according to whether or not editing is a "change due to a health condition or the like".

Note that, in the present specification, a region of a head of a person including a face portion in an image will also be referred to as a face region. In general, it is not rare that correction editing for improving appearance is performed in the face region. In general, such editing does not change an approximate event (meaning of the image) indicated by the image, and thus can be regarded as "non-malicious editing". Therefore, even in a case where such editing is performed, authenticity may be guaranteed. That is, in a case where editing in the face region is a "change due to a health condition or the like", it may be determined that authenticity is guaranteed, and in a case where editing in the face region is another type of editing, it may be determined that authenticity is not guaranteed.

The "change due to a health condition or the like" may include, for example, editing for correcting skin roughness, editing for correcting an expression such as a lack of sleep, editing for suppressing or exaggerating sunburn or the like, and editing for changing a color, a shape, amount, or the like of hair. On the other hand, other types of editing may include, for example, editing for changing a contour and skeleton of the face, face replacement (editing for compositing the face of another person), and the like.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) a face region that is the editing target region. Note that a position, size, and a shape of a face region are arbitrary. Furthermore, a method of designating (a range of) a face region may be any method. For example, a face region may be designated using coordinates, or may be designated in units of predetermined blocks. In addition, the editing identification unit 213 may identify a face region by any method.

Furthermore, the authenticity determination unit 214 may set such a face region as an authenticity determination target region, and determine whether or not to guarantee authenticity on the basis of whether or not editing for the face region is a "change due to a health condition or the like". For example, in a case where editing of a face region that is a partial region including a face portion of a person is a change due to a health condition or the like of the person, the authenticity determination unit 214 may determine that authenticity of the face region of a post-edit image is guaranteed. Furthermore, in a case where editing for the face region is not a change due to a health condition or the like of the person, the authenticity determination unit 214 may determine that authenticity of the face region of the post-edit image is not guaranteed. Note that, in a case where there is a plurality of authenticity determination target regions (face regions), the authenticity determination unit 214 may determine whether or not to guarantee authenticity for each region.

Note that the authenticity determination unit 214 may execute both the authenticity determination for the entire region of an image as in the example of the first embodiment and the authenticity determination for this face region.

With such a configuration, the authenticity determination server 104 can determine authenticity of a face region of an image on the basis of a unique determination criterion suitable for the face region. In other words, the authenticity determination server 104 can determine authenticity by applying a determination criterion different from that for other regions. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Flow of Authenticity Determination Processing>

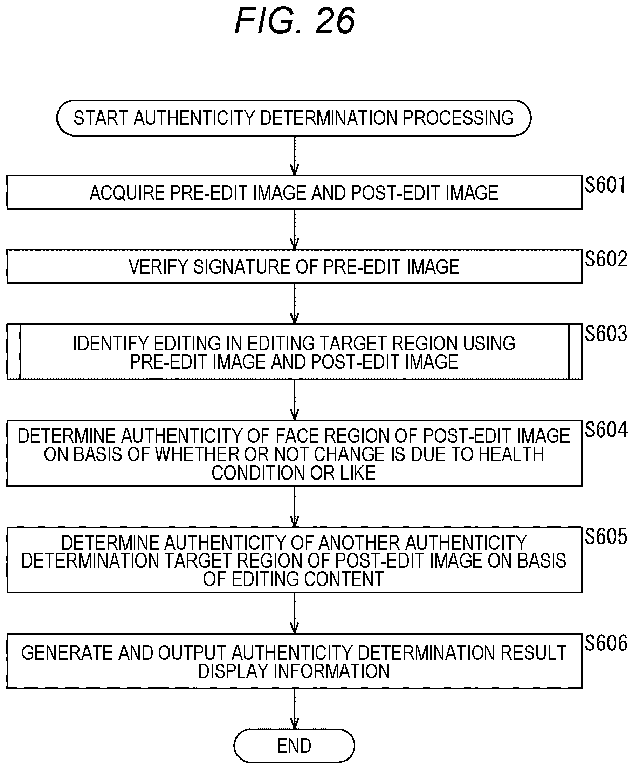

An example of a flow of the authenticity determination processing in the case of a fourth embodiment will be described with reference to a flowchart of Fig. 26.

When the authenticity determination processing is started, in step S601, the image acquisition unit 211 acquires an image file, and acquires a pre-edit image and a post-edit image stored in the image file. In step S602, the signature verification unit 212 verifies a signature of the pre-edit image stored in the image file. In step S603, the editing identification unit 213 executes editing identification processing to identify editing in an editing target region using the pre-edit image and the post-edit image.

In step S604, the authenticity determination unit 214 determines authenticity of a face region of the post-edit image on the basis of whether or not a change is due to a health condition or the like.

In step S605, the authenticity determination unit 214 determines authenticity of another authenticity determination target region of the post-edit image on the basis of the identified content of the editing.

In step S606, the authenticity determination result display information output unit 215 generates authenticity determination result display information on the basis of the determination result and outputs the authenticity determination result display information to another device.

When the processing of step S606 ends, the authenticity determination processing ends.

### <Flow of Editing Identification Processing>

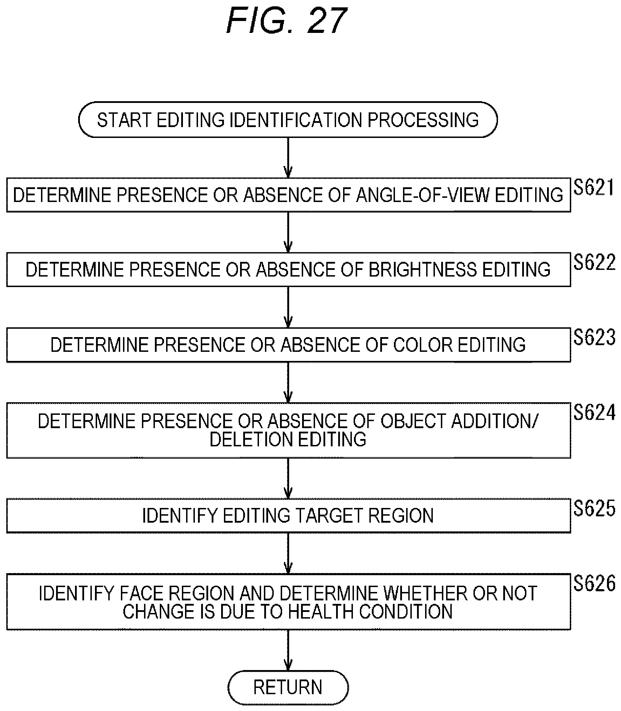

Next, an example of a flow of the editing identification processing executed in step S603 of Fig. 26 will be described with reference to a flowchart of Fig. 27.

When the editing identification processing is started, the editing identification unit 213 performs the processing of steps S621 to S624 in the same manner as the processing of steps S421 to S424 (Fig. 12).

In step S625, the editing identification unit 213 identifies an editing target region.

In step S626, the editing identification unit 213 identifies a face region and determines whether or not a change is due to a health condition.

When the processing of step S626 ends, the editing identification processing ends, and the processing returns to Fig. 26.

Note that, also in this case, the content of editing identified in the editing identification processing may be any editing. In addition, a value of a parameter used in editing may be identified.

By executing the processing as described above, the authenticity determination server 104 can determine authenticity of a face region of an image on the basis of a unique determination criterion suitable for the face region. In other words, the authenticity determination server 104 can determine authenticity by applying a determination criterion different from that for other regions. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Display Image Example>

In this case, the determination result display image may include a post-edit image and information indicating a face region, which is a partial region of the post-edit image including a face portion of a person. Furthermore, the determination result display image may further include information indicating content of the editing performed in the face region.

In other words, the authenticity determination result display information in this case may include information for generating a determination result display image including the post-edit image and the information indicating the face region included in the post-edit image. Furthermore, the authenticity determination result display information may include information for generating a determination result display image further including the information indicating the content of the editing performed in the face region.

For example, it is assumed that the image editing device 103 displays a determination result display image. In this case, the authenticity determination result display unit 134 may generate a display image including the post-edit image and the information indicating the face region, which is the partial region of the post-edit image including the face portion of the person. Furthermore, the authenticity determination result display unit 134 may generate the display image further including the information indicating the content of the editing performed in the face region of the post-edit image.

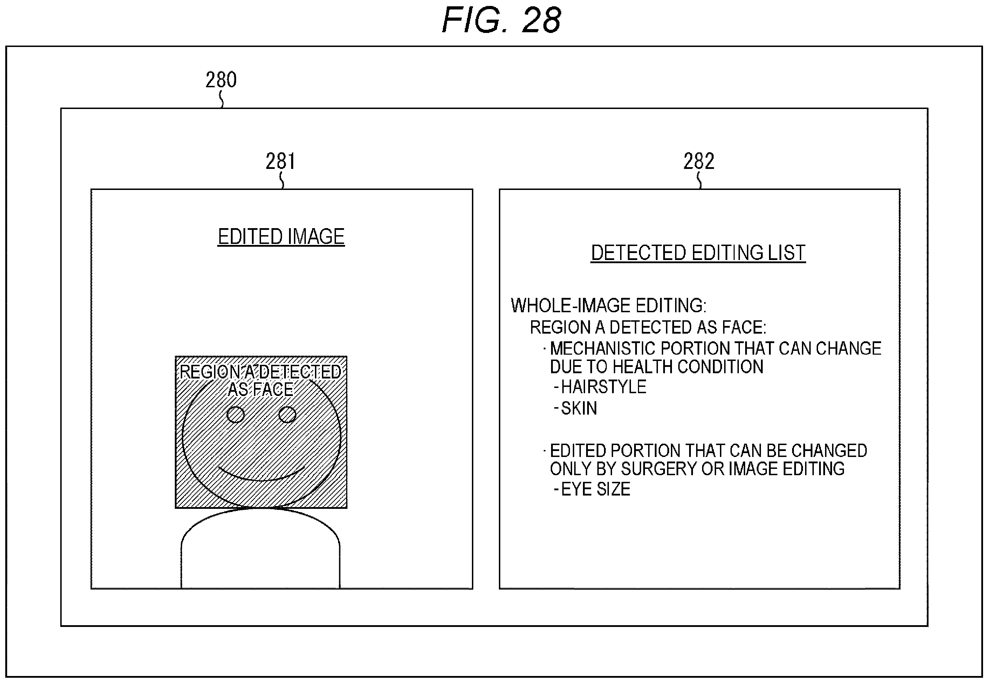

A determination result display image 280 illustrated in Fig. 28 is an example of a determination result display image in this case. As illustrated in Fig. 28, the determination result display image 280 may be provided with an area 281 in which a post-edit image and a face region are shown. In the example of Fig. 28, the face region is indicated by a diagonal line pattern. Furthermore, the determination result display image 280 may be provided with a detected editing list 282 indicating content of editing performed in the face region.

By displaying such a determination result display image, the image editing device 103 can notify of an authenticity determination result of a face region of an image determined on the basis of a unique determination criterion suitable for the face region. In other words, for other regions, the image editing device 103 can notify of an authenticity determination result determined by applying a different determination criterion. Therefore, the image editing device 103 can notify of an authenticity determination result determined by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

Note that the detected editing list 282 may show types of editing and parameter values used in the editing. The information indicating the content of the editing for the face region may be classified and displayed for each face region, or may be classified and displayed for each content of editing. In addition, the information indicating content of editing for the face region may be associated with the face region shown in the region 281.

### <9. Seventh Embodiment>

### <Authenticity Determination 2 in Face Region>

Note that, in a case where the present technology described in the second embodiment is applied, whether or not to guarantee authenticity of a face region of a post-edit image may be determined according to whether or not editing is "editing within a range that can be easily understood socially". That is, in a case where editing in the face region is "editing within a range that can be easily understood socially", it may be determined that authenticity is guaranteed, and in a case where editing in the face region is another type of editing, it may be determined that authenticity is not guaranteed.

Note that, in the present specification, the "editing within a range that can be easily understood in society" may include, for example, editing for applying makeup to a face region of a person. On the other hand, other types of editing may include, for example, editing for changing a contour and skeleton of the face, face replacement (editing for compositing the face of another person), and the like. In general, it is not rare that correction editing for improving appearance, equivalent to makeup, is performed in the face region. In general, such editing does not change an approximate event (meaning of the image) indicated by the image, and thus can be regarded as "non-malicious editing". Therefore, even in a case where such editing is performed, authenticity may be guaranteed.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) a face region that is the editing target region. Note that a position, size, and a shape of a face region are arbitrary. Furthermore, a method of designating (a range of) a face region may be any method. For example, a face region may be designated using coordinates, or may be designated in units of predetermined blocks. In addition, the editing identification unit 213 may identify a face region by any method.

Furthermore, the authenticity determination unit 214 may set such a face region as an authenticity determination target region, and determine whether or not to guarantee authenticity on the basis of whether or not editing for the face region is "editing within a range that can be easily understood socially". For example, in a case where editing in a face region, which is a partial region including a face portion of a person, is editing within a range that can be easily understood socially, the authenticity determination unit 214 may determine that authenticity of the face region of a post-edit image is guaranteed. Furthermore, in a case where editing in the face region is not editing within a range that can be easily understood socially, the authenticity determination unit 214 may determine that authenticity of the face region of the post-edit image is not guaranteed. Note that, in a case where there is a plurality of authenticity determination target regions (face regions), the authenticity determination unit 214 may determine whether or not to guarantee authenticity for each region.

Note that the authenticity determination unit 214 may execute both the authenticity determination for the entire region of an image as in the example of the first embodiment and the authenticity determination for this face region.

With such a configuration, the authenticity determination server 104 can determine authenticity of a face region of an image on the basis of a unique determination criterion suitable for the face region. In other words, the authenticity determination server 104 can determine authenticity of other regions by applying a different determination criterion. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Flow of Authenticity Determination Processing>

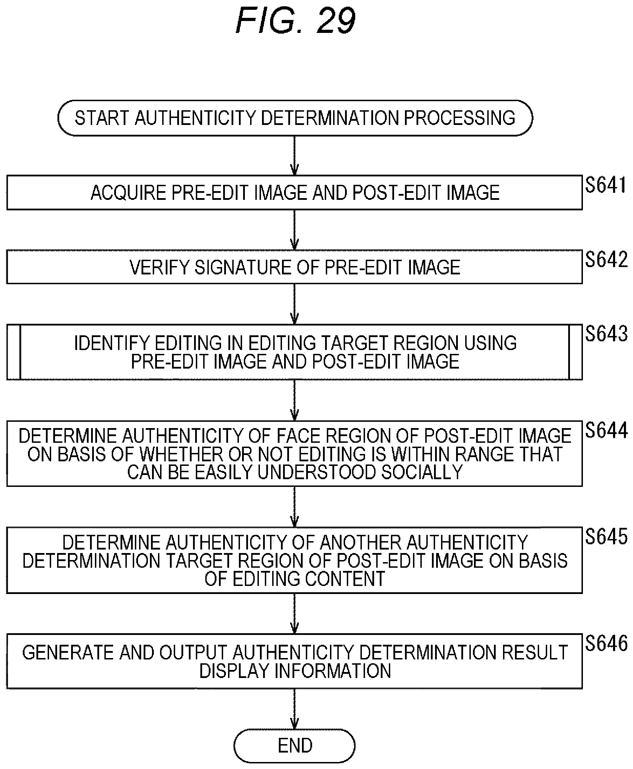

An example of a flow of the authenticity determination processing in the case of a fourth embodiment will be described with reference to a flowchart of Fig. 29.

When the authenticity determination processing is started, in step S641, the image acquisition unit 211 acquires an image file, and acquires a pre-edit image and a post-edit image stored in the image file. In step S642, the signature verification unit 212 verifies a signature of the pre-edit image stored in the image file. In step S643, the editing identification unit 213 executes editing identification processing to identify editing in an editing target region using the pre-edit image and the post-edit image.

In step S644, the authenticity determination unit 214 determines authenticity of a face region of the post-edit image on the basis of whether or not the editing is within a range that can be easily understood socially.

In step S645, the authenticity determination unit 214 determines authenticity of another authenticity determination target region of the post-edit image on the basis of the identified content of the editing.

In step S646, the authenticity determination result display information output unit 215 generates authenticity determination result display information on the basis of the determination result and outputs the authenticity determination result display information to another device.

When the processing of step S646 ends, the authenticity determination processing ends.

### <Flow of Editing Identification Processing>

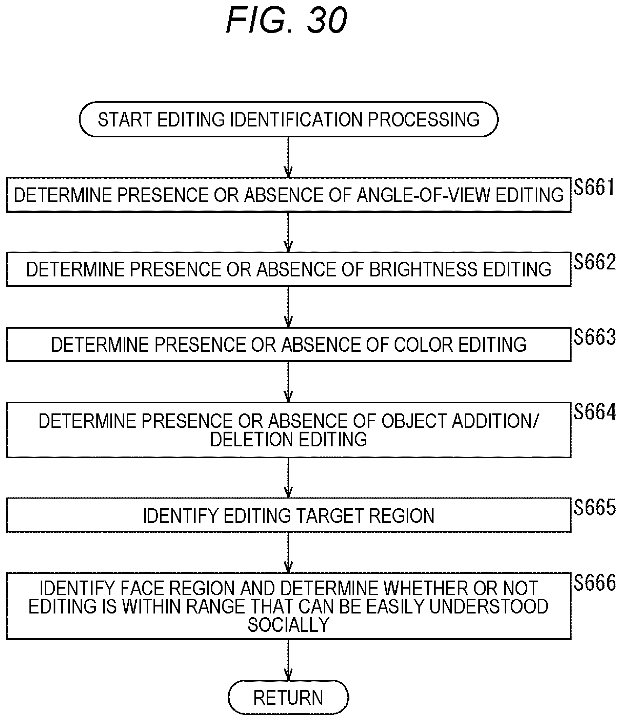

Next, an example of a flow of the editing identification processing executed in step S643 of Fig. 29 will be described with reference to a flowchart of Fig. 30.

When the editing identification processing is started, the editing identification unit 213 performs the processing of steps S661 to S664 in the same manner as the processing of steps S421 to S424 (Fig. 12).

In step S665, the editing identification unit 213 identifies an editing target region.

In step S666, the editing identification unit 213 identifies a face region and determines whether the editing is within a range that can be easily understood socially.

When the processing of step S666 ends, the editing identification processing ends, and the processing returns to Fig. 29.

Note that, also in this case, the content of editing identified in the editing identification processing may be any editing. In addition, a value of a parameter used in editing may be identified.

By executing the processing as described above, the authenticity determination server 104 can determine authenticity of a face region of an image on the basis of a unique determination criterion suitable for the face region. In other words, the authenticity determination server 104 can determine authenticity of other regions by applying a different determination criterion. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Display Image Example>

In this case, the determination result display image may include a post-edit image and information indicating a face region, which is a partial region of the post-edit image including a face portion of a person. Furthermore, the determination result display image may further include information indicating content of the editing performed in the face region.

In other words, the authenticity determination result display information in this case may include information for generating a determination result display image including the post-edit image and the information indicating the face region included in the post-edit image. Furthermore, the authenticity determination result display information may include information for generating a determination result display image further including the information indicating the content of the editing performed in the face region.

For example, it is assumed that the image editing device 103 displays a determination result display image. In this case, the authenticity determination result display unit 134 may generate a display image including the post-edit image and the information indicating the face region, which is the partial region of the post-edit image including the face portion of the person. Furthermore, the authenticity determination result display unit 134 may generate the display image further including the information indicating the content of the editing performed in the face region of the post-edit image.

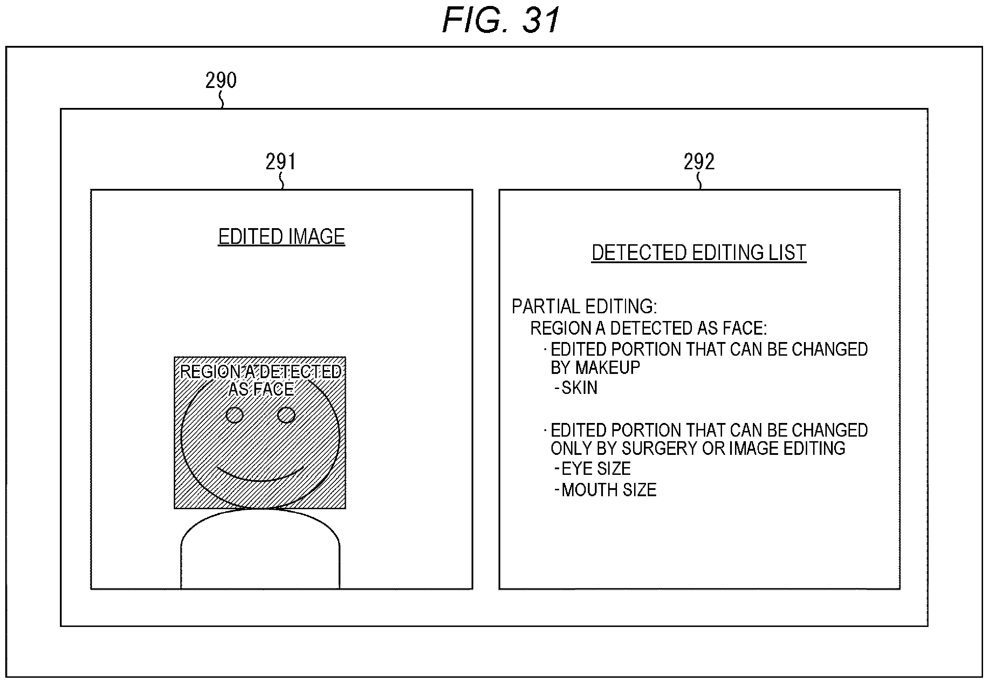

A determination result display image 290 illustrated in Fig. 31 is an example of a determination result display image in this case. As illustrated in Fig. 31, the determination result display image 290 may be provided with an area 291 in which a post-edit image and a face region are shown. In the example of Fig. 31, the face region is indicated by a diagonal line pattern. Furthermore, the determination result display image 290 may be provided with a detected editing list 292 indicating content of editing performed in the face region.

By displaying such a determination result display image, the image editing device 103 can notify of an authenticity determination result of a face region of an image determined on the basis of a unique determination criterion suitable for the face region. In other words, for other regions, the image editing device 103 can notify of an authenticity determination result determined by applying a different determination criterion. Therefore, the image editing device 103 can notify of an authenticity determination result determined by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

Note that the detected editing list 292 may show types of editing and parameter values used in the editing. The information indicating the content of the editing for the face region may be classified and displayed for each face region, or may be classified and displayed for each content of editing. In addition, the information indicating content of editing for the face region may be associated with the face region shown in the region 291.

### <10. Eighth Embodiment>

### <Authenticity Determination in Object Identification Information Region>

Note that, in a case where the present technology described in the second embodiment is applied, an object identification information region that is a partial region including object identification information and that is set as an editing target region may be detected in a post-edit image, and whether or not to guarantee authenticity of the object identification information region may be determined according to whether or not the editing is "editing without a change in the object identification information".

Note that, in the present specification, identification information for identifying an object will also be referred to as object identification information. For example, the object identification information may include a license plate of a vehicle. In addition, a region including the object identification information in a target image will also be referred to as an object identification information region.

In a case where a license plate of a vehicle is used as an example of the object identification information, the "editing involving a change in the object identification information" is editing for changing a vehicle number or the like written on the "license plate of the vehicle". Since the object identification information is information having a meaning, changing this information can be said to change an event indicated by an image. That is, the "editing involving a change in the object identification information" can also be said to be "malicious editing". On the other hand, in the case of the "editing without a change in the object identification information", since the object identification information does not change, it can be said that an approximate event indicated by an image does not change. That is, the "editing without a change in the object identification information" can also be said to be "non-malicious editing". Therefore, even in a case where such "editing without a change in the object identification information" is performed, authenticity may be guaranteed.

Note that the "editing without a change in the object identification information" may include, for example, image processing such as change of color or brightness, sharpness, and white balance adjustment.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) an object identification information region that is the editing target region. Note that a position, size, and a shape of an object identification information region are arbitrary. Furthermore, a method of designating (a range of) the object identification information region may be any method. For example, an object identification information region may be designated using coordinates, or may be designated in units of predetermined blocks. In addition, the editing identification unit 213 may identify an object identification information region by any method.

Furthermore, the authenticity determination unit 214 may set such an object identification information region as an authenticity determination target region, and determine whether or not to guarantee authenticity on the basis of whether or not to guarantee editing for the object identification information region is "editing without a change in the object identification information". For example, in a case where editing for an object identification information region that is a partial region including object identification information is editing without a change in the object identification information, the authenticity determination unit 214 may determine that authenticity of the object identification information region of a post-edit image is guaranteed. Furthermore, in a case where the editing in the object identification information region is editing involving a change in the object identification information, the authenticity determination unit 214 may determine that the authenticity of the object identification information region of the post-edit image is not guaranteed.

Note that the authenticity determination unit 214 may execute both the authenticity determination for the entire region of an image as in the example of the first embodiment and the authenticity determination for this object identification information region.

With such a configuration, the authenticity determination server 104 can determine authenticity of an object identification information region of an image on the basis of a unique determination criterion suitable for the object identification information region. In other words, the authenticity determination server 104 can determine authenticity by applying a determination criterion different from that for other regions. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Flow of Authenticity Determination Processing>

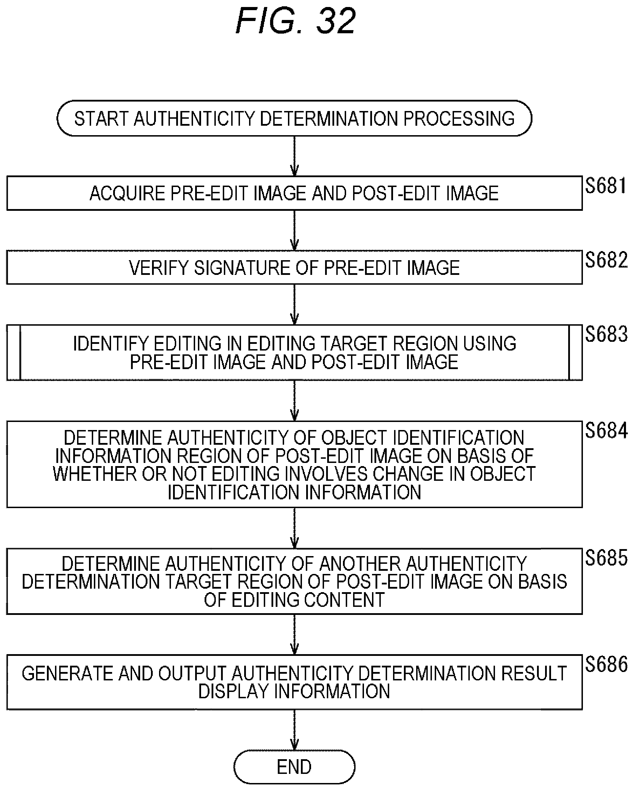

An example of a flow of the authenticity determination processing in the case of a fourth embodiment will be described with reference to a flowchart of Fig. 32.

When the authenticity determination processing is started, in step S681, the image acquisition unit 211 acquires an image file, and acquires a pre-edit image and a post-edit image stored in the image file. In step S682, the signature verification unit 212 verifies a signature of the pre-edit image stored in the image file. In step S683, the editing identification unit 213 executes editing identification processing to identify editing in an editing target region using the pre-edit image and the post-edit image.

In step S684, the authenticity determination unit 214 determines authenticity of an object identification information region of the post-edit image on the basis of whether or not the editing involves a change in the object identification information.

In step S685, the authenticity determination unit 214 determines authenticity of another authenticity determination target region of the post-edit image on the basis of the identified content of the editing.

In step S686, the authenticity determination result display information output unit 215 generates authenticity determination result display information on the basis of the determination result and outputs the authenticity determination result display information to another device.

When the processing of step S686 ends, the authenticity determination processing ends.

### <Flow of Editing Identification Processing>

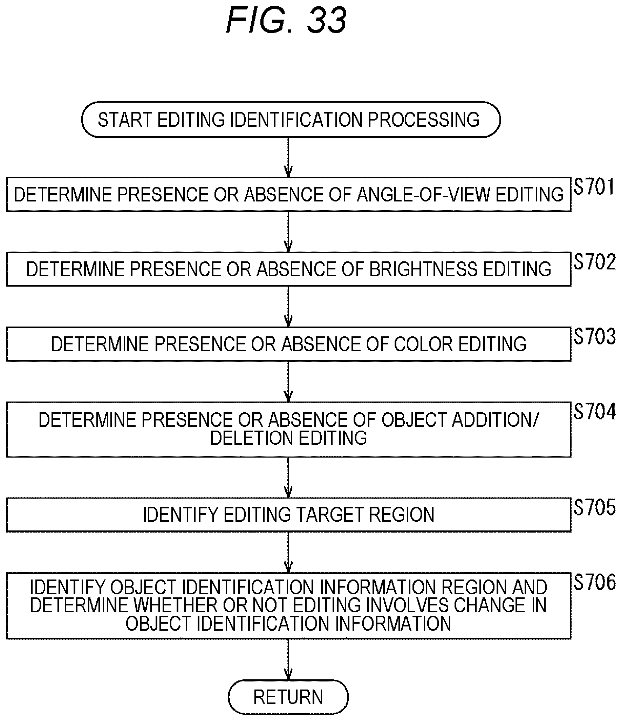

Next, an example of a flow of the editing identification processing executed in step S683 of Fig. 32 will be described with reference to a flowchart of Fig. 33.

When the editing identification processing is started, the editing identification unit 213 performs the processing of steps S701 to S704 in the same manner as the processing of steps S421 to S424 (Fig. 12).

In step S705, the editing identification unit 213 identifies an editing target region.

In step S706, the editing identification unit 213 identifies an object identification information region and determines whether the editing involves a change in the object identification information.

When the processing of step S706 ends, the editing identification processing ends, and the processing returns to Fig. 32.

Note that, also in this case, the content of editing identified in the editing identification processing may be any editing. In addition, a value of a parameter used in editing may be identified.

By executing the processing as described above, the authenticity determination server 104 can determine authenticity of an object identification information region of an image on the basis of a unique determination criterion suitable for the object identification information region. In other words, the authenticity determination server 104 can determine authenticity by applying a determination criterion different from that for other regions. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Display Image Example>

In this case, the determination result display image may include a post-edit image and information indicating an object identification information region, which is a partial region of the post-edit image including object identification information. In addition, the determination result display image may further include information indicating content of editing performed in the object identification information region.

In other words, the authenticity determination result display information in this case may include information for generating a determination result display image including the post-edit image and the information indicating the object identification information region included in the post-edit image. Furthermore, the authenticity determination result display information may include information for generating a determination result display image further including information indicating the content of the editing performed in the object identification information region.

For example, it is assumed that the image editing device 103 displays a determination result display image. In this case, the authenticity determination result display unit 134 may generate a display image including the post-edit image and the information indicating the object identification information region, which is the partial region of the post-edit image including the object identification information. Furthermore, the authenticity determination result display unit 134 may generate the display image further including the information indicating the content of the editing performed in the object identification information region of the post-edit image.

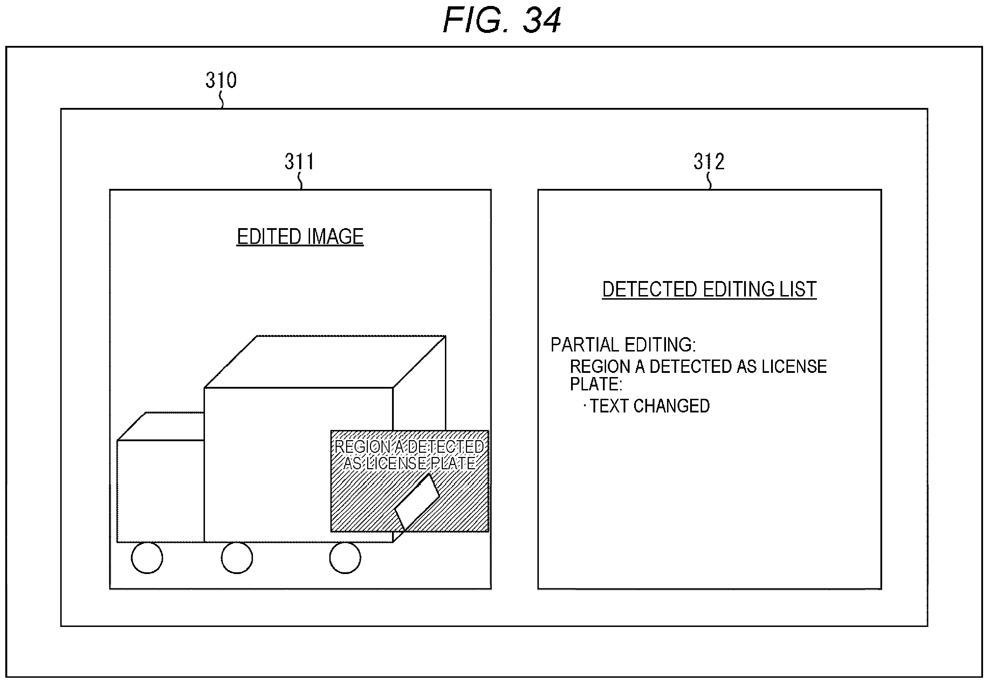

A determination result display image 310 illustrated in Fig. 34 is an example of a determination result display image in this case. As illustrated in Fig. 34, the determination result display image 310 may be provided with an area 311 in which a post-edit image and an object identification information region are shown. In the example of Fig. 34, the object identification information region is indicated by a diagonal line pattern. Furthermore, the determination result display image 310 may be provided with a detected editing list 312 indicating content of editing performed in the object identification information region.

By displaying such a determination result display image, the image editing device 103 can notify of an authenticity determination result of an object identification information region of an image determined on the basis of a unique determination criterion suitable for the object identification information region. In other words, for other regions, the image editing device 103 can notify of an authenticity determination result determined by applying a different determination criterion. Therefore, the image editing device 103 can notify of an authenticity determination result determined by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

Note that the detected editing list 312 may show types of editing and parameter values used in the editing. Furthermore, the information indicating the content of the editing for the object identification information region may be classified and displayed for each object identification information region, or may be classified and displayed for each content of editing. In addition, the information indicating content of editing for the object identification information region may be associated with the object identification information region shown in the region 311.

### <11. Ninth Embodiment>

### <Authenticity Determination in Person Identification Information Region>

Note that, in a case where the present technology described in the second embodiment is applied, a person identification information region that is a partial region including person identification information and that is set as an editing target region may be detected in a post-edit image, and whether or not to guarantee authenticity of the person identification information region may be determined according to whether or not the editing is "editing without a change in the person identification information".

Note that, in the present specification, identification information for identifying a person will also be referred to as person identification information. For example, the person identification information may include an identification card of a person. In addition, a region including the person identification information in a target image will also be referred to as a person identification information region.

In a case where an identification card is used as an example of the person identification information, "editing involving a change in the person identification information" is editing for changing a name, an identification number, or the like of an individual described in the "identification card". Since the person identification information is information having a meaning, changing this information can be said to change an event indicated by an image. That is, the "editing involving a change in the person identification information" can also be said to be "malicious editing". On the other hand, in the case of the "editing without a change in the person identification information", since the person identification information does not change, it can be said that an approximate event indicated by an image does not change. That is, the "editing without a change in the person identification information" can also be said to be "non-malicious editing". Therefore, even in a case where such "editing without a change in the person identification information" is performed, authenticity may be guaranteed.

Note that the "editing without a change in the person identification information" may include, for example, image processing such as change of color or brightness, sharpness, and white balance adjustment.

Configuration of the authenticity determination system 100 and a processing flow in this case are similar to those in the example described in the first embodiment. Furthermore, configuration of the authenticity determination server 104 in this case is similar to that in the example (Fig. 10) described in the first embodiment.

However, the editing identification unit 213 may identify (a position, size, a shape, and the like of) a person identification information region that is the editing target region. Note that a position, size, and a shape of a person identification information region are arbitrary. Furthermore, a method of designating (a range of) the person identification information region may be any method. For example, a person identification information region may be designated using coordinates, or may be designated in units of predetermined blocks. In addition, the editing identification unit 213 may identify a person identification information region by any method.

Furthermore, the authenticity determination unit 214 may set such a person identification information region as an authenticity determination target region, and determine whether or not to guarantee authenticity on the basis of whether or not editing for the person identification information region is "editing without a change in the person identification information". For example, in a case where editing for a person identification information region that is a partial region including person identification information is editing without a change in the person identification information, the authenticity determination unit 214 may determine that authenticity of the person identification information region of a post-edit image is guaranteed. Furthermore, in a case where the editing in the person identification information region is editing involving a change in the person identification information, the authenticity determination unit 214 may determine that the authenticity of the person identification information region of the post-edit image is not guaranteed.

Note that the authenticity determination unit 214 may execute both the authenticity determination for the entire region of an image as in the example of the first embodiment and the authenticity determination for this person identification information region.

With such a configuration, the authenticity determination server 104 can determine authenticity of a person identification information region of an image on the basis of a unique determination criterion suitable for the person identification information region. In other words, the authenticity determination server 104 can determine authenticity by applying a determination criterion different from that for other regions. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Flow of Authenticity Determination Processing>

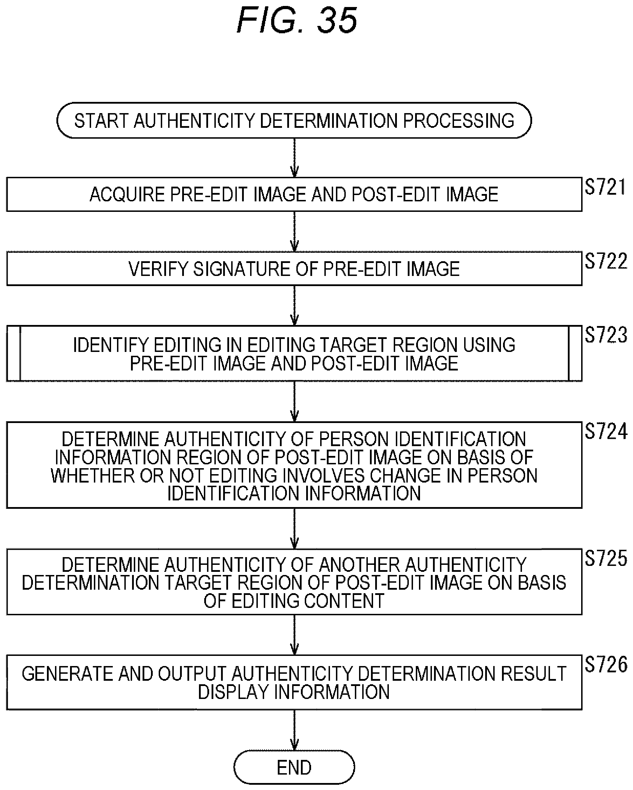

An example of a flow of the authenticity determination processing in the case of a fourth embodiment will be described with reference to a flowchart of Fig. 35.

When the authenticity determination processing is started, in step S721, the image acquisition unit 211 acquires an image file, and acquires a pre-edit image and a post-edit image stored in the image file. In step S722, the signature verification unit 212 verifies a signature of the pre-edit image stored in the image file. In step S723, the editing identification unit 213 executes editing identification processing to identify editing in an editing target region using the pre-edit image and the post-edit image.

In step S724, the authenticity determination unit 214 determines authenticity of a person identification information region of the post-edit image on the basis of whether or not the editing involves a change in the person identification information.

In step S725, the authenticity determination unit 214 determines authenticity of another authenticity determination target region of the post-edit image on the basis of the identified content of the editing.

In step S726, the authenticity determination result display information output unit 215 generates authenticity determination result display information on the basis of the determination result and outputs the authenticity determination result display information to another device.

When the processing of step S726 ends, the authenticity determination processing ends.

### <Flow of Editing Identification Processing>

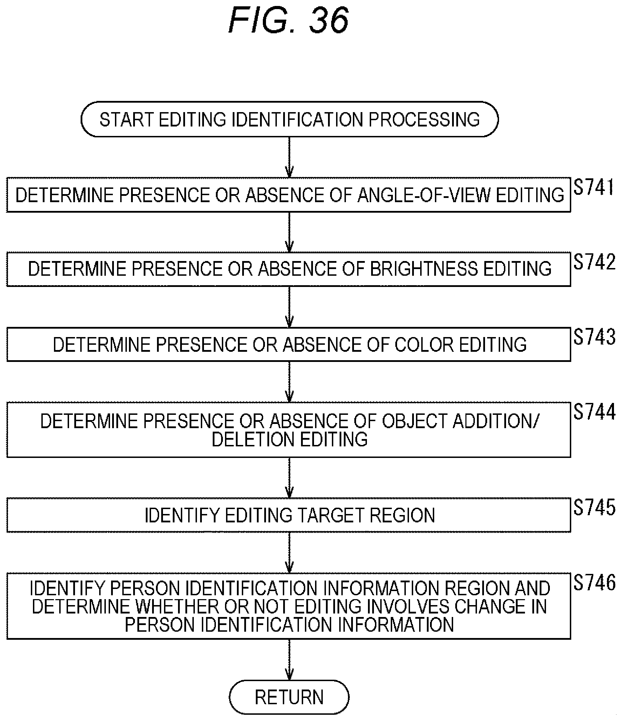

Next, an example of a flow of the editing identification processing executed in step S723 of Fig. 35 will be described with reference to a flowchart of Fig. 36.

When the editing identification processing is started, the editing identification unit 213 performs the processing of steps S741 to S744 in the same manner as the processing of steps S421 to S424 (Fig. 12).

In step S745, the editing identification unit 213 identifies an editing target region.

In step S746, the editing identification unit 213 identifies a person identification information region and determines whether or not the editing involves a change in the person identification information.

When the processing of step S746 ends, the editing identification processing ends, and the processing returns to Fig. 35.

Note that, also in this case, the content of editing identified in the editing identification processing may be any editing. In addition, a value of a parameter used in editing may be identified.

By executing the processing as described above, the authenticity determination server 104 can determine authenticity of a person identification information region of an image on the basis of a unique determination criterion suitable for the person identification information region. In other words, the authenticity determination server 104 can determine authenticity of other regions by applying a different determination criterion. Therefore, the authenticity determination server 104 can determine authenticity by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

### <Display Image Example>

In this case, the determination result display image may include a post-edit image and information indicating a person identification information region, which is a partial region of the post-edit image including person identification information. In addition, the determination result display image may further include information indicating content of editing performed in the person identification information region.

In other words, the authenticity determination result display information in this case may include information for generating a determination result display image including the post-edit image and the information indicating the person identification information region included in the post-edit image. Furthermore, the authenticity determination result display information may include information for generating a determination result display image further including information indicating the content of the editing performed in the person identification information region.

For example, it is assumed that the image editing device 103 displays a determination result display image. In this case, the authenticity determination result display unit 134 may generate a display image including the post-edit image and the information indicating the person identification information region, which is the partial region of the post-edit image including the person identification information. Furthermore, the authenticity determination result display unit 134 may generate the display image further including the information indicating the content of the editing performed in the person identification information region of the post-edit image.

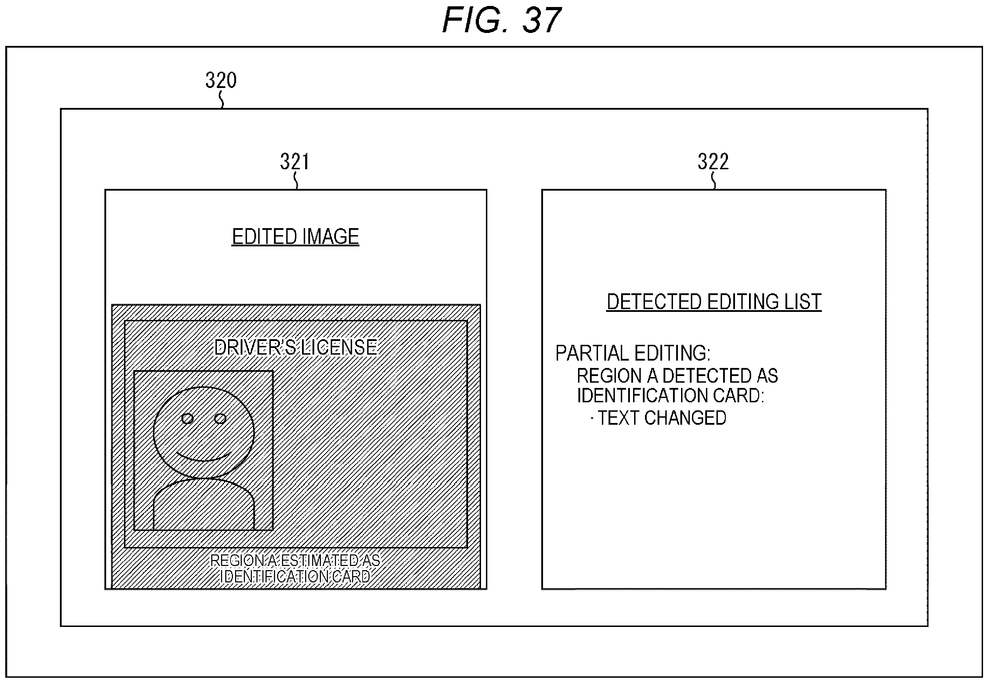

A determination result display image 320 illustrated in Fig. 37 is an example of a determination result display image in this case. As illustrated in Fig. 37, the determination result display image 320 may be provided with an area 321 in which a post-edit image and a person identification information region are shown. In the example of Fig. 37, the person identification information region is indicated by a diagonal line pattern. Furthermore, the determination result display image 320 may be provided with a detected editing list 322 indicating content of editing performed in the person identification information region.

By displaying such a determination result display image, the image editing device 103 can notify of an authenticity determination result of a person identification information region of an image determined on the basis of a unique determination criterion suitable for the person identification information region. In other words, for other regions, the image editing device 103 can notify of an authenticity determination result determined by applying a different determination criterion. Therefore, the image editing device 103 can notify of an authenticity determination result determined by applying a more appropriate determination criterion to content of an editing target region. Therefore, it is possible to further suppress unnecessary strictness of requirements for an authenticity determination in a service for guaranteeing authenticity of an image. Therefore, it is possible to further suppress decreases in practicality and convenience of such a service.

Note that the detected editing list 322 may show types of editing and parameter values used in the editing. Furthermore, the information indicating the content of the editing for the person identification information region may be classified and displayed for each person identification information region, or may be classified and displayed for each content of editing. In addition, the information indicating content of editing for the person identification information region may be associated with the person identification information region shown in the region 321.

### <12. Tenth Embodiment>

### <Request to Generate Verification Web Page >

Note that, in a case where the present technology described in the second embodiment is applied, the authenticity determination result display information may be published as a verification Web page. Furthermore, an original image may be hidden in the verification Web page.

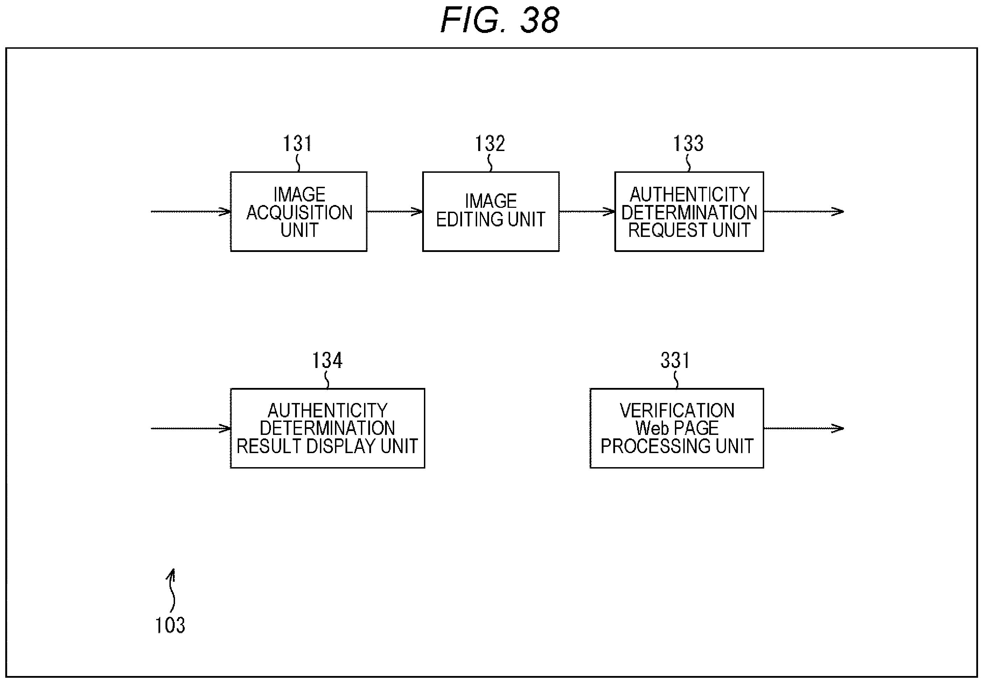

This verification Web page is published by the Web server 105 at a predetermined URL. The image editing device 103 may request generation of the URL. In this case, the image editing device 103 has a configuration as illustrated in Fig. 38. That is, the image editing device 103 includes a verification Web page processing unit 331 in addition to the configuration described with reference to Fig. 2.

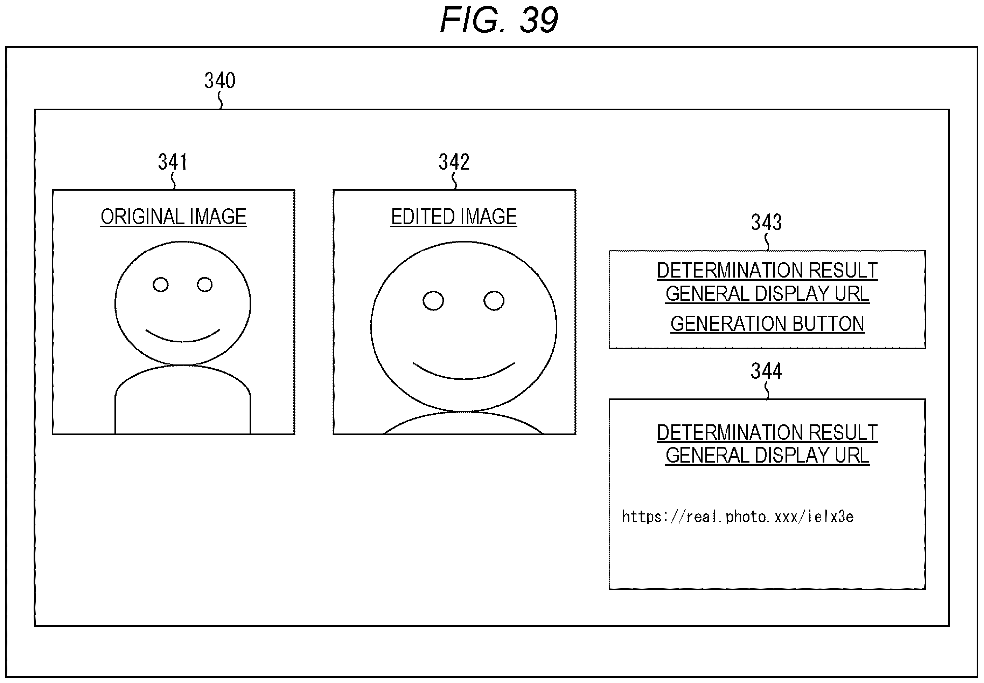

The verification Web page processing unit 331 executes processing related to a request to generate a verification Web page. For example, the verification Web page processing unit 331 requests the authenticity determination server 104 to generate a verification Web page. The verification Web page processing unit 331 makes this request on the basis of, for example, a user instruction. For example, the verification Web page processing unit 331 may display a GUI screen 340 as illustrated in Fig. 39 on the display device, and receive a URL generation instruction from the user on the GUI screen 340.

As illustrated in Fig. 39, the GUI screen 340 is provided with a GUI button 343 for receiving a user instruction. In the case of the example of Fig. 39, the GUI button 343 is described as a "determination result general display URL generation button", and it is indicated that this is a GUI button for receiving an instruction to generate a URL for publishing the verification Web page. For example, when the user presses the GUI button 343, the verification Web page processing unit 331 receives the user instruction. On the basis of the instruction, the verification Web page processing unit 331 requests the authenticity determination server 104 to generate a URL for publishing the verification Web page.

Furthermore, the GUI screen 340 is provided with a URL display field 344, and displays a "determination result general display URL" generated on the basis of the above-described request. With this display, the user can grasp the URL at which the verification Web page is to be published.

Furthermore, the GUI screen 340 may be provided with an area 342 in which a post-edit image as an authenticity determination target is displayed, and an area 341 in which a pre-edit image corresponding to the post-edit image is displayed.

### <Processing Flow>

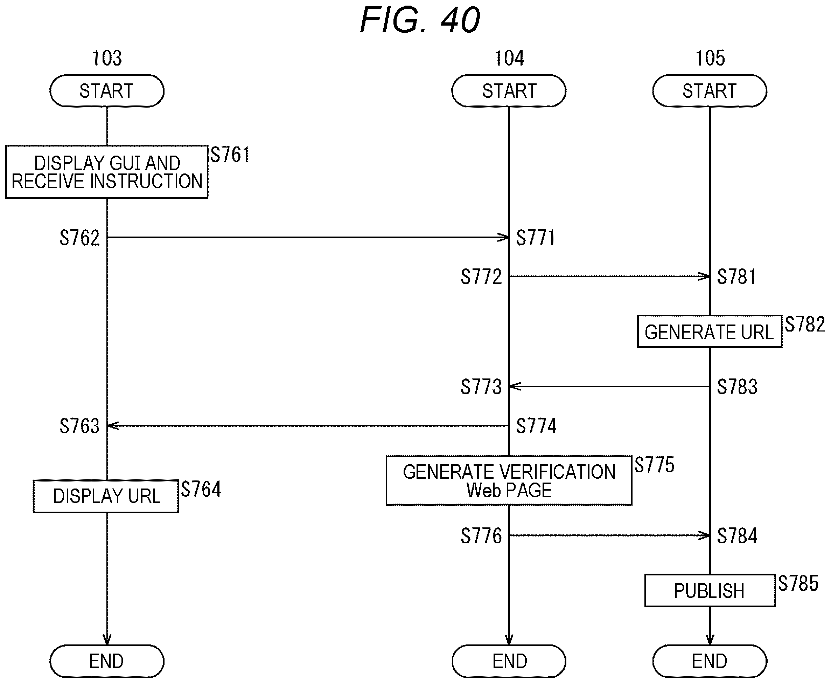

An example of a flow of processing executed in the authenticity determination system 100 in this case will be described with reference to a flowchart of Fig. 40.

In step S761, the image editing device 103 (verification Web page processing unit 331) displays the GUI screen 340 of Fig. 39 and receives an instruction to generate a URL. Upon receiving the instruction to generate a URL, the image editing device 103 (verification Web page processing unit 331) requests the authenticity determination server 104 to generate the URL in step S762.

Upon receiving the request in step S771, the authenticity determination server 104 (authenticity determination result display information output unit 215) requests the Web server 105 to generate the URL in step S772.

Upon receiving the request in step S781, the Web server 105 generates a URL for publishing the verification Web page in step S782. In step S783, the Web server 105 supplies the generated URL to the authenticity determination server 104.

Upon acquiring the URL in step S773, the authenticity determination server 104 (authenticity determination result display information output unit 215) supplies the URL to the image editing device 103 in step S774.

Upon acquiring the URL in step S763, the image editing device 103 (verification Web page processing unit 331) displays the URL in the URL display field 344 of the GUI screen 340 in step S764.

Furthermore, when authenticity of a post-edit image is determined, in step S775, the authenticity determination server 104 (authenticity determination result display information output unit 215) generates the verification Web page to be published at the predetermined URL (the URL generated in the processing of step S782) as the authenticity determination result display information indicating the determination result. In step S776, the authenticity determination server 104 (authenticity determination result display information output unit 215) supplies (outputs) the generated verification Web page to the Web server 105.

In step S784, the Web server 105 acquires the verification Web page. The Web server 105 discloses the acquired Web page in step S785 at the predetermined URL (the URL generated in the processing in step S782).

As a result, for example, the verification Web page (that is, authenticity determination result display information) can be acquired from an arbitrary terminal device such as the image editing device 103 or the terminal device 106. That is, an authenticity determination result can be viewed on an arbitrary device. That is, in this case, the authenticity determination result display information is a verification Web page indicating the determination result. Then, the authenticity determination result display unit 134 generates and displays a determination result display image using the acquired verification Web page. Therefore, it is possible to improve practicality and convenience of a service that guarantees authenticity of an image.

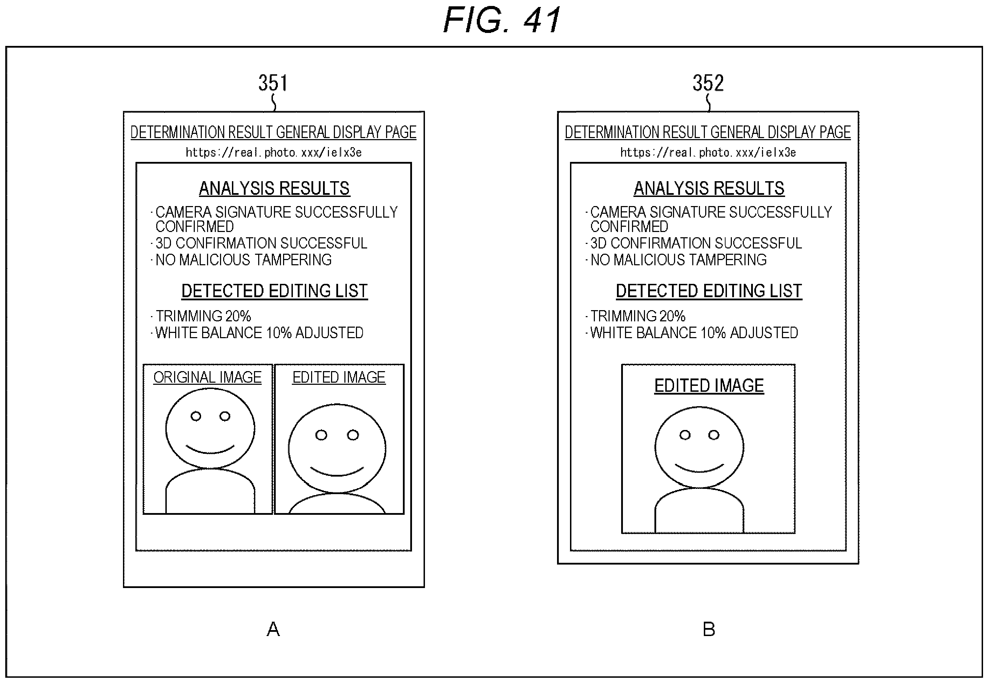

Fig. 41 is a diagram illustrating a display example of the verification Web page. For example, the verification Web page may be displayed in a configuration such as that of a display screen 351 illustrated in A of Fig. 41. In the case of the display screen 351, a URL, a pre-edit image (original image), a post-edit image, an analysis result, a detection result list, and the like are displayed. Furthermore, the verification Web page may be displayed in a configuration such as that of a display screen 352 illustrated in B of Fig. 41. Like the display screen 352, the pre-edit image (original image) may be hidden. That is, the authenticity determination server 104 (authenticity determination result display information output unit 215) may generate a verification Web page not including an original image.

### <13. Eleventh Embodiment>

### <Authenticity Guarantee by Another Person>

Note that, in a case where the present technology described in the second embodiment is applied, a person other than (a user or an administrator of) the authenticity determination server 104 may guarantee authenticity of a post-edit image. For example, a person having sufficient credibility such as a news organization or an image distribution responsible organization may guarantee authenticity of a post-edit image.

For example, as a use case, when an image distribution responsible organization distributes a captured image managed thereby (a captured image used for news report or the like), the image distribution responsible organization may edit the captured image and guarantee authenticity of the edited captured image using an authenticity determination service provided by the authenticity determination system 100 (authenticity determination server 104).

In such a case, for example, even if the amount of editing of the captured image is large and the authenticity determination system 100 (authenticity determination server 104) cannot determine that authenticity is guaranteed, it is naturally possible for the image distribution responsible organization, which has edited the captured image, to guarantee the authenticity of the post-edit image.

Of course, in general, reliability of guarantee by a party who has edited a captured image is not high. However, for example, if guarantee is made by a party having sufficient reliability, such as the above-described image distribution responsible organization, a certain degree of reliability can be obtained. That is, for example, in a case where authenticity is guaranteed by an image distribution responsible organization on a verification Web page of a captured image to be distributed, a user who receives the captured image can trust to some extent that the captured image is a legitimate image.

In particular, in a case where an image distribution responsible organization guarantees authenticity for a second editing target region of a captured image for which it is determined that authenticity is guaranteed in a first editing target region but not guaranteed in the second editing target region, this means that the authenticity determination system 100 (authenticity determination server 104) and the image distribution responsible organization jointly guarantee authenticity of the entire captured image. In such a case, authenticity can be guaranteed with sufficiently high reliability.

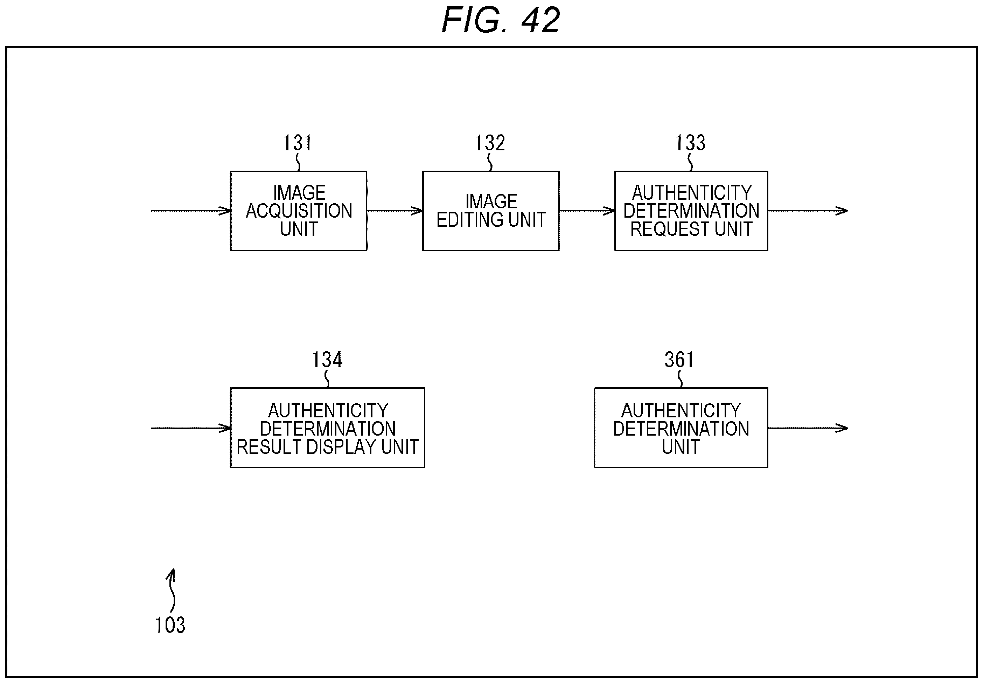

In a case where (a user or the like of) the image editing device 103 guarantees authenticity in this manner, the image editing device 103 has a configuration illustrated in Fig. 42, for example. That is, in this case, the image editing device 103 includes an authenticity determination unit 361 in addition to the configuration described with reference to Fig. 2.

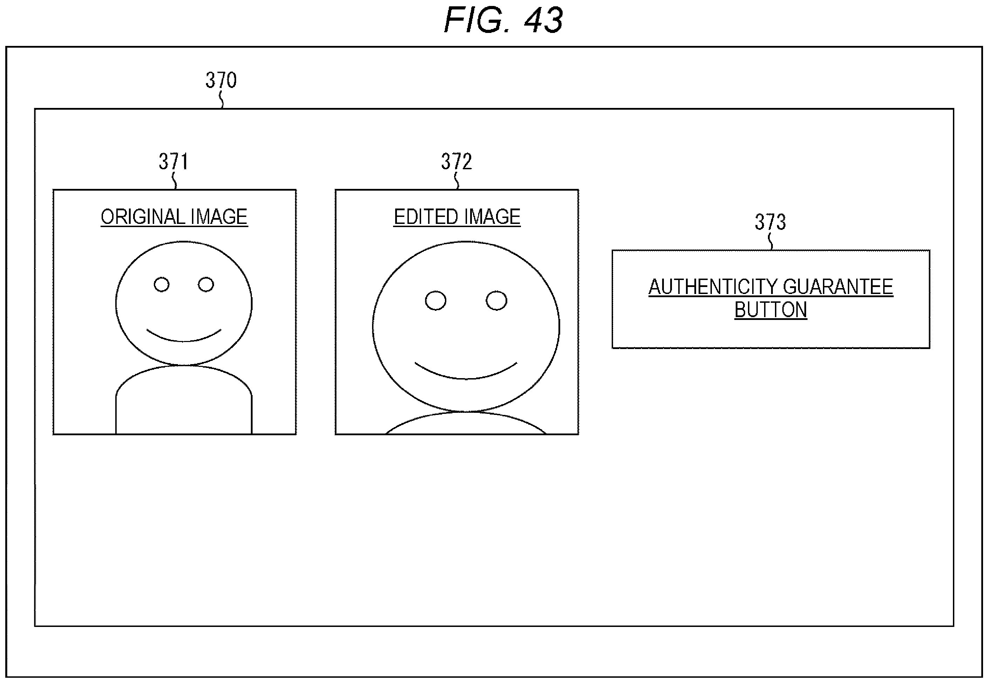

The authenticity determination unit 361 executes processing related to an authenticity determination of a post-edit image. For example, the authenticity determination unit 361 may notify the authenticity determination server 104 that authenticity of a post-edit image is guaranteed. For example, the authenticity determination unit 361 may make this notification on the basis of a user instruction. For example, the authenticity determination unit 361 may display a GUI screen 370 as illustrated in Fig. 43 on the display device, and may receive an authenticity guarantee instruction from the user on the GUI screen 370.

As illustrated in Fig. 43, the GUI screen 370 is provided with a GUI button 373 for receiving a user instruction. In the case of the example of Fig. 43, the GUI button 373 is described as an "authenticity guarantee button", which indicates that it is a GUI button for receiving an authenticity guarantee instruction. For example, when the user presses the GUI button 373, the authenticity determination unit 361 receives the user instruction. On the basis of the instruction, the authenticity determination unit 361 notifies the authenticity determination server 104 of an effect that authenticity of the post-edit image is guaranteed.

Furthermore, the GUI screen 370 may be provided with an area 372 in which a post-edit image as an authenticity determination target is displayed, and an area 371 in which a pre-edit image corresponding to the post-edit image is displayed.

### <Processing Flow>

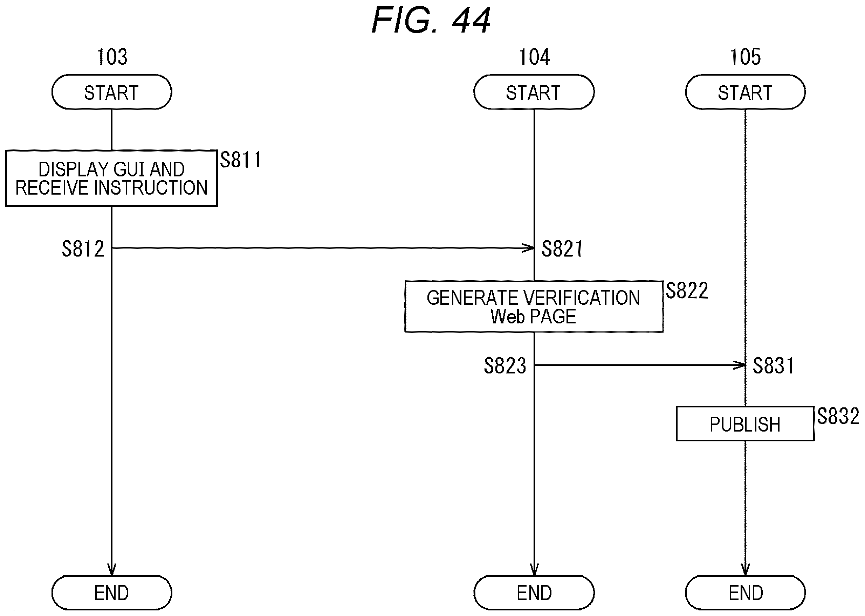

An example of a flow of processing executed in the authenticity determination system 100 in this case will be described with reference to a flowchart of Fig. 44.

In step S811, the image editing device 103 (authenticity determination unit 361) displays the GUI screen 370 of Fig. 43 and receives an authenticity guarantee instruction. Upon receiving the authenticity guarantee instruction, the image editing device 103 (authenticity determination unit 361) notifies the authenticity determination server 104 of the reception in step S812.

Upon receiving the notification in step S821, the authenticity determination server 104 (authenticity determination result display information output unit 215) generates a verification Web page to be published at a predetermined URL as authenticity determination result display information in step S822. In this verification Web page, information regarding (the user of) the image editing device 103 is stored as a guarantor that guarantees authenticity of a post-edit image. In step S823, the authenticity determination server 104 (authenticity determination result display information output unit 215) supplies (outputs) the generated verification Web page to the Web server 105.

That is, the authenticity determination server 104 (authenticity determination result display information output unit 215) generates and outputs authenticity determination result display information including information regarding an external authenticity guarantor. Furthermore, the authenticity determination server 104 (authenticity determination result display information output unit 215) generates and outputs the authenticity determination result display information including the information regarding the external authenticity guarantor on the basis of a request from the external authenticity guarantor.

In step S831, the Web server 105 acquires the verification Web page. The Web server 105 discloses the acquired Web page in step S832 at the predetermined URL (the URL generated in the processing in step S782). As a result, for example, the verification Web page (that is, authenticity determination result display information) can be acquired from an arbitrary terminal device such as the image editing device 103 or the terminal device 106. For example, the authenticity determination result display unit 134 generates and displays a determination result display image including information indicating the guarantor who guarantees the authenticity of the post-edit image. That is, an authenticity determination result can be viewed on an arbitrary device. Therefore, it is possible to improve practicality and convenience of a service that guarantees authenticity of an image.

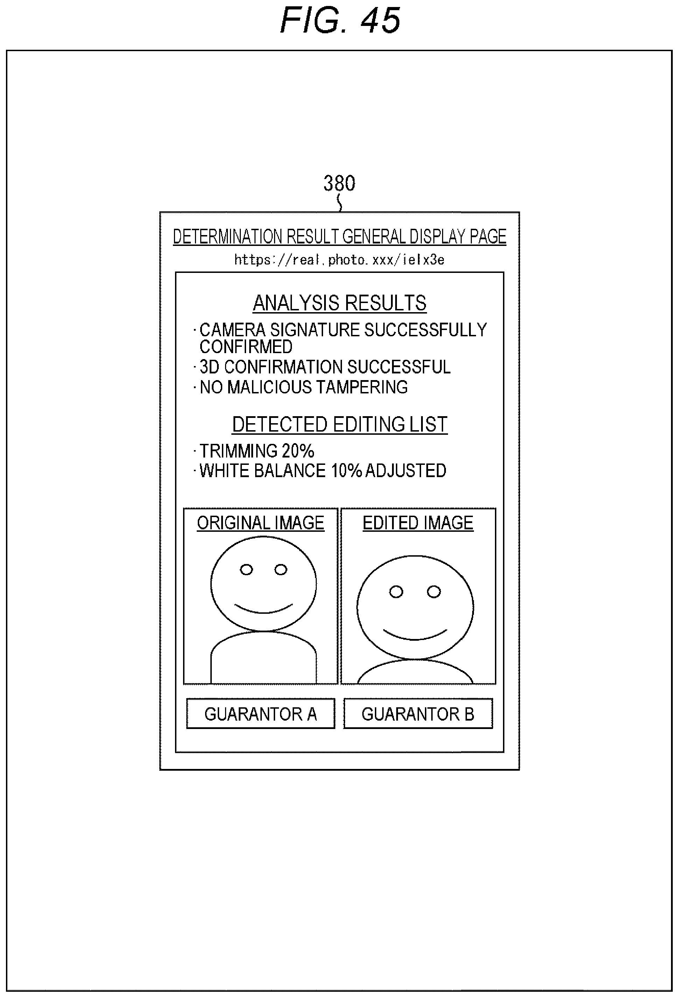

Fig. 45 is a diagram illustrating a display example of the verification Web page. For example, the verification Web page may be displayed in a configuration such as that of a display screen 380 illustrated in Fig. 45. In the case of the display screen 380, a URL, a pre-edit image (original image), a post-edit image, an analysis result, a detection result list, and the like are displayed. Furthermore, on the display screen 380, information regarding a guarantor who guarantees authenticity of the post-edit image is displayed. In the case of the example of Fig. 45, a plurality of guarantors such as "guarantor A" and "guarantor B" are illustrated. That is, the authenticity can be guaranteed by not only an owner or the like of the authenticity determination system 100 (the authenticity determination server 104) (a provider or the like of the authenticity determination service) but also other persons.

For example, as described above, authenticity of a post-edit image may be guaranteed by (the user or the like of) the image editing device 103. The user or the like of the image editing device 103 may be, for example, an image distribution responsible organization that distributes the post-edit image. In addition, in this case, as illustrated in Fig. 45, the guarantee can be made by the plurality of guarantors. Therefore, for example, the guarantee can be made by joint responsibility of the owner or the like of the authenticity determination system 100 (authenticity determination server 104) (the provider of the authenticity determination service or the like) and the image distribution responsible organization.

In doing so, it is possible to improve practicality and convenience of a service that guarantees authenticity of an image.

### <14. Twelfth Embodiment>

### <Combinations>

The present technology described in each of the above-described embodiments may be applied as any combination of the embodiments. Furthermore, the present technology described in each of the above-described embodiments may be applied in combination with another technology not described above.

### <15. Supplementary Note>

### <Others>

Each example (each method) of the present technology described above may be appropriately combined with other examples (other methods) and applied as long as there is no contradiction. Furthermore, each example of the present technology described above may be applied in combination with another technology other than the above-described technology.

### <Computer>

The above-described series of processing can be executed by hardware or software. In a case where the series of processing is executed by the software, a program that forms the software is installed in a computer. Here, examples of the computer include a computer incorporated in dedicated hardware, a general-purpose personal computer capable of executing various functions by installing various programs, and the like.

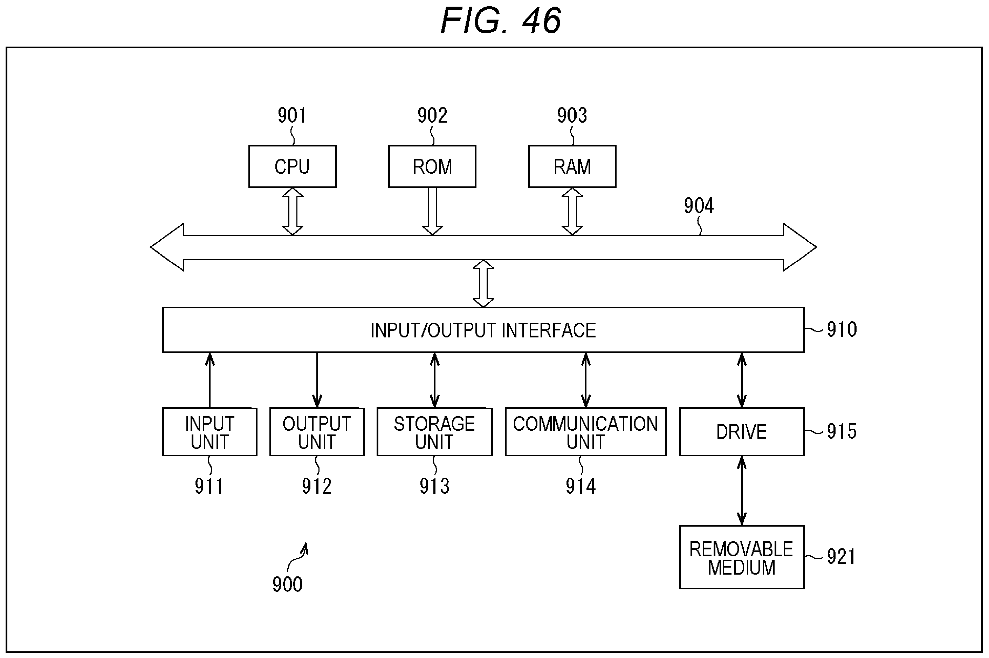

Fig. 46 is a block diagram illustrating a configuration example of hardware of a computer that executes the above-described series of processing in accordance with a program.

In a computer 900 illustrated in Fig. 46, a Central Processing Unit (CPU) 901, a Read Only Memory (ROM) 902, and a Random Access Memory (RAM) 903 are mutually connected via a bus 904.

Furthermore, an input/output interface 910 is also connected to the bus 904. To the input/output interface 910, an input unit 911, an output unit 912, a storage unit 913, a communication unit 914, and a drive 915 are connected.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, whereby the above-described series of processing is performed. The RAM 903 also appropriately stores data and the like necessary for the CPU 901 to execute various types of processing.

A program executed by the computer can be applied by being recorded on the removable medium 921 as a package medium, or the like, for example. In this case, by attaching the removable medium 921 to the drive 915, the program can be installed in the storage unit 913 via the input/output interface 910.

Furthermore, the program can also be provided through a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

### <Object to Which Present Technology is Applicable>

The present technology can be applied to any encoding/decoding method.

Furthermore, the present technology can be applied to any configuration. For example, the present technology can be applied to various electronic devices.

Furthermore, for example, the present technology can also be implemented as a partial configuration of a device, such as a processor (for example, a video processor) as a system Large Scale Integration (LSI) or the like, a module (for example, a video module) using a plurality of the processors and the like, a unit (for example, a video unit) using a plurality of the modules and the like, or a set (for example, a video set) obtained by further adding other functions to the unit.

Furthermore, for example, the present technology can also be applied to a network system including a plurality of devices. For example, the present technology may be implemented as cloud computing where a plurality of devices shares and jointly executes processing over a network. For example, the present technology may be implemented in a cloud service that provides a service related to an image (moving image) to an arbitrary terminal such as a computer, Audio Visual (AV) equipment, a portable information processing terminal, or an Internet of Things (IoT) device.

Note that, in the present specification, a system means a set of a plurality of components (devices, modules (parts) and the like), and it does not matter whether or not all the components are in the same housing. Thus, a plurality of devices stored in different housings and connected via a network and one device in which a plurality of modules is stored in one housing are both systems.

### <Field and Application to Which Present Technology Is Applicable>

The system, device, processing unit, and the like to which the present technology is applied can be used in an arbitrary field such as traffic, medical care, crime prevention, agriculture, livestock farming, mining, beauty care, factory, home appliance, weather, and natural surveillance, for example. Furthermore, application thereof is also arbitrary.

For example, the present technology can be applied to systems and devices used for providing content for appreciation and the like. Furthermore, for example, the present technology can also be applied to systems and devices used for traffic, such as traffic condition management and automated driving control. Moreover, for example, the present technology can also be applied to systems and devices used for security. Furthermore, for example, the present technology can be applied to systems and devices used for automatic control of machinery and the like. Moreover, for example, the present technology can also be applied to systems and devices used for agriculture and livestock farming. Furthermore, the present technology can also be applied to systems and devices that monitor natural conditions such as volcanos, forests, and the oceans, as well as wildlife and the like. Moreover, for example, the present technology can also be applied to systems and devices used for sports.

### <Others>

Note that, in the present specification, a "flag" is information for identifying a plurality of states, and includes not only information used for identifying two states of true (1) and false (0) but also information capable of identifying three or more states. Thus, a value that may be taken by the "flag" may be, for example, a binary of 1/0 or a ternary or more. That is, the number of bits forming this "flag" is any number, and may be one bit or a plurality of bits. Furthermore, identification information (including the flag) is assumed to include not only the identification information in a bit stream but also difference information of the identification information with respect to certain reference information in the bit stream, and thus, in the present specification, the "flag" and "identification information" include not only the information but also the difference information with respect to the reference information.

Furthermore, various types of information (such as metadata) related to encoded data may be transmitted or recorded in any form as long as the information is associated with the encoded data. Here, the term "associate" means, when processing one data, allowing other data to be used (to be linked), for example. That is, the pieces of data associated with each other may be combined as one data or may be treated as individual pieces of data. For example, information associated with the coded data (image) may be transmitted on a transmission path different from that of the coded data (image). Furthermore, for example, the information associated with the coded data (image) may be recorded in a storage medium different from that for the coded data (image) (or another recording area of the same storage medium). Note that, this "association" may be of not entire data but a part of data. For example, an image and information corresponding to the image may be associated with each other in any unit such as a plurality of frames, one frame, or a part within a frame.

Note that, in the present specification, terms such as "combine", "multiplex", "add", "merge", "include", "store", "put in", "introduce", and "insert" mean, for example, to combine a plurality of objects into one, such as to combine encoded data and metadata into one data, and mean one method of "associate" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the above-described programs may be executed in an arbitrary device. In this case, the device is only required to have a necessary function (functional block and the like) and obtain necessary information.

Furthermore, for example, each step in one flowchart may be executed by one device, or may be executed by being shared by a plurality of devices. Moreover, in a case where a plurality of pieces of processing is included in one step, the plurality of pieces of processing may be executed by one device, or may be shared and executed by a plurality of devices. In other words, the plurality of pieces of processing included in one step can also be executed as pieces of processing of a plurality of steps. Conversely, the processing described as the plurality of the steps can also be collectively executed as one step.

Furthermore, for example, in a program executed by the computer, the pieces of processing of steps describing the program may be executed in a time-series order in the order described in the present specification, or may be executed in parallel, or individually at a required timing such as when a call is made. That is, the pieces of processing of the respective steps may be executed in an order different from the above-described order as long as there is no contradiction. Moreover, the pieces of processing of the steps describing the program may be executed in parallel with processing of another program, or may be executed in combination with processing of the other program.

Furthermore, for example, a plurality of technologies related to the present technology can be implemented independently as a single entity as long as there is no contradiction. It goes without saying that any plurality of present technologies can be implemented in combination. For example, some or all of the present technologies described in any of the embodiments can be implemented in combination with some or all of the present technologies described in another one of the embodiments. Furthermore, a part or all of the above-described arbitrary present technologies can be implemented together with another technology that is not described above.

Note that the present technology may also have the following configurations.
(1) An image processing apparatus including:
   a signature verification unit that verifies a signature of a pre-edit image before editing is performed on an image;
   an editing identification unit that identifies content of the editing on the basis of the pre-edit image and a post-edit image obtained by editing the pre-edit image; and
   an authenticity determination unit that determines whether or not to guarantee authenticity of the post-edit image on the basis of a verification result of the signature and the identified content of the editing.
(2) The image processing apparatus according to (1), in which
   if it is determined that the authenticity of the pre-edit image is guaranteed by the verification result and the editing is identified as allowable editing, the authenticity determination unit determines that the authenticity of the post-edit image is guaranteed, and
   if it is determined that the authenticity of the pre-edit image is not guaranteed by the verification result or the editing is identified as unallowable editing, the authenticity determination unit determines that the authenticity of the post-edit image is not guaranteed.
(3) The image processing apparatus according to (2), further including:
   an authenticity determination result display information output unit that generates and outputs authenticity determination result display information indicating a determination result as to whether or not to guarantee the authenticity of the post-edit image.
(4) The image processing apparatus according to (3), in which
   the authenticity determination unit determines whether or not to guarantee authenticity of an editing target region, which is a partial region of the post-edit image subjected to the editing.
(5) The image processing apparatus according to (4), in which
   the authenticity determination unit determines that authenticity of an image composition region, which is a partial region of the post-edit image subjected to image composition is not guaranteed.
(6) The image processing apparatus according to (4) or (5), in which
   the authenticity determination unit determines that authenticity of a 2D region, which is a partial region of the post-edit image including a plane is not guaranteed.
(7) The image processing apparatus according to any one of (4) to (6), in which
   if content of editing in the editing target region between an original image and the pre-edit image corresponds to editing history information added to the pre-edit image, the authenticity determination unit determines that the authenticity of the editing target region of the post-edit image is guaranteed, and
   if the content of the editing in the editing target region between the original image and the pre-edit image does not correspond to the editing history information, the authenticity determination unit determines that the authenticity of the editing target region of the post-edit image is not guaranteed.
(8) The image processing apparatus according to any one of (4) to (7), in which
   if the editing in a face region, which is a partial region including a face portion of a person, is a change due to a health condition or like of the person, the authenticity determination unit determines that authenticity of the face region of the post-edit image is guaranteed, and
   if the editing in the face region is not a change due to a health condition or like of the person, the authenticity determination unit determines that the authenticity of the face region of the post-edit image is not guaranteed.
(9) The image processing apparatus according to (8), in which
   the change due to the health condition or like of the person includes editing for correcting rough skin, editing for correcting an expression such as a lack of sleep, editing for suppressing or exaggerating sunburn or like, or editing for changing a color, a shape, an amount, or like of hair.
(10) The image processing apparatus according to any one of (4) to (9), in which
   if the editing in a face region, which is a partial region including a face portion of a person, is editing within a range that can be easily understood socially, the authenticity determination unit determines that authenticity of the face region of the post-edit image is guaranteed, and
   if the editing in the face region is not editing within the range that can be easily understood socially, the authenticity determination unit determines that the authenticity of the face region of the post-edit image is not guaranteed.
(11) The image processing apparatus according to (10), in which
   the editing within the range that can be easily understood socially includes a change due to makeup of the person.
(12)The image processing apparatus according to any one of (4) to (11), in which
   if the editing in an object identification information region, which is a partial region including object identification information, is editing without a change in the object identification information, the authenticity determination unit determines that authenticity of the object identification information region of the post-edit image is guaranteed, and
   if the editing in the object identification information region is editing involving a change in the object identification information, the authenticity determination unit determines that the authenticity of the object identification information region of the post-edit image is not guaranteed.
(13) The image processing apparatus according to (12), in which
   the object identification information includes a license plate of a vehicle.
(14) The image processing apparatus according to any one of (4) to (13), in which
   if the editing in a person identification information region, which is a partial region including person identification information, is editing without a change in the person identification information, the authenticity determination unit determines that authenticity of the person identification information region of the post-edit image is guaranteed, and
   if the editing in the person identification information region is editing involving a change in the person identification information, the authenticity determination unit determines that the authenticity of the person identification information region of the post-edit image is not guaranteed.
(15) The image processing apparatus according to (14), in which
   the person identification information includes an identification card.
(16) The image processing apparatus according to any one of (3) to (15), in which
   the authenticity determination result display information output unit generates and outputs a verification Web page published at a predetermined URL as the authenticity determination result display information.
(17) The image processing apparatus according to (16), in which
   the authenticity determination result display information output unit generates the verification Web page that does not include an original image.
(18) The image processing apparatus according to any one of (3) to (17), in which
   the authenticity determination result display information output unit generates and outputs authenticity determination result display information including information regarding an external authenticity guarantor.
(19) The image processing apparatus according to (18), in which the authenticity determination result display information output unit generates and outputs authenticity determination result display information including information regarding the external authenticity guarantor on the basis of a request from the external authenticity guarantor.
(20) The image processing apparatus according to (1), in which
   the authenticity determination unit determines whether or not to guarantee the authenticity of the post-edit image on the basis of a determination criterion set by a user.
(21) An image processing method including:
   verifying a signature of a pre-edit image before editing is performed on an image;
   identifying content of the editing on the basis of the pre-edit image and a post-edit image obtained by editing the pre-edit image; and
   determining whether or not to guarantee authenticity of the post-edit image on the basis of a verification result of the signature and the identified content of the editing.

(31) An image processing apparatus including:
   a display processing unit that generates and displays a display image indicating a determination result as to whether or not to guarantee authenticity of a post-edit image using authenticity determination result display information indicating the determination result, in which
   the post-edit image is an image obtained by editing a pre-edit image.
(32) The image processing apparatus according to (31), in which
   the display processing unit generates the display image in such a way as to change display content between a case where the authenticity of the post-edit image is guaranteed and a case where the authenticity of the post-edit image is not guaranteed.
(33) The image processing apparatus according to (32), in which
   the display processing unit generates the display image further including information indicating content of the editing.
(34) The image processing apparatus according to (33), in which
   the display processing unit generates the display image further including the post-edit image.
(35) The image processing apparatus according to (34), in which
   the display processing unit generates the display image further including the pre-edit image.
(36) The image processing apparatus according to any one of (32) to (35), in which
   the display processing unit generates the display image including the post-edit image and information indicating an editing target region, which is a partial region of the post-edit image subjected to the editing.
(37) The image processing apparatus according to (36), in which
   the display processing unit generates the display image further including information indicating content of the editing performed in the editing target region of the post-edit image.
(38) The image processing apparatus according to any one of (32) to (37), in which
   the display processing unit generates the display image including the post-edit image and information indicating an image composition region, which is a partial region of the post-edit image subjected to image composition.
(39) The image processing apparatus according to (38), in which
   the display processing unit generates the display image further including information indicating content of the image composition performed in the image composition region of the post-edit image.
(40) The image processing apparatus according to any one of (32) to (39), in which
   the display processing unit generates the display image including the post-edit image and information indicating a 2D region, which is a partial region of the post-edit image including a plane.
(41) The image processing apparatus according to any one of (32) to (40), in which
   the display processing unit generates the display image including information indicating content of the editing and history information regarding the editing added to the post-edit image as metadata.
(42) The image processing apparatus according to any one of (32) to (41), in which
   the display processing unit generates the display image including the post-edit image and information indicating a face region, which is a partial region of the post-edit image including a face portion of a person.
(43) The image processing apparatus according to (42), in which
   the display processing unit generates the display image further including information indicating content of the editing performed in the face region of the post-edit image.
(44) The image processing apparatus according to any one of (32) to (43), in which the display processing unit generates the display image including the post-edit image and information indicating an object identification information region, which is a partial region of the post-edit image including object identification information.
(45) The image processing apparatus according to (44), in which
   the display processing unit generates the display image further including information indicating content of the editing performed in the object identification information region of the post-edit image.
(46) The image processing apparatus according to any one of (32) to (45), in which the display processing unit generates the display image including the post-edit image and information indicating a person identification information region, which is a partial region of the post-edit image including person identification information.
(47) The image processing apparatus according to (46), in which
   the display processing unit generates the display image further including information indicating content of the editing performed in the person identification information region of the post-edit image.
(48) The image processing apparatus according to any one of (31) to (47), in which
   the authenticity determination result display information is a verification Web page indicating the determination result, and
   the display processing unit is configured to generate and display the display image using the acquired verification Web page.
(49) The image processing apparatus according to any one of (31) to (48), in which
   the display processing unit generates and displays the display image including information indicating a guarantor who guarantees the authenticity of the post-edit image.
(50) An image processing method including:
   generating and displaying a display image indicating a determination result as to whether or not to guarantee authenticity of a post-edit image using authenticity determination result display information indicating the determination result, in which
   the post-edit image is an image obtained by editing a pre-edit image.

### REFERENCE SIGNS LIST

- 100: Authenticity determination system
- 101: Imaging device
- 102: File conversion device
- 103: Image editing device
- 104: Authenticity determination server
- 105: Web server
- 106: Terminal device
- 110: Network
- 131: Image acquisition unit
- 132: Image editing unit
- 133: Authenticity determination request unit
- 134: Authenticity determination result display unit
- 211: Image acquisition unit
- 212: Signature verification unit
- 213: Editing identification unit
- 214: Authenticity determination unit
- 215: Authenticity determination result display information output unit
- 331: Verification Web page processing unit
- 361: Authenticity determination unit
- 900: Computer

## Claims

1. An image processing apparatus comprising:
a signature verification unit that verifies a signature of a pre-edit image before editing is performed on an image;
an editing identification unit that identifies content of the editing on a basis of the pre-edit image and a post-edit image obtained by editing the pre-edit image; and
an authenticity determination unit that determines whether or not to guarantee authenticity of the post-edit image on a basis of a verification result of the signature and the identified content of the editing.

2. The image processing apparatus according to claim 1, wherein
if it is determined that the authenticity of the pre-edit image is guaranteed by the verification result and the editing is identified as allowable editing, the authenticity determination unit determines that the authenticity of the post-edit image is guaranteed, and
if it is determined that the authenticity of the pre-edit image is not guaranteed by the verification result or the editing is identified as unallowable editing, the authenticity determination unit determines that the authenticity of the post-edit image is not guaranteed.

3. The image processing apparatus according to claim 2, further comprising:
an authenticity determination result display information output unit that generates and outputs authenticity determination result display information indicating a determination result as to whether or not to guarantee the authenticity of the post-edit image.

4. The image processing apparatus according to claim 3, wherein
the authenticity determination unit determines whether or not to guarantee authenticity of an editing target region, which is a partial region of the post-edit image subjected to the editing.

5. The image processing apparatus according to claim 4, wherein
the authenticity determination unit determines that authenticity of an image composition region, which is a partial region of the post-edit image subjected to image composition is not guaranteed.

6. The image processing apparatus according to claim 4, wherein
the authenticity determination unit determines that authenticity of a 2D region, which is a partial region of the post-edit image including a plane is not guaranteed.

7. The image processing apparatus according to claim 4, wherein
if content of editing in the editing target region between an original image and the pre-edit image corresponds to editing history information added to the pre-edit image, the authenticity determination unit determines that the authenticity of the editing target region of the post-edit image is guaranteed, and
if the content of the editing in the editing target region between the original image and the pre-edit image does not correspond to the editing history information, the authenticity determination unit determines that the authenticity of the editing target region of the post-edit image is not guaranteed.

8. The image processing apparatus according to claim 4, wherein
if the editing in a face region, which is a partial region including a face portion of a person, is a change due to a health condition or like of the person, the authenticity determination unit determines that authenticity of the face region of the post-edit image is guaranteed, and
if the editing in the face region is not a change due to a health condition or like of the person, the authenticity determination unit determines that the authenticity of the face region of the post-edit image is not guaranteed.

9. The image processing apparatus according to claim 8, wherein
the change due to the health condition or like of the person includes editing for correcting rough skin, editing for correcting an expression such as a lack of sleep, editing for suppressing or exaggerating sunburn or like, or editing for changing a color, a shape, an amount, or like of hair.

10. The image processing apparatus according to claim 4, wherein
if the editing in a face region, which is a partial region including a face portion of a person, is editing within a range that can be easily understood socially, the authenticity determination unit determines that authenticity of the face region of the post-edit image is guaranteed, and
if the editing in the face region is not editing within the range that can be easily understood socially, the authenticity determination unit determines that the authenticity of the face region of the post-edit image is not guaranteed.

11. The image processing apparatus according to claim 10, wherein
the editing within the range that can be easily understood socially includes a change due to makeup of the person.

12. The image processing apparatus according to claim 4, wherein
if the editing in an object identification information region, which is a partial region including object identification information, is editing without a change in the object identification information, the authenticity determination unit determines that authenticity of the object identification information region of the post-edit image is guaranteed, and
if the editing in the object identification information region is editing involving a change in the object identification information, the authenticity determination unit determines that the authenticity of the object identification information region of the post-edit image is not guaranteed.

13. The image processing apparatus according to claim 12, wherein
the object identification information includes a license plate of a vehicle.

14. The image processing apparatus according to claim 4, wherein
if the editing in a person identification information region, which is a partial region including person identification information, is editing without a change in the person identification information, the authenticity determination unit determines that authenticity of the person identification information region of the post-edit image is guaranteed, and
if the editing in the person identification information region is editing involving a change in the person identification information, the authenticity determination unit determines that the authenticity of the person identification information region of the post-edit image is not guaranteed.

15. The image processing apparatus according to claim 14, wherein
the person identification information includes an identification card.

16. The image processing apparatus according to claim 3, wherein
the authenticity determination result display information output unit generates and outputs a verification Web page published at a predetermined URL as the authenticity determination result display information.

17. The image processing apparatus according to claim 16, wherein
the authenticity determination result display information output unit generates the verification Web page that does not include an original image.

18. The image processing apparatus according to claim 3, wherein
the authenticity determination result display information output unit generates and outputs authenticity determination result display information including information regarding an external authenticity guarantor.

19. The image processing apparatus according to claim 18, wherein
the authenticity determination result display information output unit generates and outputs authenticity determination result display information including information regarding the external authenticity guarantor on a basis of a request from the external authenticity guarantor.

20. The image processing apparatus according to claim 1, wherein
the authenticity determination unit determines whether or not to guarantee the authenticity of the post-edit image on a basis of a determination criterion set by a user.

21. An image processing method comprising:
verifying a signature of a pre-edit image before editing is performed on an image;
identifying content of the editing on a basis of the pre-edit image and a post-edit image obtained by editing the pre-edit image; and
determining whether or not to guarantee authenticity of the post-edit image on a basis of a verification result of the signature and the identified content of the editing.
